# FASCICULE DE BREVET EUROPEEN

(11) **EP 4 178 741 B1**
(45) Date de publication et mention de la délivrance du brevet: **07.05.2025**
(21) Numéro de dépôt: 20750172.7
(22) Date de dépôt: 07.07.2020
(51) Int. Cl.: B21J 15/32, B23P 19/00, B25B 23/04

(54) **DISPOSITIF DE POSE DE RIVET**
NIETSETZVORRICHTUNG
RIVET SETTING DEVICE

(43) Date de publication de la demande: 17.05.2023
(73) Titulaire: Seti-Tec, 77090 Collégien (FR)
(72) Inventeur: PEREIRA SANTO, Sebastien, 2820-568 Charneca da Caparica (PT)
(74) Mandataire: Vidon Brevets & Stratégie
(86) Numéro de dépôt international: PCT/EP2020/069162
(87) Numéro de publication internationale: WO 2022/008043

(56) Documents cités:
- WO-A1-96/28266
- DE-A1- 102008 018 428
- DE-A1- 102016 125 041
- DE-A1- 2 757 909
- US-A- 2 768 763
- US-A- 3 111 869
- US-B2- 8 006 362

## Description

### 1. Domaine de l'invention

Le domaine de l'invention est celui de la conception et de la réalisation de dispositifs mis en œuvre dans l'industrie pour réaliser la pose de rivet préalablement à leur sertissage final, et plus particulièrement l'évacuation d'un rivet hors d'un module de support de rivet.

### 2. Art antérieur

On connaît des techniques pour permettre la pose automatisée de rivets dans l'industrie, notamment aéronautique.

Par exemple, le document de brevet US-A-3 111 869 décrit un dispositif de pose de rivet comprenant des moyens de stockage de rivet 183, des moyens de distribution de rivets 178 un à un dans un réceptacle 211 dans une zone de chargement de rivet. Situé à une zone de pose, un poinçon 32 est dans un premier temps abaissé pour réaliser un trou et un fraisurage avant la pose d'un rivet. Puis le réceptacle contenant un rivet est déplacé à la zone de pose et le poinçon 32 de nouveau abaissé pour mettre en place le rive dans le trou préalablement réalisé.

Ces techniques ne sont généralement pas entièrement effaces, fiables et sures et sont généralement assez encombrantes.

Il est donc encore possible d'améliorer les dispositifs de ce type, ce qui constitue un objectif poursuivi par l'invention.

### 3. Objectifs de l'invention

L'invention a notamment pour objectif d'apporter une solution efficace à au moins certains de ces différents problèmes.

En particulier, selon au moins un mode de réalisation, un objectif de l'invention est de fournir un dispositif de pose de rivet qui puisse permettre d'optimiser la pose de rivet.

L'invention a pour objectif, selon au moins un mode de réalisation, de fournir un tel dispositif qui soit compact et/ou léger, et qui permette en conséquence de réaliser des tâches dans des endroits exigus.

Un autre objectif de l'invention est, selon au moins un mode de réalisation, de fournir un tel dispositif qui soit simple de conception.

Un autre objectif de l'invention est, selon au moins un mode de réalisation, de fournir un tel dispositif qui soit simple à entretenir.

Un autre objectif de l'invention est de procurer, dans au moins un mode de réalisation, un tel dispositif qui soit relativement bon marché.

### 4. Présentation de l'invention

Pour ceci, l'invention propose un dispositif de pose de rivet dans un orifice ménagé dans une structure à travailler selon la revendication 1.

Cette mise en œuvre d'automatiser au moyen d'un même dispositif tant l'alimentation que la pose de rivet. L'invention procure ainsi un système compact et optimisé.

Selon une caractéristique possible, lesdits moyens d'évacuation sont mobiles sur deux courses successives de pré-insertion partielle puis d'insertion finale totale du rivet dans ledit orifice au cours desquelles l'extrémité du rivet puis le corps du rivet sont successivement insérés dans ledit orifice.

Ceci permet d'améliorer la fiabilité et la sécurité de pose en assurant d'abord une pré insertion du rivet pour le rendre suffisamment solidaire de la structure à laquelle il sera solidarisé, puis de finaliser ensuite sa mise en place finale.

Selon l'invention, ledit module comprend un fourreau logeant un piston monté mobile en translation à l'intérieur dudit fourreau entre au moins :
- une position rétractée dans laquelle il s'étend à l'intérieur dudit fourreau, et
- une position déployée dans laquelle il s'étend au moins en partie à l'extérieur dudit fourreau, ledit module comprenant des moyens de maintien dudit rivet à l'extrémité dudit piston.

Selon l'invention, lesdits moyen d'évacuation comprennent une broche télescopique, montée mobile en translation suivant l'axe dudit module, comprenant une extrémité destinée à venir en contact avec un rivet placé dans ledit module, ledit dispositif comprenant des moyens d'entrainement en translation de ladite broche.

L'utilisation d'une broche télescopique permet de procurer un système compact et de l'intégré dans un système multi-tâche.

Selon une caractéristique possible, ladite broche télescopique comprend :
- une broche principale externe montée mobile en translation entre au moins :
   - une position rétractée, et
   - une position déployée en direction du module placé au poste de travail, et
- une broche secondaire interne montée mobile en translation à l'intérieur de ladite broche externe entre au moins :
   - une position rétractée dans laquelle elle se trouve logée à l'intérieur de ladite broche externe, et
   - une position déployée dans laquelle elle s'étend au moins en partie à l'extérieur de ladite broche externe.

Selon une caractéristique possible, ladite broche externe comprend une extrémité susceptible d'agir sur ledit piston lorsque ladite broche externe est translatée vers une position déployée, et que ladite broche interne occupe sa position rétractée dans ladite broche externe, pour déplacer ledit piston dans sa position déployée de sorte à insérer partiellement ledit rivet solidaire du module situé au poste de travail dans ledit orifice.

Selon une caractéristique possible, un dispositif selon l'invention comprend des moyens de liaison en translation de ladite broche interne avec ladite broche externe, lesdits moyens de liaison en translation pouvant prendre au moins :
- une position de déverrouillage dans laquelle ladite broche interne est libre de coulisser à l'intérieur de ladite broche externe, et
- une position de verrouillage dans laquelle lesdites broches interne et externe sont liées en translation.

Selon une caractéristique possible, lesdits moyens de liaison en translation comprennent une bague de verrouillage mobile entre :
- ladite position de verrouillage dans laquelle elle coopère avec un logement de forme complémentaire ménagé dans ladite broche interne, et
- ladite position de déverrouillage dans laquelle elle ne coopère pas avec ledit logement.

Selon une caractéristique possible, ledit logement ménagé dans ladite broche interne est une rainure circonférentielle, et ladite bague de verrouillage est mobile en translation selon un axe essentiellement orthogonal à celui de ladite broche interne.

Selon une caractéristique possible, un dispositif selon l'invention comprend des moyens de rappel élastique tendant à ramener lesdits moyens de liaison dans ladite position de verrouillage, et des moyens de déverrouillage permettant de placer lesdits moyens de liaison dans leur position de déverrouillage.

Selon une caractéristique possible, lesdits moyens de déverrouillage comprennent une bague de déverrouillage munie d'un alésage tronconique s'élargissant en direction du module placé au poste de travail, ladite bague de déverrouillage étant liée en rotation avec ladite broche externe, ladite bague de verrouillage se trouvant logée dans ladite bague de déverrouillage lorsque ladite broche externe se trouve dans sa position rétractée, les parois de l'alésage tronconique agissant sur ladite bague de verrouillage pour la placer dans sa position de déverrouillage.

Selon une caractéristique possible, un dispositif selon l'invention comprend des moyens de commande configurés pour successivement :
- déplacer ladite broche externe et ladite broche interne dans leur position rétractée ;
- déplacer ladite broche principale dans sa position déployée pour déplacer ledit piston d'un module placé au poste de travail dans sa position déployée afin d'insérer partiellement un rivet solidaire dudit module dans l'orifice de la structure à travailler ;
- déplacer ladite broche principale dans sa position rétractée pour placer la bague de verrouillage dans sa position déverrouillée ;
- déplacer ladite broche secondaire dans sa position déployée dans laquelle son extrémité est en appui contre la tête du rivet partiellement inséré dans ledit orifice ;
- déplacer ladite broche principale vers sa position déployée pour déclencher le passage desdits moyens de verrouillage dans leur position verrouillée et lier ainsi en translation lesdites broches interne et externe ;
- poursuivre le déplacement de ladite broche externe vers sa position déployée pour évacuer ledit rivet dudit module et finaliser son insertion dans ledit orifice.

Selon une caractéristique possible, un dispositif selon l'invention comprend des moyens d'entrainement en translation de ladite broche externe entre ses positions déployée et rétractée et des moyens de déplacement en translation de ladite broche interne à l'intérieur de ladite broche externe entre ses positions rétractée et déployée.

Selon une caractéristique possible, lesdits moyens d'entrainement en translation de ladite broche externe comprennent une bague taraudée coopérant avec une portion filetée de ladite broche principale et un moteur de translation susceptible d'entrainer en rotation ladite bague taraudée pour induire une translation de ladite broche principale.

Selon une caractéristique possible, lesdits moyens d'entrainement en translation de ladite broche interne comprennent un vérin pneumatique.

L'invention concerne également un dispositif pour la réalisation d'au moins une tâche sur une structure à travailler, ledit dispositif comprenant :
- des moyens de solidarisation dudit dispositif à des moyens de manutention motorisés aptes à déplacer au moins en partie ledit dispositif dans l'espace par rapport à une structure à travailler ;
- des moyens de solidarisation dudit dispositif à ladite structure à travailler ;
ledit dispositif comprenant au moins un dispositif de pose de rivet selon l'une quelconque des variantes ci-dessus.

L'invention concerne également un procédé de pose d'un rivet, ledit procédé comprenant une étape de pré-insertion partielle puis une étape d'insertion finale totale du rivet dans ledit orifice au cours desquelles l'extrémité du rivet puis le corps du rivet sont successivement insérés dans ledit orifice.

Selon une caractéristique possible, un tel procédé comprend les étapes successives suivantes :
- étape de déplacement de ladite broche principale et de ladite broche secondaire dans leur position rétractée ;
- étape de déplacement de ladite broche principale dans sa position déployée pour déplacer ledit piston d'un module placé au poste de travail dans sa position déployée afin d'insérer partiellement un rivet solidaire dudit module dans l'orifice de la structure à travailler ;
- étape de déplacement de ladite broche principale dans sa position rétractée pour placer la bague de verrouillage dans sa position déverrouillée ;
- étape de déplacement de ladite broche secondaire dans sa position déployée dans laquelle son extrémité est en appui contre la tête du rivet partiellement inséré dans ledit orifice ;
- étape de déplacement de ladite broche principale vers sa position déployée pour déclencher le passage desdits moyens de verrouillage dans leur position verrouillée et lier ainsi en translation lesdites broches interne et externe ;
- étape de poursuite du déplacement de ladite broche externe vers sa position déployée pour évacuer ledit rivet dudit module et finaliser son insertion dans ledit orifice.

### 5. Description des figures

D'autres caractéristiques et avantages de l'invention apparaîtront à la lecture de la description suivante de modes de réalisation particuliers, donnée à titre de simple exemple illustratif et non limitatif, et des dessins annexés parmi lesquels :
[Fig 1] la figure 1 illustre une vue en perspective d'un dispositif selon l'invention ;
[Fig 2] la figure 2 illustre une vue en coupe du dispositif de la figure 1 selon un plan passant par l'axe de la broche ;
[Fig 3] la figure 3 illustre une vue partielle agrandie de la figure 1 ;
[Fig 4] la figure 4 illustre une vue du dispositif de la figure 1 selon le plan A-A du dispositif de la figure 3 ;
[Fig 5] la figure 5 illustre une première variante de dispositif de pads à ventouse pour la solidarisation d'un dispositif selon l'invention à une structure à travailler ;
[Fig 6] la figure 6 illustre une vue partielle et en coupe selon un plan passant par la broche et l'arbre de guidage en rotation du carrousel d'un dispositif selon l'invention ;
[Fig 7] la figure 7 illustre une vue en perspective d'un arbre de guidage en rotation du carrousel d'un dispositif selon l'invention ;
[Fig 8] la figure 8 illustre une vue en coupe d'un module de support de rivet ;
[Fig 9] la figure 9 illustre une vue en coupe d'un autre module de support de rivet ;
[Fig 10] la figure 10 illustre une vue en coupe d'un module de perçage ;
[Fig 11] la figure 11 illustre une vue en coupe d'un module de support de fixation temporaire ;
[Fig 12] la figure 12 illustre une vue en coupe selon le plan D-D du dispositif de la figure 2 ;
[Fig 13] la figure 13 illustre une vue en coupe selon le plan E-E du dispositif de la figure 2 ;
[Fig 14] la figure 14 illustre une vue en coupe selon le plan B-B du dispositif de la figure 2 ;
[Fig 15] la figure 15 illustre une vue en coupe selon le plan C-C du dispositif de la figure 2 ;
[Fig 16] la figure 16 illustre une vue partielle en perspective et en coupe selon un plan passant par l'axe de rotation du carrousel d'un dispositif selon l'invention ;
[Fig 17] la figure 17 illustre le dispositif de la figure 1 selon un autre angle de vue ;
[Fig 18] la figure 18 illustre le dispositif de la figure 17 avec une dispositif de ventouses différente ;
[Fig 19] la figure 19 illustre un exemple de C-clamp mis en œuvre pour la solidarisation d'un dispositif selon l'invention à une structure à travailler;
[Fig 20] la figure 20 illustre le dispositif de la figure 19 selon un autre angle de vue ;
[Fig 21] la figure 21 illustre une coupe suivant l'axe H-H de la figure 20 ;
[Fig 22] la figure 22 illustre un détail de la figure 21 ;
[Fig 23] la figure 23 illustre une vue partielle d'un dispositif de solidarisation universelle selon l'invention ;
[Fig 24] la figure 24 illustre une vue de détail en perspective du dispositif de la figure 1 au niveau du carrousel secondaire ;
[Fig 25] la figure 25 illustre une vue en coupe suivant l'axe I-I du carrousel secondaire ;
[Fig 26] la figure 26 illustre une vue en coupe suivant l'axe J-J du carrousel secondaire ; [Fig 27] la figure 27 illustre une vue partielle en coupe longitudinale du dispositif au niveau des moyens d'appareillage rapide ;
[Fig 28] la figure 28 illustre une vue en coupe suivant l'axe K-K de la figure 27 ;
[Fig 29] la figure 29 illustre une vue en coupe suivant l'axe H-H de la figure 4 ;
[Fig 30] la figure 30 illustre une vue en coupe d'un élément mâle des moyens d'appareillage
[Fig 31] la figure 31 illustre une vue en coupe selon un plan de coupe à 90° de de la figure 30 ;
[Fig 32] la figure 32 illustre une vue de dessus d'un organe de verrouillage ;
[Fig 33] la figure 32 illustre une vue de côté d'un organe de verrouillage 28 ;
[Fig 34] la figure 34 illustre une vue partielle en coupe du poste d'enduction ;
[Fig 35] la figure 35 illustre une vue partielle en coupe suivant l'axe M-M de la figure 34 ;
[Fig 36] la figure 36 illustre une vue partielle en coupe d'un module de support de rivet au poste d'enduction ;
[Fig 37] la figure 37 illustre la vis mère et le sabot du poste d'enduction ;
[Fig 38] la figure 38 illustre une vue de détail du poste d'enduction ;
[Fig 39] la figure 39 illustre une variante de poste d'enduction ;
[Fig 40] la figure 40 illustre un détail de la figure 39 ;
[Fig 41] la figure 41 illustre un autre détail de la figure 39 ;
[Fig 42] la figure 42 illustre une vue en coupe longitudinale d'un module de support de rivet d'une taille donnée en cours d'enduction ;
[Fig 43] la figure 43 illustre une vue en coupe longitudinale d'un module de support de rivet d'une taille donnée différente de celle de la figure 42 en cours d'enduction dont la zone de raccordement de la tête et du corps se situe à la même position relative par rapport à la buse qu'avec le module d la figure 42 ;
[Fig 44] la figure 44 illustre une vue en coupe longitudinale au niveau du poste de chargement de fixation temporaire ;
[Fig 45] la figure 45 illustre des vues d'un élément de verrouillage ;
[Fig 46] la figure 46 illustre un détail de la figure 44 ;
[Fig 47] la figure 47 illustre une vue partielle en coupe longitudinale du poste de travail perspective ;
[Fig 48] la figure 48 illustre une vue partielle en coupe longitudinale du poste de travail au niveau des moyens d'appareillage rapide ;
[Fig 49] la figure 49 illustre une vue partielle en coupe longitudinale des moyens de liaison en translation des broches principale et secondaire ;
[Fig 50] la figure 50 illustre des vues illustrant la téléscopie.

### 6. Description de modes de réalisation particuliers

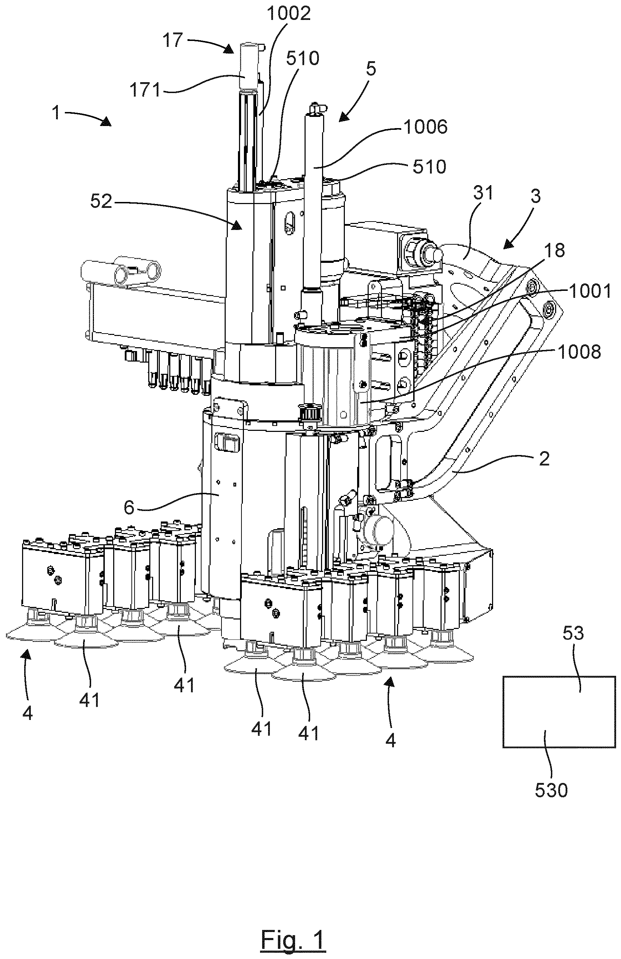

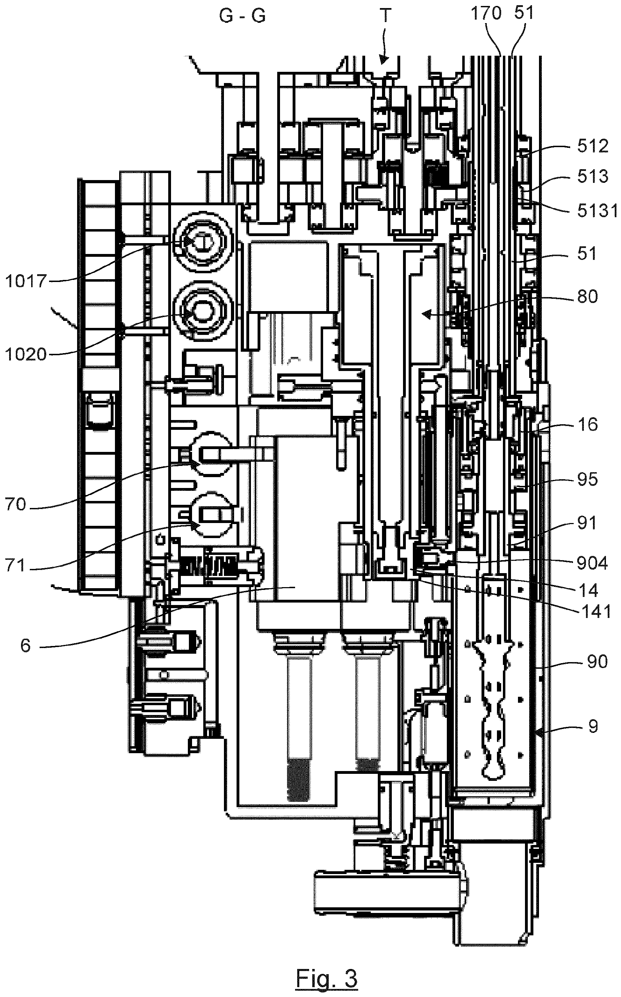

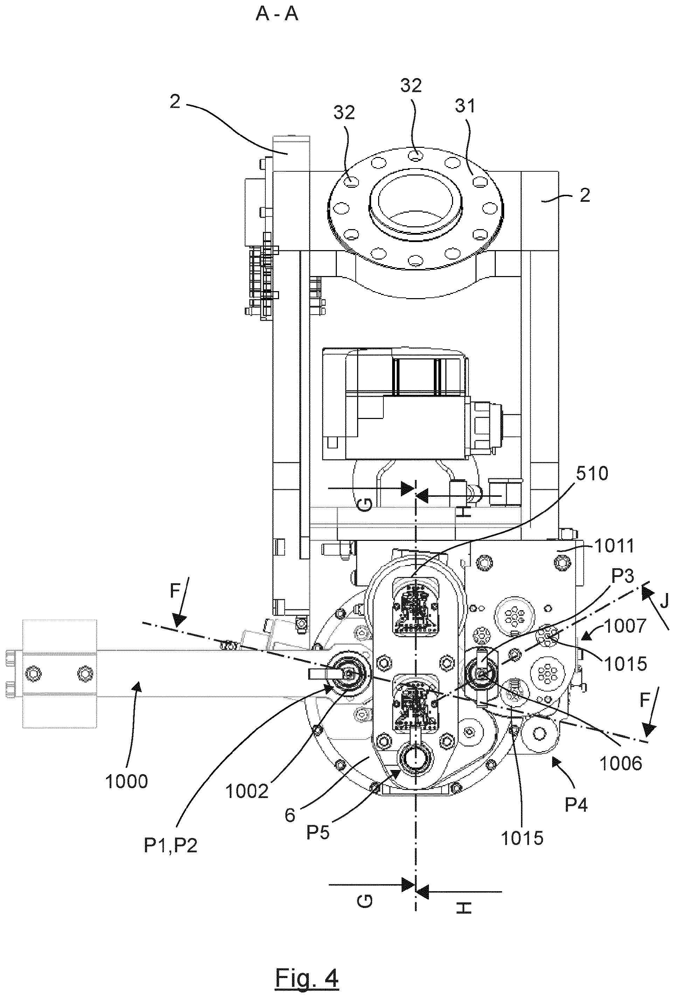

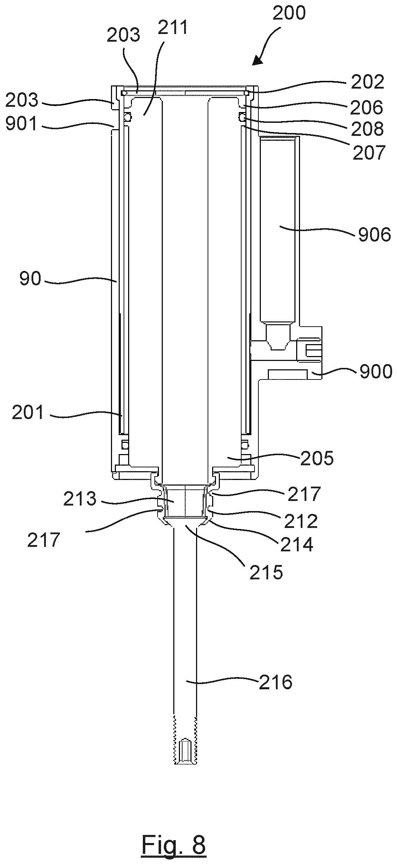

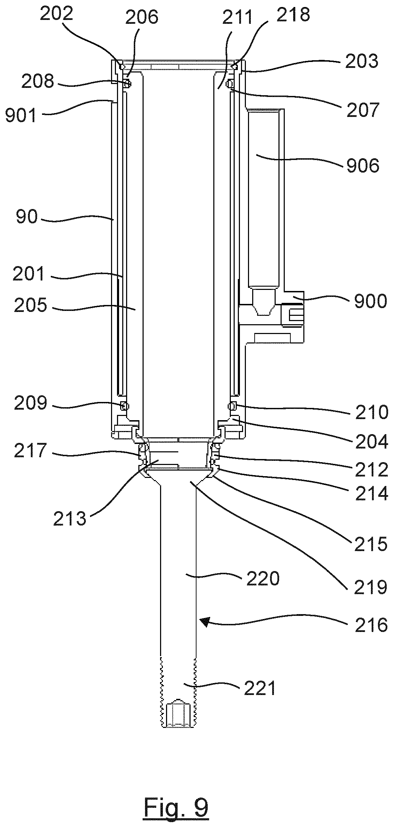

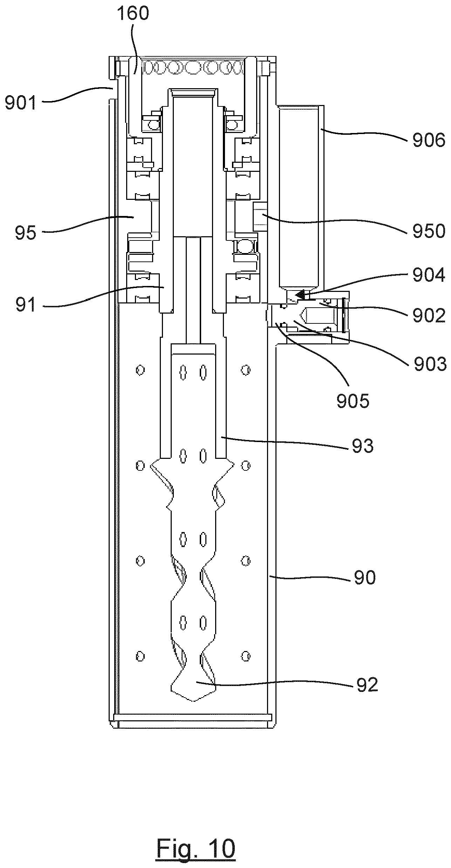

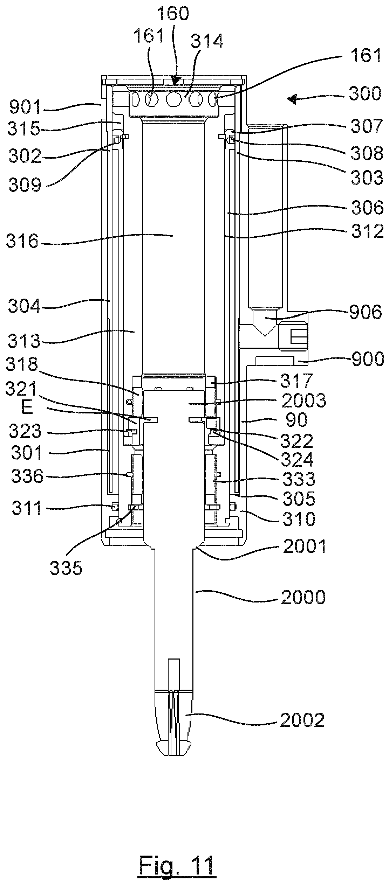

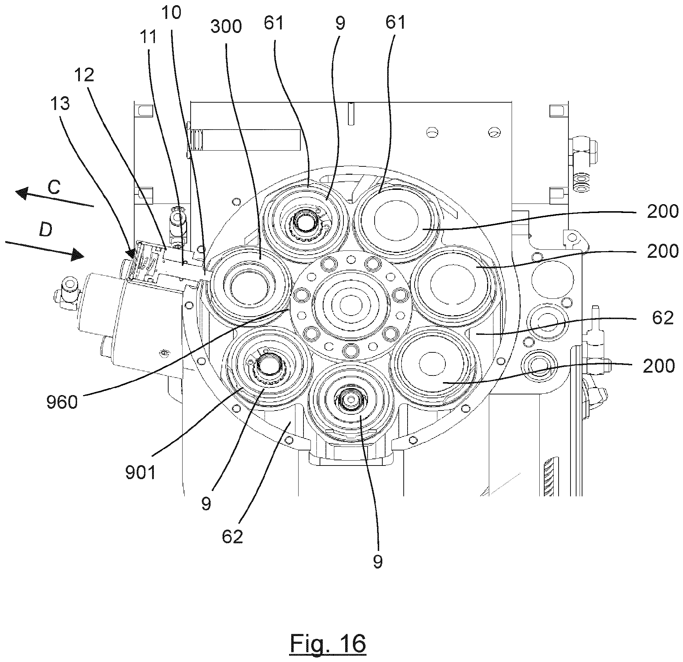

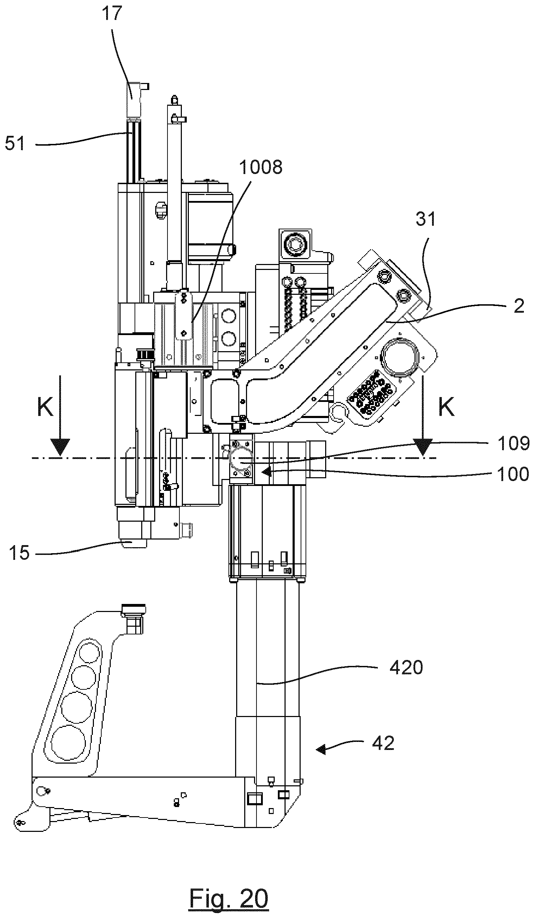

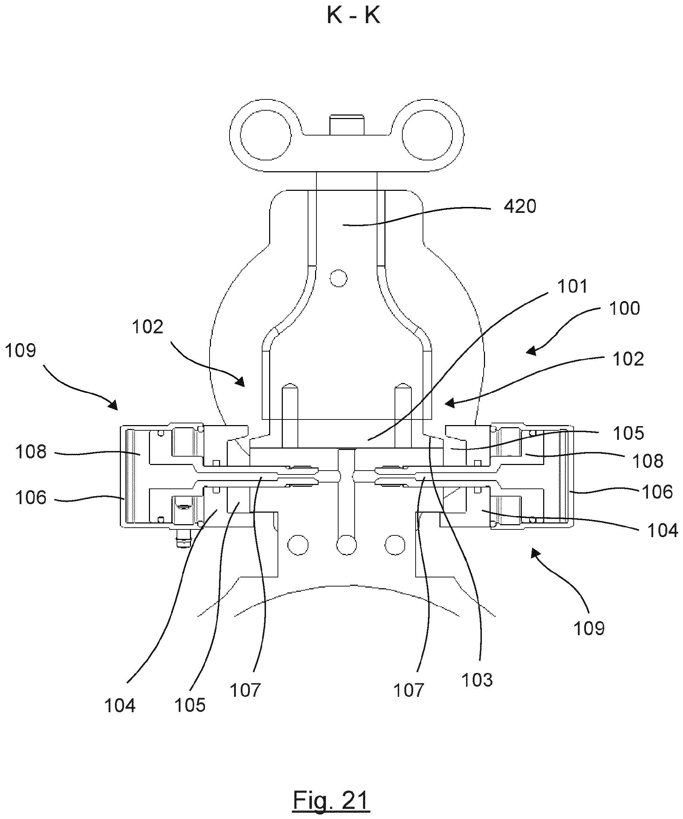

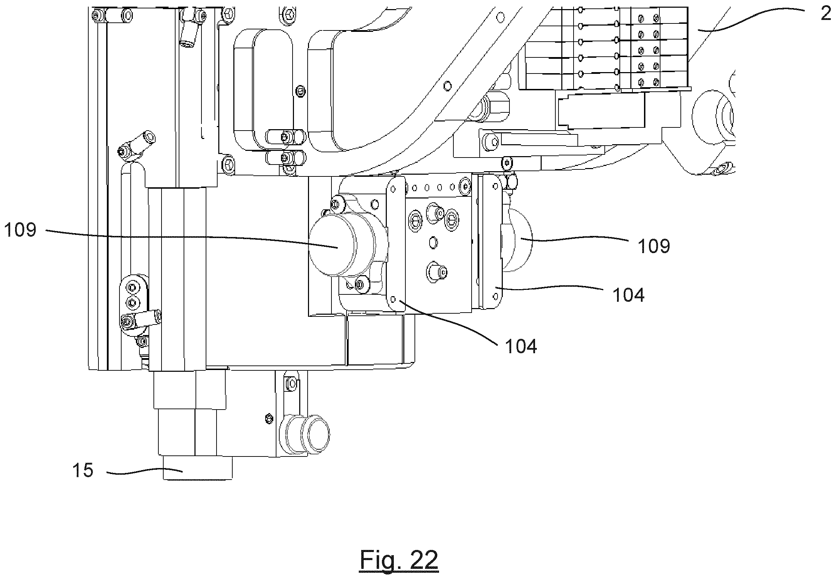

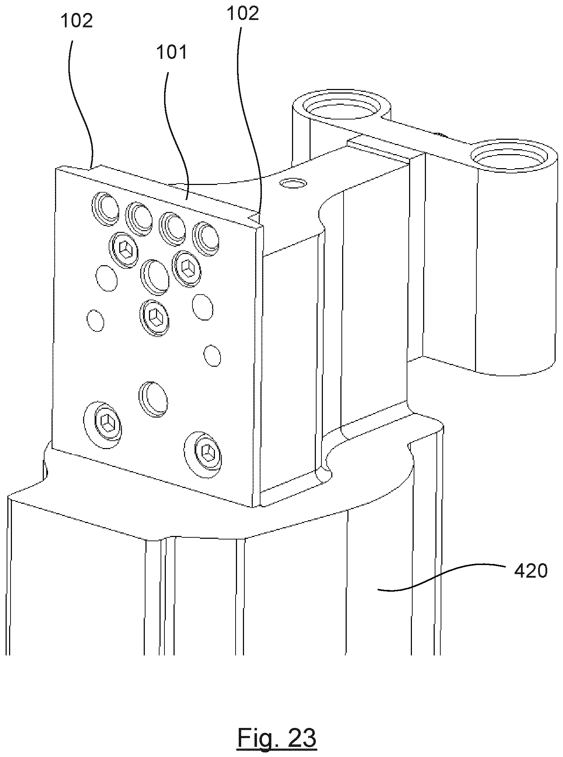

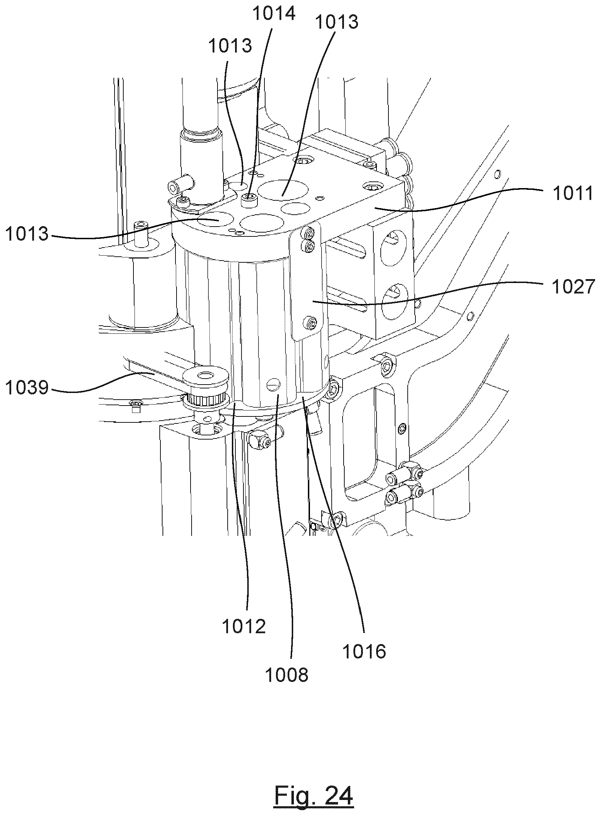

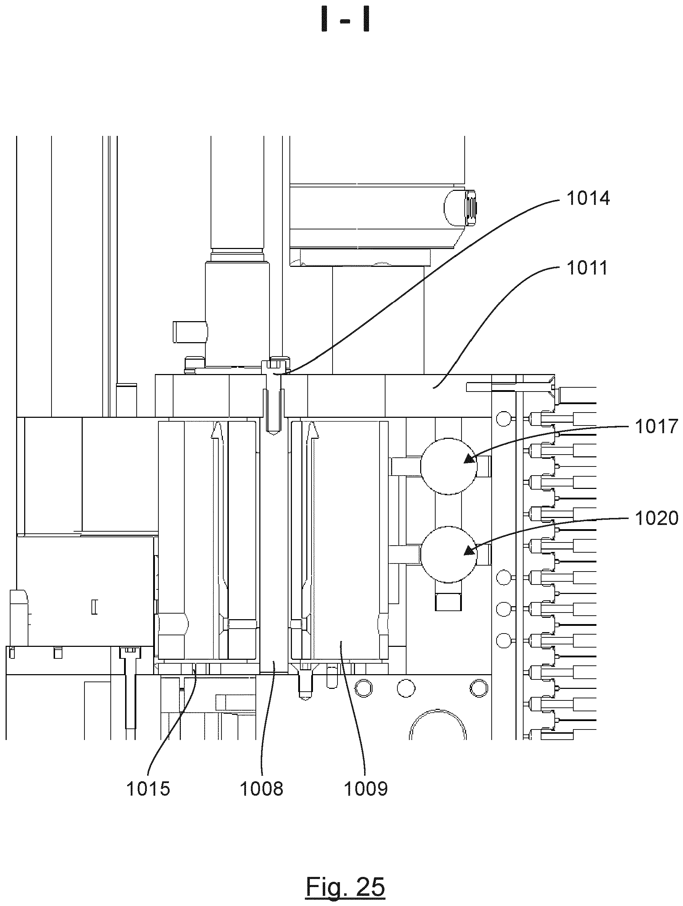

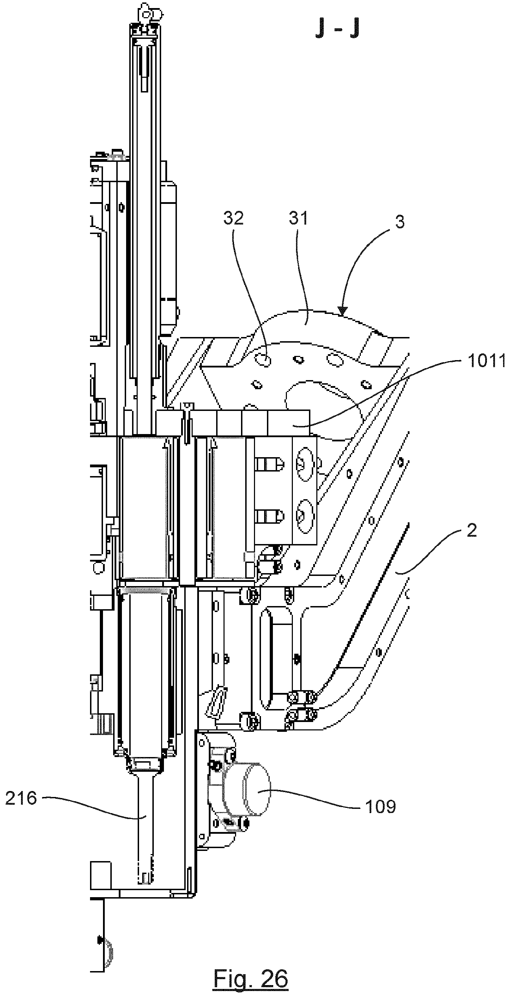

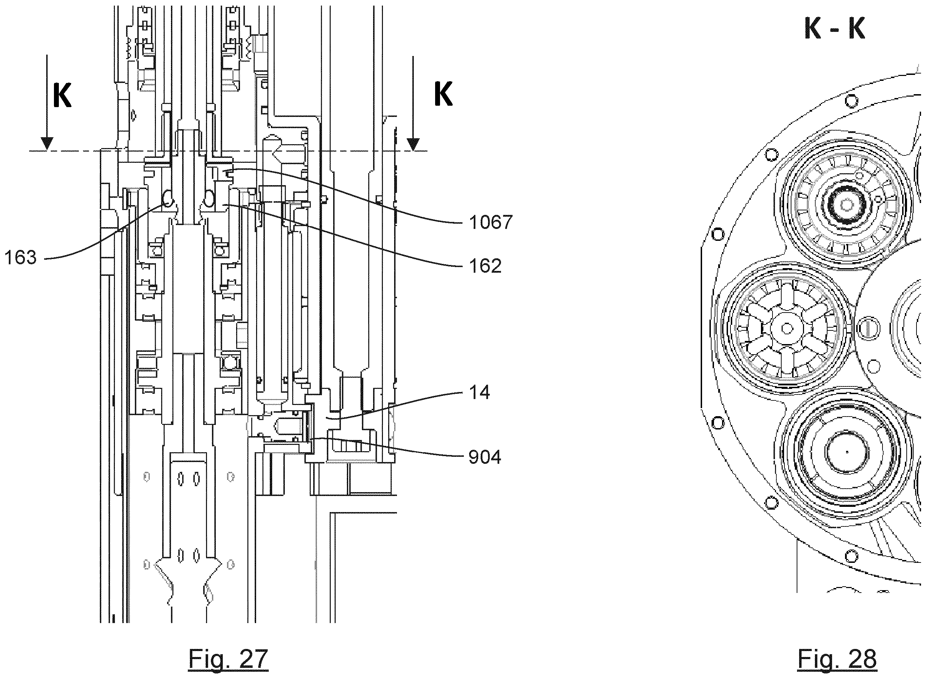

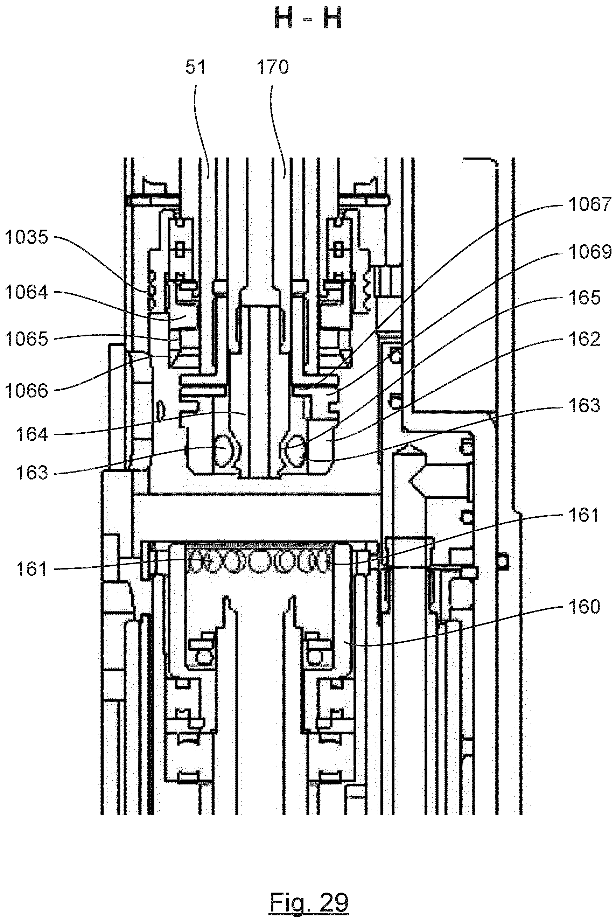

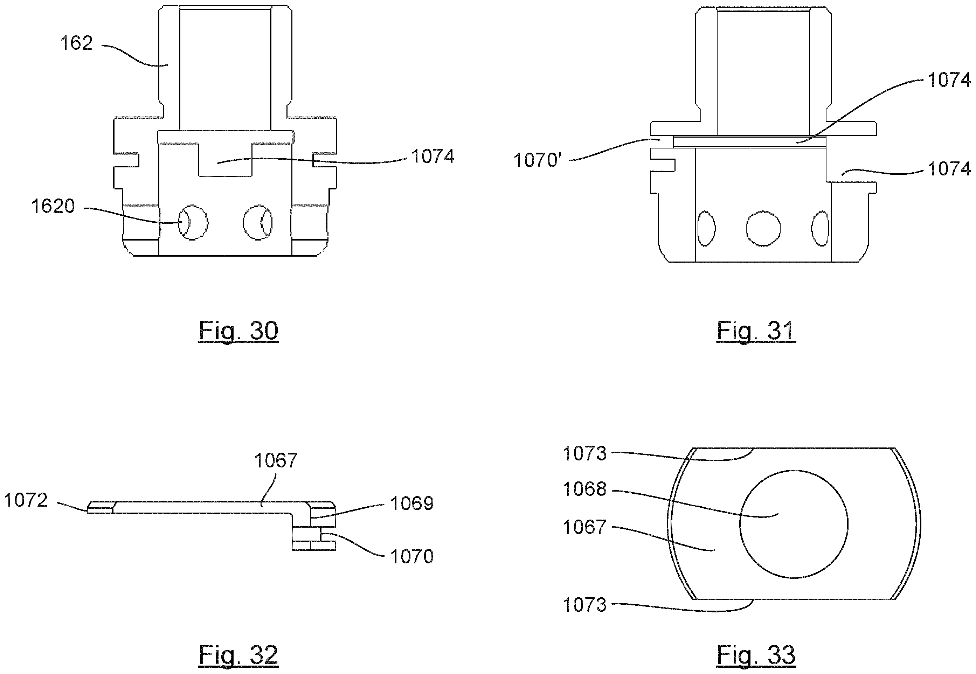

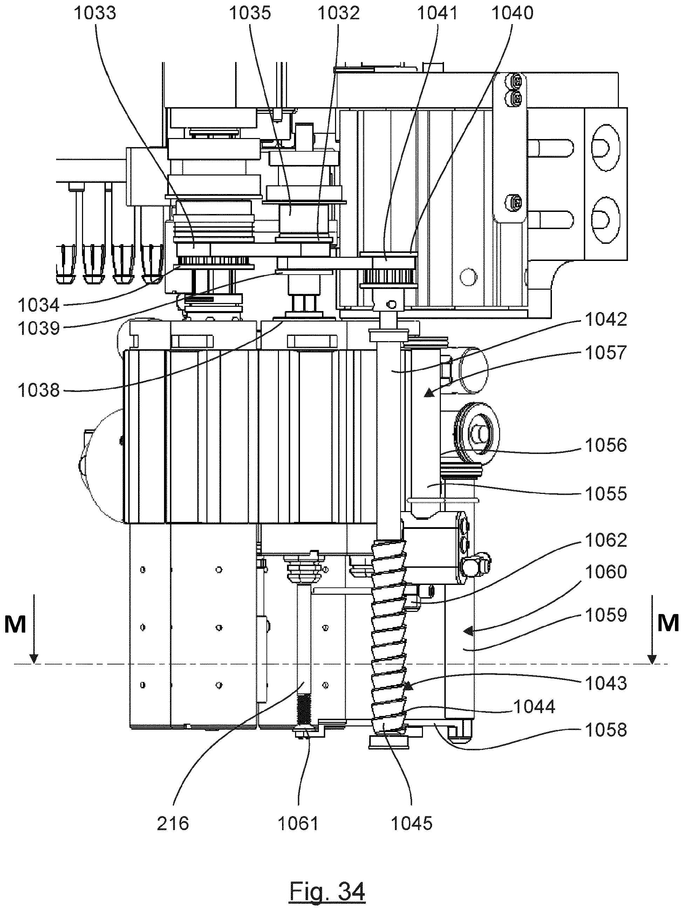

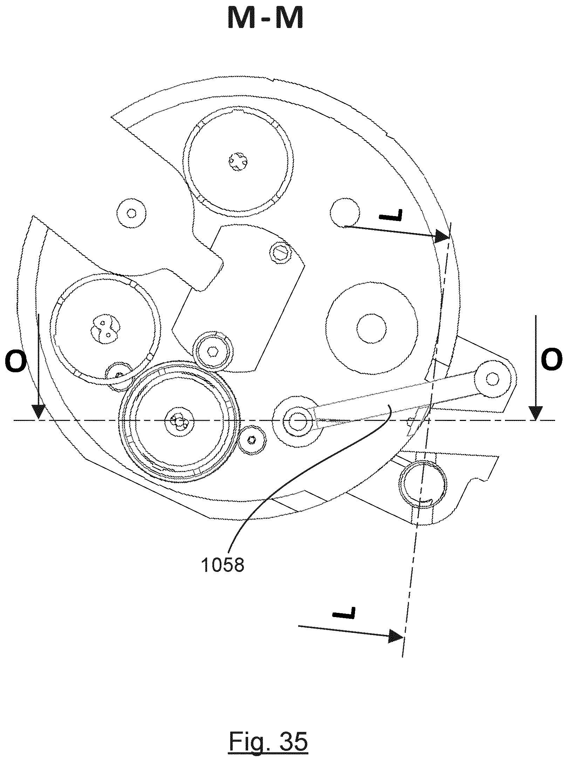

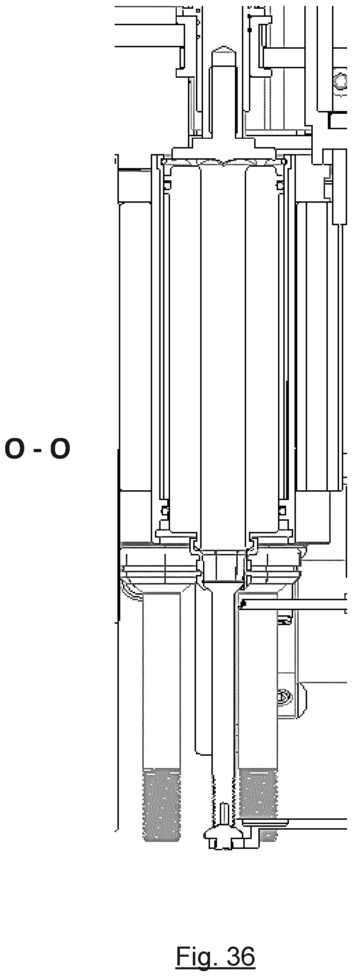

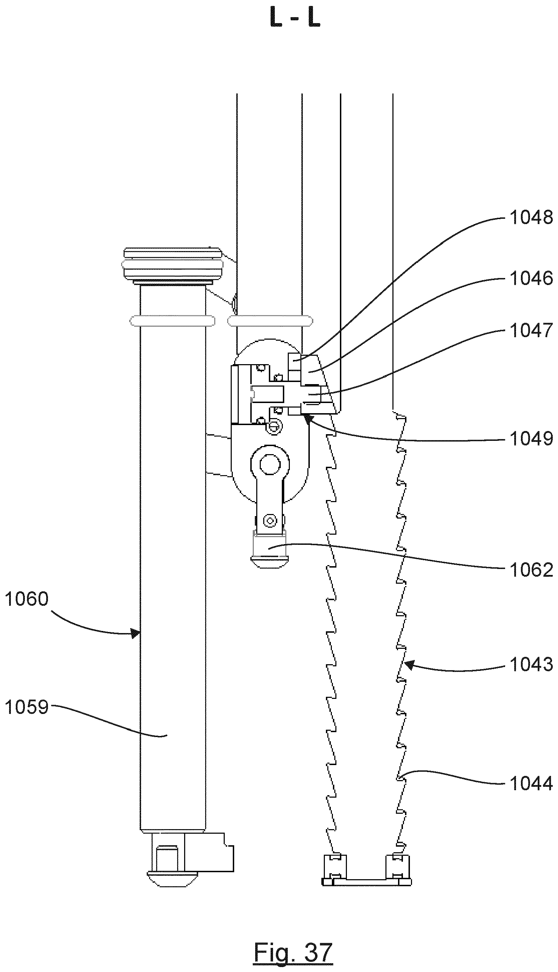

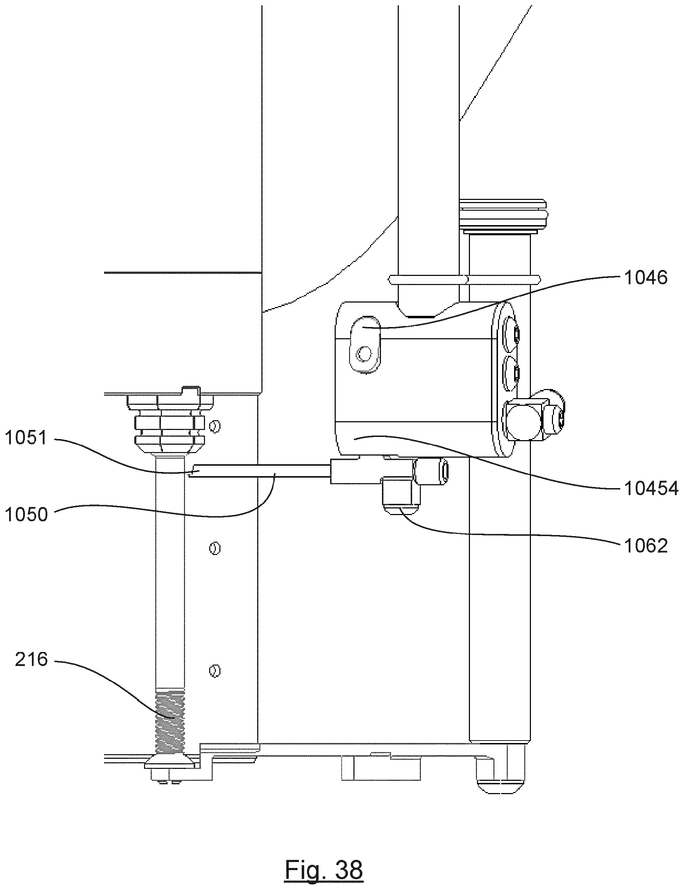

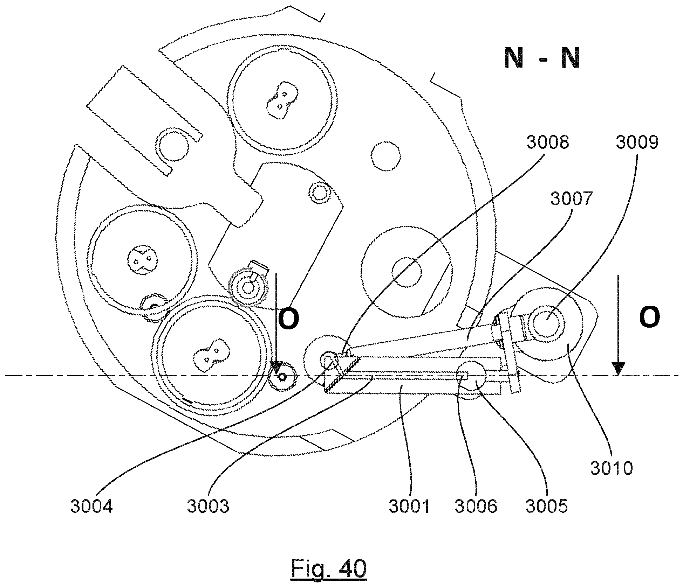

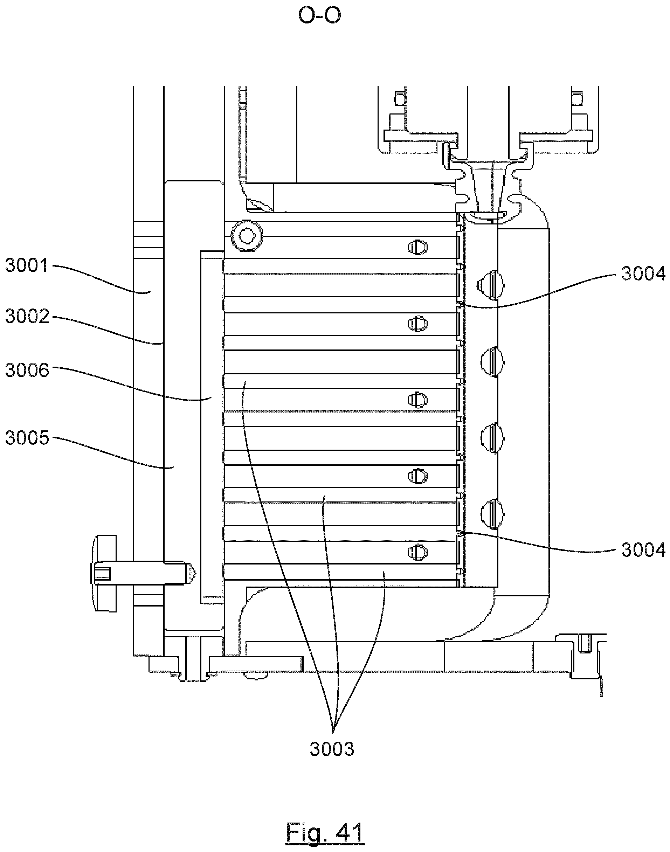

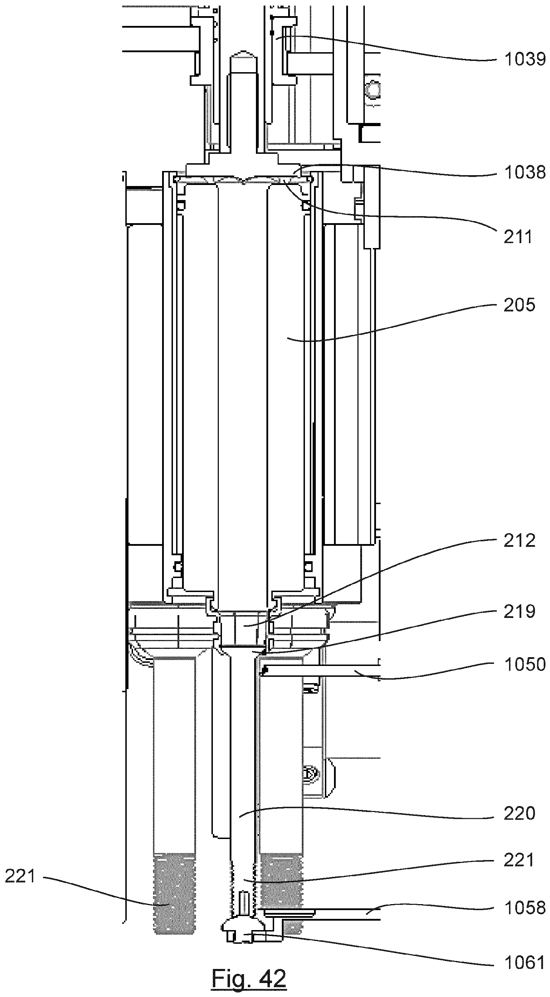

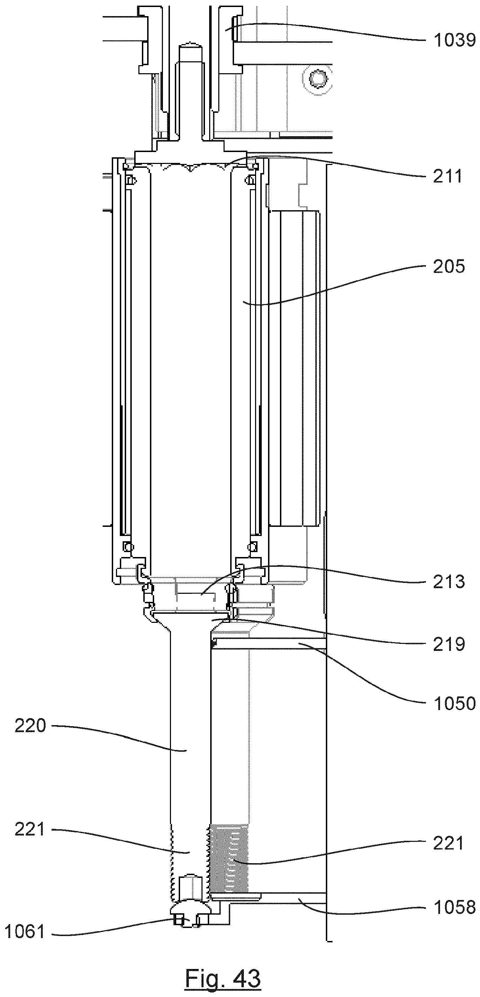

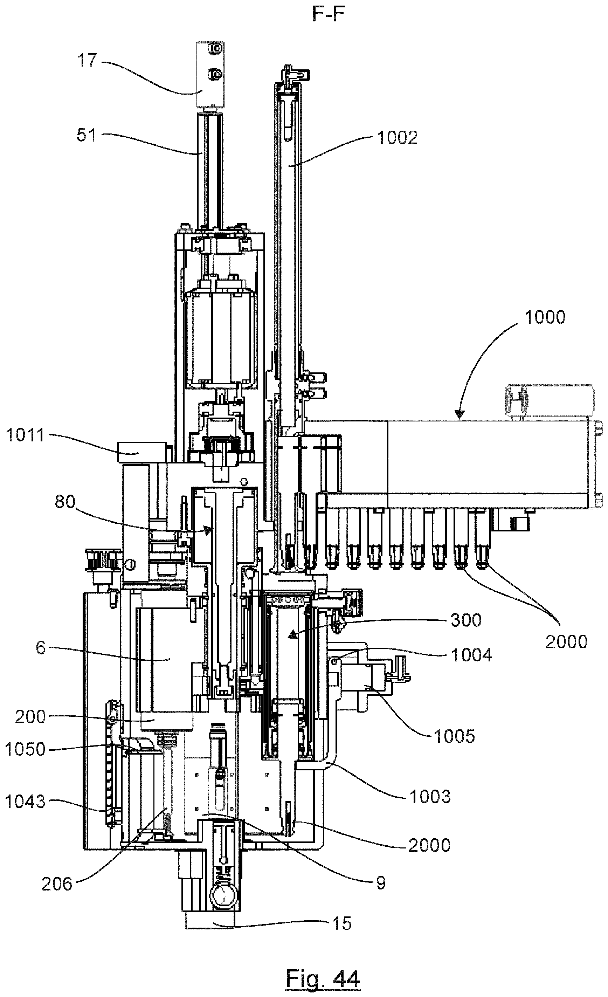

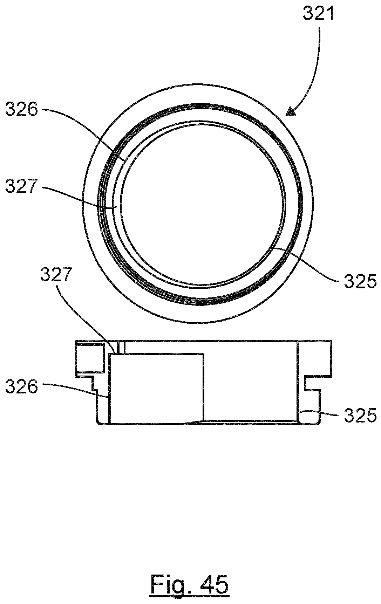

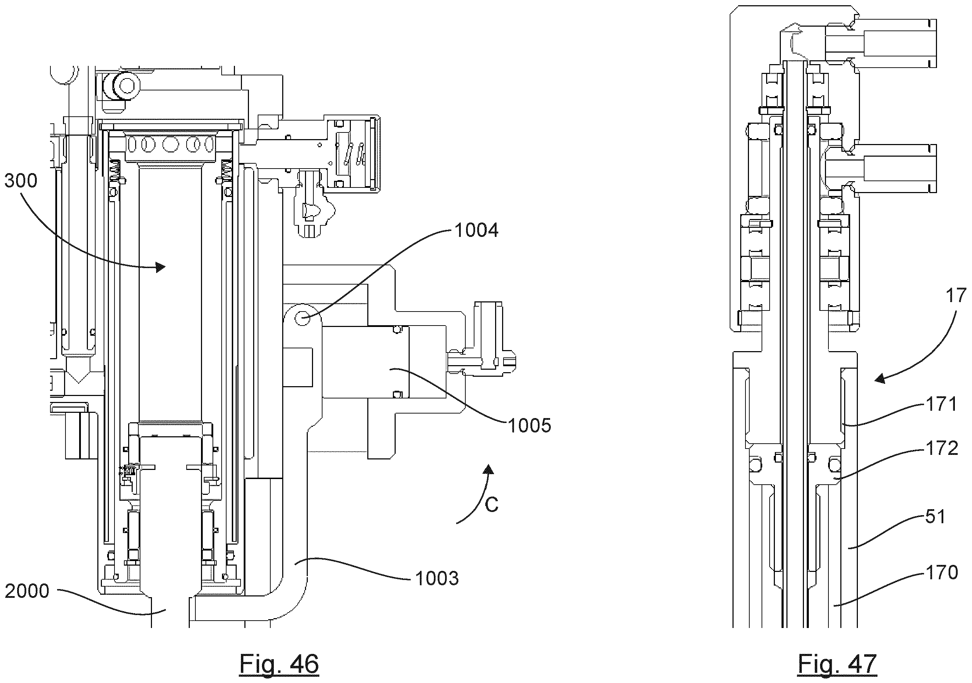

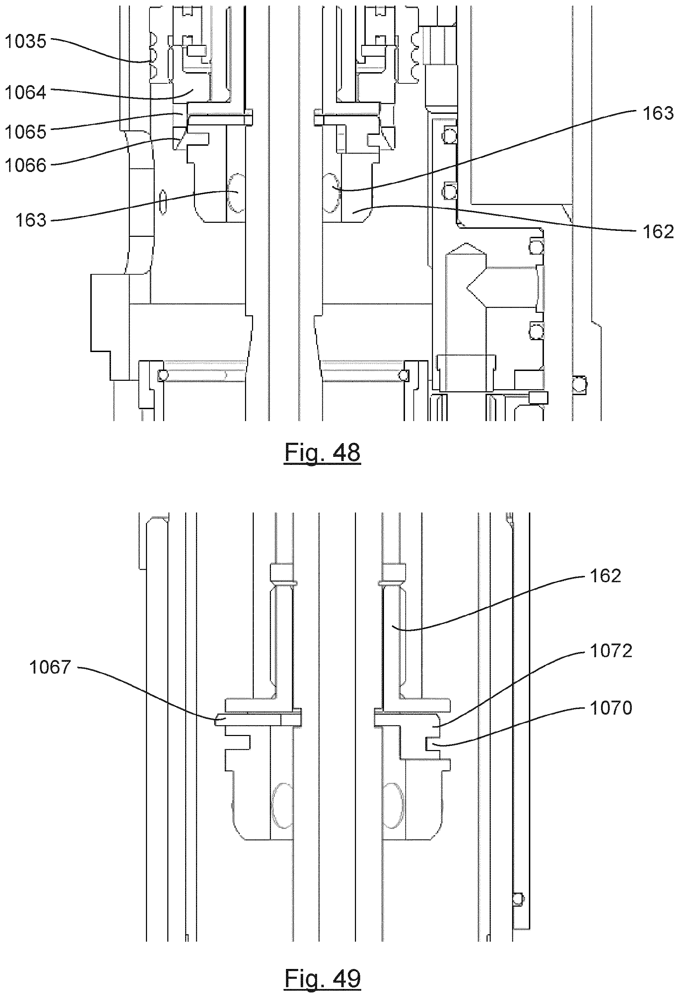

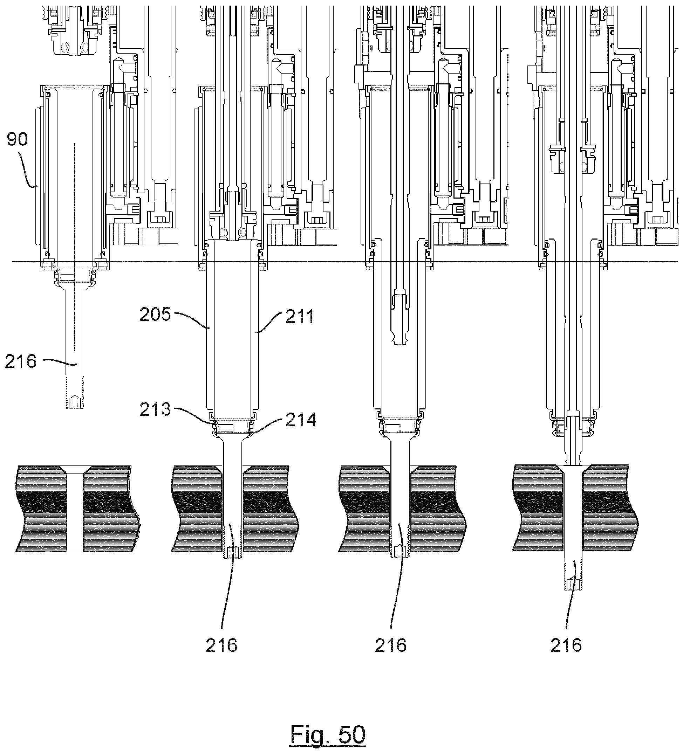

On décrit, en relation avec les figures 1 à 50, un exemple d'un dispositif multi-tâche selon l'invention.

Ainsi que cela est représenté sur ces figures, un tel dispositif multi-tâche 1 comprend un bâti 2.

Ce bâti 2 est équipé de moyens de solidarisation 3 à un dispositif de manutention motorisés (non représenté) auquel il est destiné à être solidarisé de manière à pouvoir être déplacé par rapport à une structure à travailler (non représentée).

Ces moyens de manutention motorisés appartiennent au groupe comprenant :
- les bras robot ;
- les robots marcheurs ;
- les grilles numériques.

Dans l'exemple illustré, il s'agit de moyens de solidarisation 3 à un bras robot. Ces moyens de solidarisation comprennent une platine 31 traversée par une pluralité de trous 32 permettant le passage de boulons de solidarisation à l'extrémité du bras robot. D'autres moyens de solidarisation pourront être mis en œuvre comme par exemple des moyens de solidarisation rapides de type collier, système à clamp ou à came....

Dans le cas des grilles numériques, les moyens de solidarisation comprendront par exemple des boulons, colliers ou autres moyens de solidarisation à un berceau muni des galets aptes à être guidés dans les rails de la grille numérique.

### Moyens de solidarisation à une structure à travailler

Le dispositif comprend des moyens de solidarisation 4 à une structure à travailler.

Ces moyens de solidarisation peuvent être de différents types.

Ils peuvent par exemple comprendre des ventouses 41 solidaires du bâti 2 aptes à être reliées à des moyens de mise sous vide comme par exemple une pompe à vide pour améliorer la solidarisation à la surface de la structure à travailler.

Les ventouses peuvent être solidarisées par groupes à des supports formant ainsi des pads à ventouses. Deux pads à ventouses sont représentés sur les figures 1, 17 et 18, ce nombre pourrait toutefois être supérieur à deux.

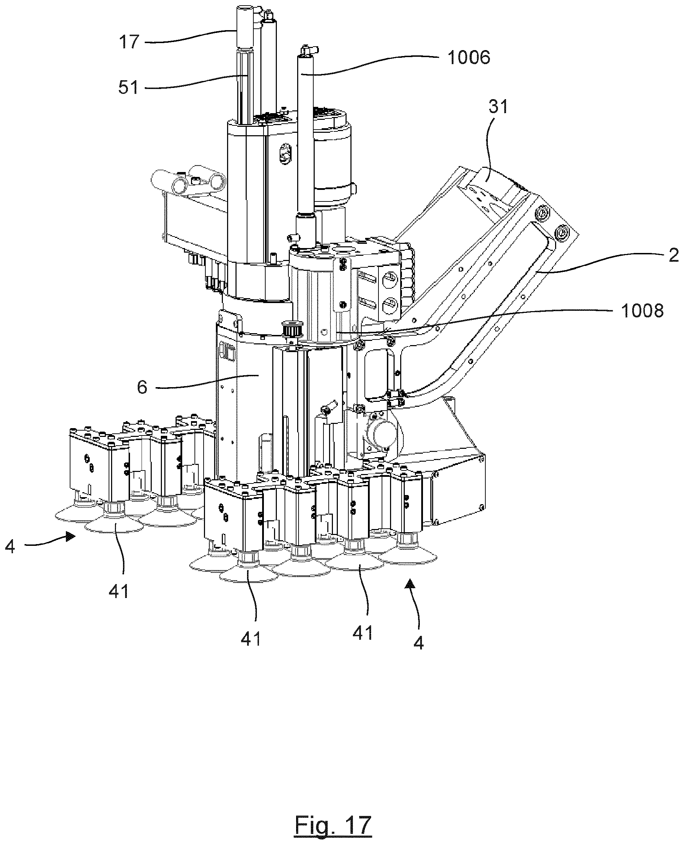

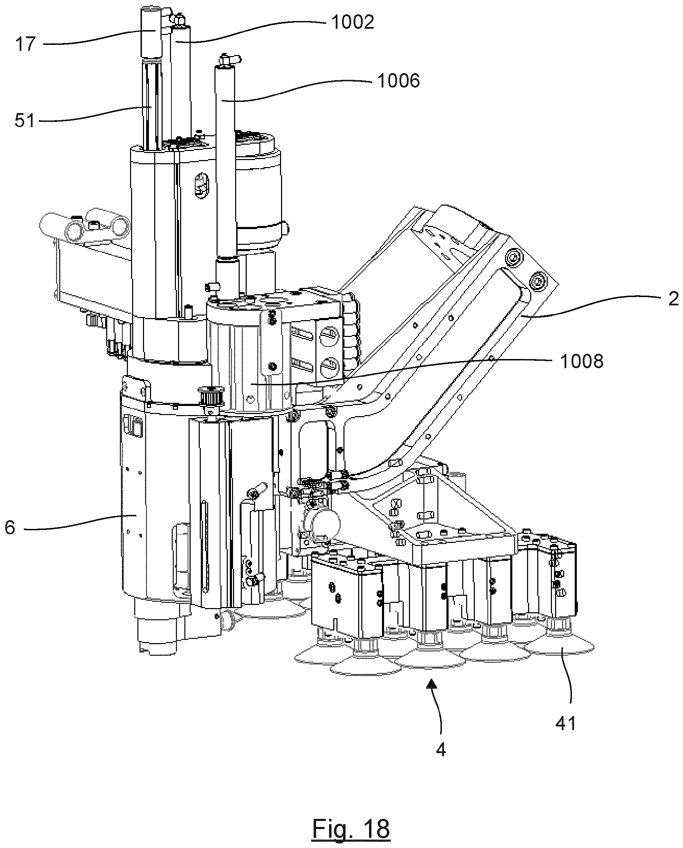

Les ventouses peuvent être décalées d'un côté de la broche 51 (qui sera décrite en détail par la suite) comme cela est illustré à la figure 18 ou bien réparties autour de la broche 51 (cf. figure 17).

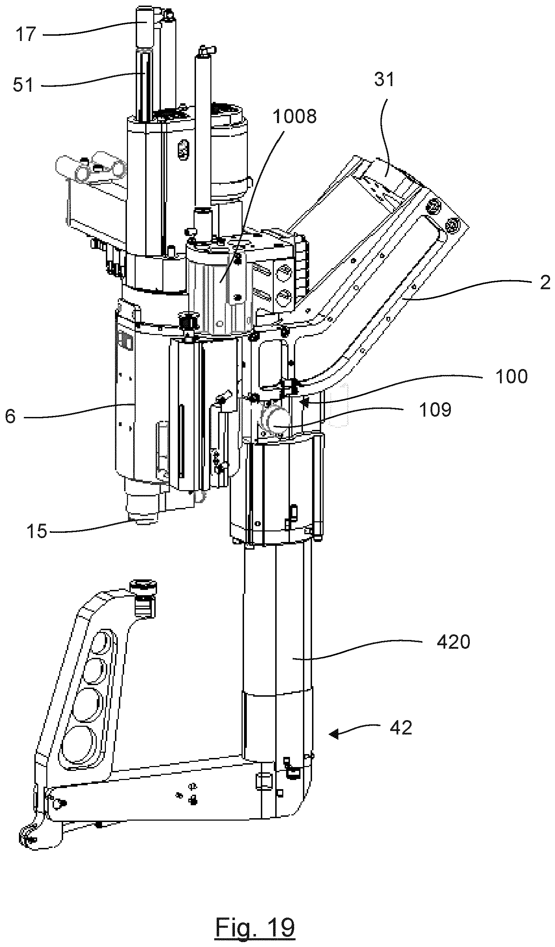

Ils peuvent altemativement comprendre un C de clampage par ailleurs connu dans l'état de l'art comme par exemple celui illustré à la figure 19.

Les moyens de solidarisation à une structure à travailler peuvent être solidarisés à demeure au bâti. De manière alternative, ils peuvent être solidarisés au bâti via des moyens de fixation réversibles universels 100.

### Moyens de fixation réversibles universels des moyens de solidarisation à une structure à travailler

Les moyens de fixation réversibles universels 100 comprennent une plaque de fixation 101.

Dans le cas des ventouses 41, la plaque de fixation 101 sera solidaire d'une structure porteuse portant les ventouses.

Dans le cas du C de clampage 42, la plaque de fixation 101 sera solidaire de l'extrémité distale d'un barreau 420 du C de clampage.

Cette plaque de fixation 101 présente une section essentiellement rectangulaire dans un plan et une section avec deux rainures latérales 102 dans un autre plan orthogonal au premier.

Ces rainures latérales 102 s'étendent tout le long de la plaque de fixation 101 et comprennent un pan incliné 103 de sorte que l'épaisseur des portions rainurées de la plaque de fixation 101 tend à s'épaissir depuis les extrémités de la plaque vers l'intérieur de celle-ci.

Les moyens de fixation réversibles universels comprennent une paire de mâchoires 104 de forme complémentaire des extrémités rainurées de la plaque de fixation 101.

Ces mâchoires 104 définissent donc chacune un logement 105 apte à recevoir l'extrémité rainurée correspondante de la plaque de fixation 101. Ces logements 105 présentent ainsi chacun deux surfaces opposées dont l'une est inclinée par rapport à l'autre d'un angle sensiblement identique à l'angle d'inclinaison de la rainure correspondante de la plaque de fixation.

Chaque mâchoire est solidaire du cylindre 106 d'un vérin 109 dont la tige 107 du piston 108 passe à travers la mâchoire 104 et est solidarisée au bâti.

Les mâchoires 104 sont montées mobiles entre au moins :
- une position de désolidarisation dans laquelle elle sont éloignées l'une de l'autre pour permettre l'introduction des extrémités rainurées de la plaque de fixation 101 en vue de solidariser au bâti les moyens de fixation à une structure à travailler, et
- une position de solidarisation dans laquelle elles sont rapprochées pour enserrer (prendre en étau) les extrémités rainurées de la plaque de fixation 101 afin de solidariser au bâti les moyens de solidarisation à une structure à travailler.

Lors de leur passage de leur position de désolidarisation à leur position de solidarisation, les surfaces inclinées des extrémités rainurées de la plaque de fixation 101 viennent progressivement glisser contre les surfaces inclinées des mâchoires 104 correspondantes pour assurer une solidarisation par effet de coin.

Pour fixer au bâti les moyens de solidarisation souhaité, les vérins 109 sont actionnés pour placer les mâchoires 104 dans leur position de désolidarisation.

La plaque de fixation 101 des moyens de solidarisation est ensuite insérée entre les mâchoires 104.

Les vérins 109 sont ensuite actionnés pour placer les mâchoires 105 dans leur position de solidarisation dans laquelle elles enserrent les extrémités rainurées de la plaque de fixation 101.

La désolidarisation des moyens de solidarisation est obtenue en procédant inversement.

### Modules fonctionnels

Le dispositif est susceptible d'embarquer une pluralité de modules fonctionnels qui seront décrits plus en détail par la suite.

Chacun de ces modules fonctionnels permet de réaliser une tâche particulière comme par exemple une opération de perçage et/ou de fraisurage, une opération de pose de rivets, une opération de pose de fixation temporaire (par exemple d'agrafe), une opération de dépose (ou d'enduction) sur un élément de fixation (un rivet ou une vis) d'un cordon de mastic d'étanchéité. D'autres fonctions pourraient être envisagées telles que du vissage.

### Module de perçage et/ou fraisurage

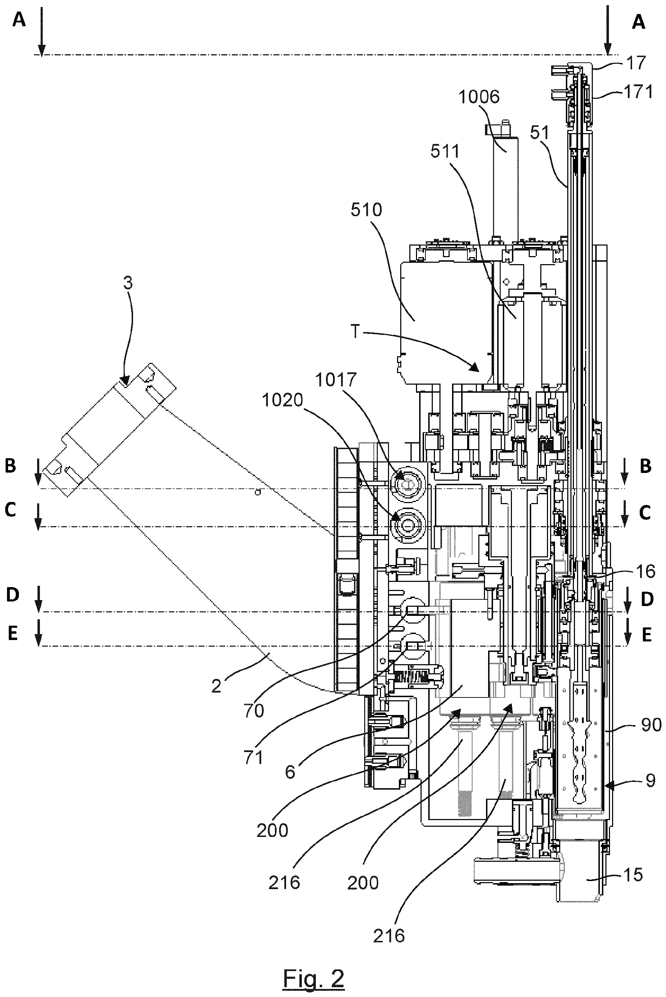

Le module fonctionnel 9 illustré dans l'alignement de la broche 51 à la figure 2 est un module de perçage.

Le module de perçage comprend un fourreau 90.

Ce fourreau 90 présente une forme tubulaire et une section globalement annulaire.

Le fourreau 90 comprend un doigt latéral 900 formant saillie sur sa paroi latérale.

Le fourreau 90 comprend une rainure latérale 901 qui est ménagée de manière diamétralement opposée et décalée suivant l'axe longitudinal du fourreau par rapport au doigt 900.

Ce module de perçage comprend un arbre de sortie 91 (i.e. organe mobile) à l'extrémité duquel peut être solidarisé un outil de coupe comme un foret 92 (éventuellement étager pour permettre la réalisation d'une fraisure) par des moyens de fixation 93 connus en soit. L'outil de coupe pourra par exemple être un foret simple pour réaliser de simples perçages, un foret étagé, un foret fraisureur pour réaliser des perçages fraisurés, un outil de fraisage pour réaliser la fraisure de perçages préalablement réalisés.

L'arbre de sortie 91 est monté mobile en rotation dans un palier 94 lui-même monté coulissant le long du fourreau 90 au moyen d'un coussinet 95.

Le doigt 900 du fourreau 90 du module de perçage loge une chambre 902 dans laquelle est monté coulissant un piston 903 d'un vérin 904. L'extrémité 905 du piston 903 est susceptible de venir se loger dans un logement de forme complémentaire 950 ménagé à cet effet dans le coussinet 95.

Le doigt 900 est prolongé par une conduite d'alimentation 906 du vérin 904 susceptible d'être mise en communication avec une conduite d'admission d'air sous pression 907 ménagée dans le dispositif, avec laquelle il se trouve en communication lorsqu'il se trouve au poste de travail du dispositif.

Des moyens de rappel élastique (non représentés) tendent à ramener le piston 903 dans une position dans laquelle son extrémité 905 est logée dans le logement 950 correspondant du coussinet 95 de sorte à bloquer celui-ci en translation à l'intérieur du fourreau 90 et pour empêcher en conséquence le coussinet 95, le palier 94, l'arbre de sortie 91 et l'outil 92 qu'il porte de sortir du fourreau 90 tant que le module fonctionnel n'est pas appareillé à la broche 51.

L'extrémité 905 et le vérin 904 correspondant constituent des moyens de blocage en translation d'un ensemble fonctionnel de module fonctionnel à l'intérieur de son fourreau. Un ensemble fonctionnel comprend l'ensemble des composants d'un module fonctionnel montés libres en translation dans son fourreau.

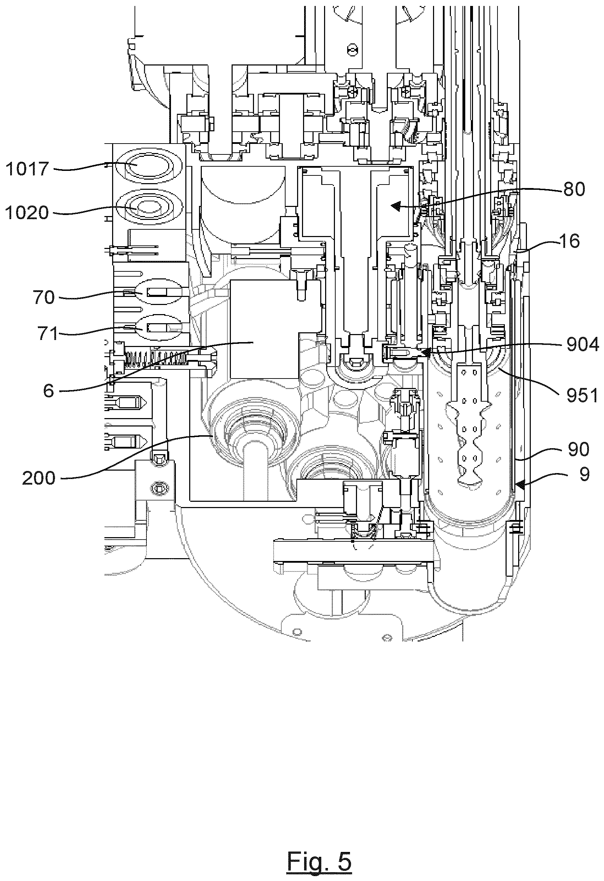

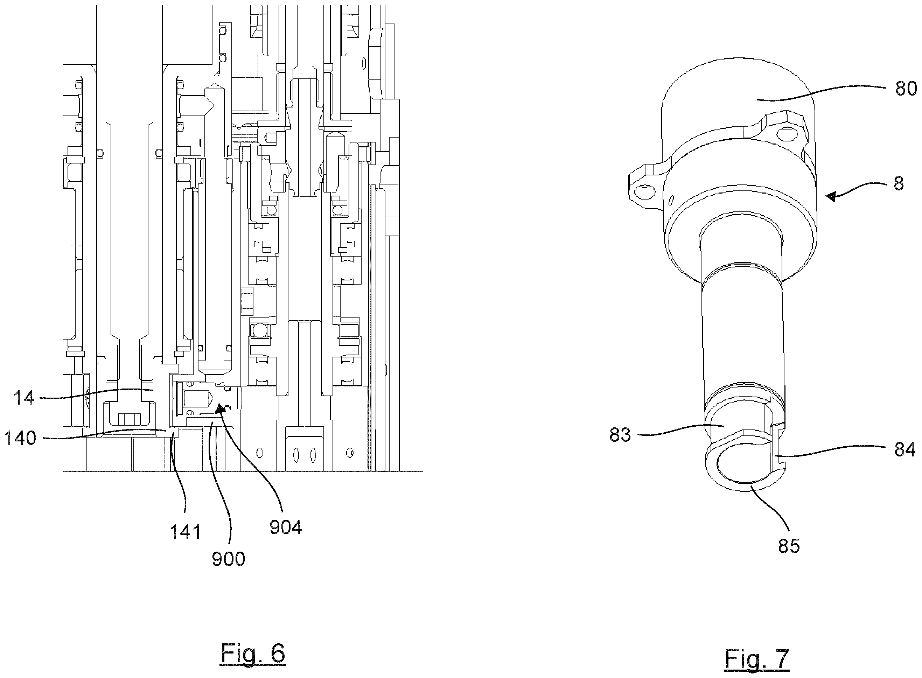

De manière alternative, les moyens de rappel élastique pourront être mis en œuvre pour que l'extrémité 905 forme saillie à l'intérieur du fourreau 90 pour former une butée pour le pour le coussinet 95 prévenant que l'ensemble fonctionnel coulisse à l'intérieur du fourreau au-delà de sa position illustrée à la figure 5 ou 6.

En outre (dans les deux variantes de fonctionnement du vérin 904 et de l'extrémité 905), le fourreau loge à chacune de ses extrémités un segment d'arrêt (non représenté) formant chacun une butée d'arrêt pour l'ensemble fonctionnel. Ainsi, un ensemble fonctionnel de module de perçage peut coulisser à l'intérieur du fourreau entre ces segments d'arrêt tant que l'extrémité 905 ne forme pas saillie dans le logement 950 ou directement dans le fourreau.

Le module de perçage comprend une cloche 160 solidaire de l'arbre de sortie 91 et liée en mouvement à celui-ci. Cette cloche comprend des trous radiaux 161.

Un module de vissage pourra être réalisé avec une structure sensiblement identique à celle du module de perçage. Dans ce cas, les moyens de fixation 93 d'un outil coupant seraient remplacés par des moyens de solidarisation d'une douille ou d'une empreinte de vissage à l'arbre de sortie. Cela pourrait supposer que l'avance de la broche 51 soit pilotée de telle sorte que l'avance par tour de la broche soit sensiblement égale au pas de la vis de telle sorte à ce que la douille ou l'empreinte de vissage avance de façon synchrone avec la vis. Une téléscopie pourrait en outre être nécessaire pour permettre l'embectage.

### Module support de rivet

Le module support de rivet 200 permet le maintien de rivet et comprend, comme le module de perçage, un fourreau 90.

Ce fourreau 90 présente une forme tubulaire et une section globalement annulaire.

Le fourreau 90 comprend un doigt latéral 900 formant saillie sur sa paroi latérale.

Le fourreau 90 comprend une rainure latérale 901 qui est ménagée de manière diamétralement opposée et décalée suivant l'axe longitudinal du fourreau par rapport au doigt 900.

Le fourreau loge un élément tubulaire 201 qui présente à l'une de ses extrémités un épaulement 202 prévu pour venir en appui contre un épaulement 203 de forme complémentaire ménagé à une extrémité du fourreau 90.

Son extrémité opposée étant à proximité d'un épaulement 204 ménagé dans la partie inférieure du fourreau 90, sans toutefois être en contact avec cet épaulement pour permettre à de l'air sous pression de passer entre la surface externe de l'élément tubulaire 201 et la surface interne du fourreau 90, comme cela ressortira plus clairement par la suite.

L'élément tubulaire 201, qui constitue une chambre, loge un piston 205 qui y est monté mobile en translation.

Le piston 205 comprend à une extrémité une collerette 206 munie d'une rainure circonférentielle 207 logeant un joint torique 208. Ce joint torique 208 assure l'étanchéité entre le piston 205 et l'élément tubulaire 201.

L'épaulement 204 du fourreau 90 comprend également une rainure circonférentielle intérieure 209 logeant un joint torique 210 assurant l'étanchéité entre le piston 205 et le fourreau 90.

Le doigt latéral 900 du fourreau 90 loge une conduite d'air qui se prolonge le long du fourreau et qui est susceptible d'être mise en communication avec une conduite d'admission d'air sous pression 907 ménagée dans le dispositif, avec laquelle il se trouve en communication lorsqu'il se trouve au poste de travail du dispositif.

L'extrémité du piston 205 située du côté intérieur de l'épaulement 204 du fourreau 90 comprend un demi-crabot 211 dont la fonction sera explicitée ultérieurement.

L'autre extrémité du piston 205 porte une bague fendue 212 qui constitue un moyen de maintien di rivet à l'extrémité du piston.

Cette bague fendue 212 présente un alésage intérieur conique 213 dont le diamètre se resserre en partant de l'intérieur du piston 205 vers l'extérieur de celui-ci. Cette portion conique 213 débouche sur une rainure intérieure 214 de forme complémentaire de celle de l'extrémité de la tête 219 d'un rivet 216. Cette rainure 214 débouche elle aussi dans une portion intérieure conique 215 dont le diamètre se resserre en en direction de l'extérieur de la bague fendue 212.

Cette bague 212 présente une pluralité de rainures longitudinales (non représentées) pour lui permettre de se déformer lors de l'introduction et de l'extraction d'un rivet, comme cela sera décrit plus en détail par la suite.

La bague fendue 212 comprend au moins une rainure périphérique externe 217 logeant un élément de rappel élastique comme un joint torique ou un ressort (non représenté) assurant une fonction de moyen de rappel tendant, ainsi que cela sera expliqué plus en détail par la suite, à ramener la bague d'un état de libération dans lequel son diamètre intérieur est élargi, à un état de maintien dans lequel son diamètre intérieur est resserré.

L'élément tubulaire forme avec la bague fendu un élément de support d'élément de fixation.

Le piston est traversé par un alésage intérieur permettant le passage d'un rivet.

Plusieurs modules support de rivet pourront être prévu avec des pistons d'alésage intérieur de diamètre différent et de bague fendue de taille différente pour permettre le maintien de rivet de dimensions différentes.

Le piston 205 est prévu pour être entrainé en rotation et/ou en translation. Il constitue ainsi un organe mobile.

Le piston 205 est mobile en translation dans l'élément tubulaire 201 entre une première position extrême dans laquelle son épaulement 207 vient en butée contre un circlips 218 prévu à cet effet à l'extrémité de l'élément tubulaire 201 située à l'opposée de celle située à proximité de l'épaulement 204 du fourreau, et une deuxième position extrême dans laquelle son épaulement 207 vient en butée contre l'épaulement 204 du fourreau.

Un module du type de celui de support rivet pourrait être mis en œuvre pour supporter un autre type d'élément de fixation comme par exemple une vis. Dans ce cas, la bague fendue aurait bien entendu une forme adaptée à celle de la tête d'une vis plutôt qu'à celle de la tête d'un rivet.

### Module de support de fixation temporaire

Le module de support de fixation temporaire 300 comprend un fourreau 90.

Ce fourreau 90 présente une forme tubulaire et une section globalement annulaire.

Le fourreau 90 comprend un doigt latéral 900 formant saillie sur sa paroi latérale.

Le fourreau 90 comprend une rainure latérale 901 qui est ménagée de manière diamétralement opposée et décalée suivant l'axe longitudinal du fourreau par rapport au doigt 900.

Ce doit 900 loge une conduite d'air 906 qui se prolonge le long du fourreau et qui est susceptible d'être mise en communication avec une conduite d'admission d'air sous pression 907 ménagée dans le dispositif, avec laquelle il se trouve en communication lorsqu'il se trouve au poste de travail du dispositif.

Le fourreau 90 loge un élément tubulaire 301. Cet élément tubulaire 301 présente un épaulement 302 à l'une de ses extrémités venant en appui contre un épaulement 303 ménagé à l'intérieur du fourreau 90 à l'une de ses extrémités.

L'élément tubulaire 301 présente un deuxième épaulement 304 situé à proximité de la conduite d'air ménagée dans le doigt. Cet épaulement délimite une portion de plus faible diamètre de l'élément tubulaire.

L'élément tubulaire 301 présente une autre extrémité qui s'étend à proximité d'un deuxième épaulement 305 ménagé à l'intérieur du fourreau à l'autre extrémité de celui-ci. Un espace est toutefois ménagé entre les deux pour permettre le passage d'air.

L'élément tubulaire 301 délimite une chambre logeant un piston 306. Ce piston 306 comprend à l'une de ses extrémités un épaulement 307 présentant une rainure circonférentielle 308 logeant un joint torique 309 assurant l'étanchéité entre le piston 306 et l'élément tubulaire 301.

L'épaulement 305 du fourreau 90 comprend une rainure circonférentielle intérieure 310 logeant un joint torique 311 assurant l'étanchéité entre le fourreau 90 et le piston 306.

Le piston 306 est monté mobile en translation à l'intérieur de l'élément tubulaire 301 et du fourreau 90.

Le piston 306 comprend un premier alésage 312 logeant un tube d'entrainement 313 (organe mobile) monté mobile en translation et en rotation à l'intérieur de celui-ci.

Ce tube d'entrainement 313 comprend à l'une de ses extrémités une collerette 314 définissant une cloche 160 traversée par des trous radiaux 161.

Des moyens de rappel élastique 315, comme par exemples des rondelles élastiques ou un ressort, sont interposés entre la collerette 314 du tube d'entrainement 313 et l'épaulement 307 du piston 306. Ces moyens de rappel tendent à éloigner l'un de l'autre cette collerette et cet épaulement.

Le tube d'entrainement et le piston sont mobiles et liés en translation dans le module entre au moins :
- - une position rétractée dans laquelle ils s'étendent à l'intérieur dudit module, et
- - une position déployée dans laquelle au moins l'une de ces éléments s'étend au moins en partie en dehors du module, i.e. du fourreau.

La cloche 160 du tube d'entrainement 313 communique avec un premier alésage cylindrique 316, qui communique avec un deuxième alésage 317.

Ce deuxième alésage loge une première roue-libre 318.

Le deuxième alésage 317 communique avec un troisième alésage 320. Le troisième alésage 320 loge un élément de verrouillage 321 qui y est maintenu au moyen d'un circlips 322 logé d'une part dans une gorge 323 prévue à cet effet dans le tube d'entrainement 313 et d'autre part dans une gorge 324 prévue à cet effet dans l'élément de verrouillage 321.

Le module comprend des moyens de maintien d'une fixation temporaire dans le module. Ces moyens de maintien l'élément de verrouillage.

L'élément de verrouillage 321 se présente sous la forme d'une bague traversée par un alésage 325 présentant une portion excentrée 326 définissant un ergot de verrouillage 327 en saillie. L'élément de verrouillage 321 comprend un logement périphérique 328 logeant un moyen de rappel (non représenté), comme un ressort de compression, interposé entre l'élément de verrouillage 321 et le tube d'entrainement 313. L'élément de verrouillage 321 est mobile à l'intérieur du troisième alésage 320 latéralement selon une direction perpendiculaire à l'axe longitudinal du tube d'entrainement 313 entre au moins :
- une position de repos dans laquelle l'extrémité de l'ergot de verrouillage 327 est éloignée de l'axe longitudinal du tube d'entrainement 313 (elle se trouve rétractée), et
- une position de verrouillage dans laquelle l'extrémité de l'ergot de verrouillage 327 est rapprochée de l'axe longitudinal du tube d'entrainement 313 (elle se trouve déployée à l'intérieur du module).

Le ressort de compression tend à ramener l'élément de verrouillage 321 dans sa position de verrouillage.

Le premier alésage 312 du piston 306 communique avec un deuxième alésage 329 comprenant une portion conique 331 se resserrant vers une portion cylindrique 332.

Le deuxième alésage 329 du piston 306 communique avec un troisième alésage 333 débouchant.

Ce troisième alésage 333 loge une deuxième roue-libre 334 maintenue en place au moyen d'un circlips 335. Un joint torique 336 assure l'entrainement en rotation entre le troisième alésage 333 et la deuxième roue-libre 334.

Comme cela ressortira plus clairement par la suite, les première et deuxième roues-libres ont des capacités d'entrainement antagonistes.

### Ensemble unique d'entrainement et de contrôle

Le dispositif comprend un unique ensemble d'entrainement et de contrôle 5 des modules fonctionnels.

Cet ensemble d'entrainement et de contrôle 5 comprend une unique broche d'entrainement 51 dite broche principale. Cette broche est montée mobile en rotation et en translation selon un même axe, i.e. selon son axe longitudinal. La broche est ainsi montée mobile en translation entre une position rétractée et une position déployée en direction du poste de travail.

Cet ensemble 5 comprend également des moyens moteurs 52 aptes à entrainer en mouvement la broche d'entrainement 51.

Dans ce mode de réalisation, ces moyens moteurs comprennent un moteur d'avance 510 et un moteur de rotation 511. Ils comprennent également une transmission T permettant d'entrainer en mouvement la broche 51 via les moteurs d'avance et/ou de rotation selon des mouvements de translation et/ou de rotation suivant son axe.

Cette transmission est du type comprenant une noix d'entrainement en translation 512 et une bague d'entrainement en rotation 513.

La bague d'entrainement en rotation 513 présente un alésage intérieur dont la périphérie intérieure comprend des clavettes 5131 de forme complémentaire de rainures 510 ménagées le long de la broche 51 selon son axe longitudinal. De cette manière, la broche 51 et la bague d'entrainement en rotation 513 sont liées en rotation selon l'axe de la broche mais libres en translation selon cet axe.

La noix d'entrainement en translation 512 présente un alésage intérieur taraudé 5121 de forme complémentaire d'une portion filetée 511 ménagé le long de la broche si bien qu'elles sont liées par une liaison hélicoïdale.

Ce type de transmission est connue en soi et n'est pas décrit plus en détail ici.

Un exemple de transmission de ce type est notamment décrit dans le brevet EP-B1-2 754 531 qui présente l'avantage de rendre la vitesse d'avance de la broche seulement dépendante de la fréquence de rotation du moteur d'avance.

D'autres architectures de transmission produisant le même effet pourraient être envisagées.

Ce type de transmission permet de décaler latéralement le ou les moteurs par rapport à la broche. Le ou les moteurs se trouvent alors à côté de la broche plutôt que dans le prolongement de celle-ci. Ceci améliore la compacité du dispositif, permet de réduire la distance au centre et ainsi de pratiquer des tâches à proximité d'une paroi, et encore de réduire le porte-à-faux. Dans l'exemple illustré, les axes des moteurs sont essentiellement parallèles à l'axe de la broche. Dans des variantes l'un ou l'autre de ces moteurs, ou bien les deux, pourra avoir un axe incliné par rapport à celui de la broche, notamment orthogonal.

Comme il sera décrit plus en détail par la suite, le dispositif comprend des moyens d'appareillage pour rendre alternativement solidaire en mouvement la broche d'entrainement et au moins un organe mobile d'un module fonctionnel appareillé à la broche.

L'unique ensemble d'entrainement et de contrôle 5 comprend classiquement un contrôleur 53 comprenant l'ensemble des composants nécessaires au pilotage du fonctionnement des moteurs et l'ensemble des actionneurs et autres capteurs du dispositif. Un tel contrôleur comprend notamment toutes les mémoires, programme(s) et processeur(s) nécessaires au pilotage du dispositif et à la réalisation des différentes tâches. Il comprend également des moyens de communication (émetteur-récepteur) aptes lui permettre de recevoir et de transmettre des données de façon filaire ou sans fil. Il peut également intégrer les composants nécessaires à l'alimentation des moteurs (de type onduleurs). Il peut encore comprendre des moyens de saisie d'instructions (clavier, micro, souris écran tactile ou autre), un écran d'affichage, des moyens d'émission de signaux sonores... Un tel contrôleur peut être en tout ou partie solidarisé au bâti ou placé à distance.

L'unique ensemble d'entrainement et de contrôle 5 comprend des moyens de mesure d'au moins un paramètre physique représentatif d'au moins une caractéristique de fonctionnement des modules fonctionnels. Ces paramètres peuvent en particulier être représentatifs d'au moins une grandeur suivante :
- un couple sur au moins un organe mobile du module appareillé à la broche ;
- un effort axial sur au moins un organe mobile du module appareillé à la broche ;
- une position angulaire d'au moins un organe mobile du module appareillé à la broche ;
- une position axiale d'au moins un organe mobile du module appareillé à la broche.

Dans des variantes, les moyens de contrôle comprennent des moyens de mesure 530 de l'intensité électrique consommée par le ou les moteurs (capteur de courant) et de détermination, en fonction de l'intensité électrique mesurée, d'un couple et/ou d'un effort axial sur la broche et donc sur un ou plusieurs organes de sortie d'un module fonctionnel appareillé à la broche. Ce type de moyens de mesure et de détermination d'efforts ou de couples en fonction du courant consommé par un moteur sont connus en soit et non décrits en détail.

Dans des variantes, les moyens de contrôle comprennent un ou plusieurs capteurs d'angles 531 intégrés à un ou plusieurs du ou des moteurs. Un capteur d'angle est un capteur de mesure de la position angulaire du rotor d'un moteur. Les moyens de contrôle comprenant alors des moyens de détermination, en fonction de la position angulaire dudit rotor mesurée, de la position angulaire et/ou de la position axiale dudit au moins un organe mobile d'un module fonctionnel appareillé à la broche. Ce type de moyens de mesure et de détermination de position en fonction de la position angulaire du rotor d'un moteur sont connus en soit et non décrits en détail.

Dans des variantes, les moyens de mesure comprenant au moins un capteur de couple et/ou d'effort et/ou de position 532 intégrés à la transmission T et aptes à permettre la détermination d'un couple et/ou d'un effort axial sur la broche et/ou d'une position angulaire et/ou axiale de la broche, et donc par déduction d'un couple et/ou d'un effort axial et/ou d'une position angulaire et/ou d'une position axiale de l'au moins un organe mobile d'un module appareillé à la broche. Ce type de moyens de mesure et de détermination d'efforts ou de couples sont connus en soit et non décrits en détail.

Plusieurs des différents moyens de mesure mentionnés ci-dessus peuvent bien entendu être utilisés de manière combinée.

### Moyens de portage de modules : carrousel

Un dispositif selon l'invention comprend des moyens de portage d'une pluralité de modules fonctionnels. Ces moyens de portage permettent d'embarquer et de déplacer plusieurs modules fonctionnels. Dans le mode de réalisation illustré, le nombre de module susceptibles d'être embarqués est égal à 7 mais pourrait être alternativement différent (inférieur ou supérieur). Ce nombre pourra être pair ou impair.

Dans ce mode de réalisation, ces moyens de portage comprennent un carrousel 6 dit principal. Le carrousel principal 6 comprend, à la manière d'un barillet de révolver, une pluralité d'alvéoles 61 permettant chacune de loger un module fonctionnel.

Chaque alvéole 61 constitue un alésage débouchant de part et d'autre et s'étendant parallèlement à l'axe de rotation du carrousel. Les alvéoles 61 sont préférentiellement réparties de manière essentiellement uniforme autour de l'axe du carrousel.

### Postes fonctionnels

Le dispositif comprend plusieurs postes fonctionnels.

Le carrousel permet non seulement d'embarquer plusieurs modules fonctionnels, il permet également de les déplacer d'un poste à un autre. Il est pour cela, monté mobile en rotation autour de son axe qui s'étend essentiellement parallèlement à celui de la broche principale comme cela sera décrit plus en détail par la suite.

Dans ce mode de réalisation, les postes fonctionnels sont les suivants :
- un poste P1 de chargement/déchargement de modules fonctionnels ;
- un poste P2 de chargement de fixation temporaire (dans ce mode de réalisation, les postes P1 et P2 sont confondus pour former un poste multifonctions mais pourrait constituer deux postes distincts) ;
- un poste P3 de chargement de rivet ;
- un poste P4 d'enduction de rivet ;
- un poste P5 de travail dans le prolongement de la broche unique 51 et auquel peuvent être réalisées, selon le module situé à ce poste, des opérations de :
   - perçage et/ou fraisurage ;
   - pose de rivet ;
   - pose de fixation temporaire.

### Poste de chargement/déchargement de modules fonctionnels

Le poste P1 de chargement/déchargement de modules fonctionnels permet d'introduire un à un des modules fonctionnels dans des alvéoles du carrousel et de les en extraire.

Au niveau de ce poste, le dispositif comprend un vérin 13 dont le piston 11, qui porte un ergot 10, est mobile en translation dans une chambre 12 selon un axe orthogonal à l'axe d'une alvéole du carrousel amenée au poste de chargement/déchargement.

La fonction de ce vérin sera décrite ultérieurement.

### Poste de chargement de fixation temporaire

Le dispositif comprend un poste P2 de chargement de fixation temporaire pour insérer une fixation temporaire dans un module de support de fixation temporaire amené à ce poste par le carrousel.

Dans ce mode de réalisation, le poste de chargement de fixation temporaire se situe au poste de chargement/déchargement de modules fonctionnels. Ces deux postes constituent ainsi un unique poste fonctionnel double fonction.

Le poste de chargement de fixation temporaire pourrait toutefois être situé à un autre emplacement.

Ce poste P2 comprend un dispositif d'amenée de fixation temporaire 1000. Ce dispositif comprend un actionneur de type cartouchière permettant de déplacer en translation des fixations temporaires 1001 jusqu'à les placée dans l'axe du module de support de fixation temporaire amené au poste P2 de chargement de fixation temporaire.

Ce poste P2 comprend également un vérin de chargement 1002. Ce vérin 1002 est placé dans l'axe d'un module de support de fixation temporaire 300 amené par le carrousel 6 au poste de chargement de fixation temporaire.

Ce vérin 1002 est disposé en amont d'une fixation temporaire 1001 placée par la cartouchière 1000 dans l'axe du poste P2 de chargement de fixation temporaire pour permettre d'agir sur celle-ci pour l'introduire dans le module de support 300, comme cela sera expliqué plus en détail par la suite.

Le poste P2 de chargement de fixation temporaire comprend encore un dispositif de maintien de fixation temporaire dans le module de support de fixation temporaire 300 lors de son introduction dans ce module. Ce dispositif de maintien comprend une fourchette 1003 essentiellement en forme de L dont l'extrémité comprend deux doigts espacés pour former un espace de réception d'une fixation temporaire.

Cette fourchette 1003 est placée à la sortie d'un module de support de fixation temporaire 300 placé au poste P2 de chargement de fixation temporaire et est montée mobile en rotation autour d'un axe 1004 entre :
- une position de maintien dans laquelle son extrémité munie de doigts s'étend essentiellement perpendiculairement au module de support de fixation temporaire et forme une butée d'arrêt contre laquelle peut venir en appui une fixation temporaire lors de son introduction dans un module de support de fixation temporaire, et
- une position de libération dans laquelle la fourchette est pivoté autour de son axe selon la flèche C de sorte que son extrémité munie de doigts soit dégagée du module pour lui permettre d'être entrainé en rotation par le carrousel.

Le déplacement de la fourchette 1003 est assuré au moyen d'un vérin 1005.

### Poste de chargement de rivets

Le dispositif comprend un poste P3 de chargement de rivets.

Ce poste P3 de chargement de rivets comprend un vérin de chargement 1006. Ce vérin 1006 est placé dans l'axe d'un module de support de rivet amené par le carrousel au poste de chargement de rivets.

Ce poste P3 comprend un dispositif de réception et de transfert de rivets depuis un zone d'alimentation (ou d'amenée) de rivets 1007 (ou autre élément de fixation comme des vis ou autre) jusqu'à une zone de distribution de rivets ou de réception de rivets comme par exemple ici un module de support de rivet 200 situé au poste P3 de chargement de rivet.

Le dispositif de réception et de transfert comprend un carrousel dit secondaire 1008. Le carrousel constitue un élément de support. Ce carrousel 1008 comprend, à la manière d'un barillet de révolver, une pluralité d'alvéoles 1009 permettant chacune de loger un rivet.

Chaque alvéole 1009 constitue un alésage débouchant de part et d'autre et s'étendant parallèlement à l'axe de rotation du carrousel 1008. Les alvéoles 1009 sont préférentiellement réparties de manière essentiellement uniforme autour de l'axe du carrousel 1008.

Dans ce mode de réalisation, le nombre d'alvéoles est égale à six. Il pourra bien entendu est supérieur ou inférieur à 6.

Notamment le carrousel et ses alvéoles forment des moyens de réception d'élément de fixation. Le carrousel et ses moyens d'entrainement permet de déplacer des éléments de fixation d'une zone d'alimentation vers une zone de distribution.

Chaque alvéole 1009 présente un diamètre différent si bien que chaque alvéole permet de réceptionner des rivets 216 de tailles différentes.

Chaque alvéole 1009 comprend un orifice de réception 1090 et un orifice de distribution 1091 d'élément de fixation. L'orifice de réception 1090 permet d'insérer un élément de fixation dans une alvéole. L'orifice de distribution permet d'évacuer un élément de fixation en dehors de l'alvéole.

Le dispositif comprend des moyens de maintien d'un élément de fixation introduit dans une alvéole. Ces moyens de maintien préviennent l'extraction, à travers l'orifice orifice de réception, d'un élément de fixation situé dans une alvéole.

Dans ce mode de réalisation, les moyens de maintien comprennent un élément déformable 1092 muni d'une pointe formant harpon 1093 situé dans chaque alvéole. La pointe de chaque harpon est conformée pour permettre l'introduction d'un élément de fixation dans l'alvéole à travers son orifice de réception et prévenir l'extraction de l'élément de fixation à travers l'orifice de réception de l'alvéole. Ainsi, la pointe de chaque harpon est orientée vers l'orifice de réception de l'alvéole correspondante.

Le carrousel 1008 est monté mobile en rotation selon un axe essentiellement parallèle à l'axe de la broche principale 51, entre une plaque de support 1011 et une plaque de maintien 1012 de rivet. La plaque de maintien constitue un moyen de maintien d'éléments de fixation dans les alvéoles.

La plaque de support 1011 est solidaire du bâti et fixe par rapport à celui-ci. Elle est traversée par autant de trous 1013 que le carrousel 1008 comprend d'alvéoles 1009. Chaque trou présente un diamètre différent correspondant à celui d'une alvéole. La plaque support 1011 porte un arbre 1014 autour duquel le carrousel 1008 est monté mobile en rotation.

Un des trous 1013 de la plaque support 1011 se trouve dans l'axe du vérin de chargement 1006.

La plaque de maintien 1012 comprend, dans l'axe de chaque trou 1013 de la plaque de support 1011, des trous d'échappement d'air 1015. Elle est toutefois traversée par une ouverture de distribution 1080, et non par des trous d'échappement d'air 1015, dans l'axe du vérin 1006. Le diamètre de l'ouverture de distribution 1080 permet le passage du plus gros rivet susceptible d'être embarqué dans le carrousel secondaire.

Le carrousel 1008 comprend le long de son contour périphérique extérieur des échancrures longitudinales 1016 qui s'étendent essentiellement parallèlement à l'axe du carrousel 1008. Ces échancrures forment des dents d'entrainement ainsi que cela ressortira plus clairement par la suite.

Le dispositif comprend des moyens de d'entrainement en rotation du carrousel autour de l'arbre.

Ces moyens d'entrainement en rotation comprennent :
- une premier vérin 1017 comprenant un piston 1018 mobile en translation dans une chambre 1019 ;
- un deuxième vérin 1020 comprenant un piston 1021 mobile en translation à l'intérieur d'une chambre 1022.

Le piston 1018 du premier vérin 1017 porte un cliquet 1023 qui est monté mobile en rotation par rapport au piston autour d'un axe 1024 essentiellement parallèle à l'axe de rotation du carrousel 1008.

Le cliquet 1023 comprend une surface d'appui 1025 prévue pour venir en appui contre une butée 1026 du piston 1018 définissant la position extrême d'entrainement.

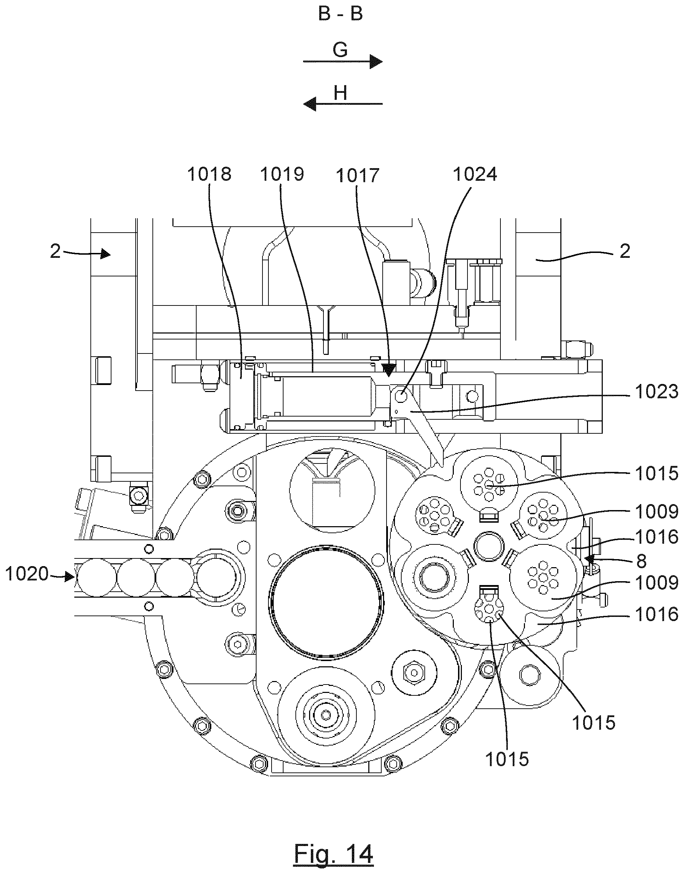

Le cliquet 1023 est mobile entre deux positions extrêmes, à savoir :
- une position déployée dans laquelle sa surface d'appui 1025 se trouve en appui contre la butée 1026 du piston 1018 si bien que son extrémité se trouve écartée du piston et au moins partiellement logée dans une échancrure 1016 du carrousel (cf. figure 14), et
- une position rétractée dans laquelle sa surface d'appui 1025 n'est pas en appui contre la butée 1026 du piston 1018 si bien que son extrémité se trouve rapprochée du piston 1018 et dégagée de toute échancrure 1016 du carrousel.

Des moyens de rappel (non représentés), comme par exemple un ressort ou autre, peuvent éventuellement être mise en œuvre pour agir sur le cliquet 1023 pour tendre à le ramener dans sa position déployée.

Le piston 1018 est mobile entre deux positions d'extrêmes, à savoir :
- une position de départ dans laquelle il se trouve en butée du côté gauche sur la figure 14 (dans la mesure ou le dispositif peut prendre n'importe quelle orientation dans l'espace, l'indication du côté gauche est purement illustrative en référence à la figure 14 pour des raisons de compréhension), et
- une position de fin dans laquelle il se trouve en butée du côté droit sur la figure 14 et le cliquet 1023 se trouve en position déployée entre deux échancrures 1016.

Dans la configuration illustrée à la figure 14, le piston 1018 de trouve dans sa position de début et le cliquet 1023 se trouve dans sa position déployée.

Le dispositif comprend un pion de blocage 8 monté mobile entre une position de blocage dans laquelle il est amené en butée contre le carrousel 1008 entre deux échancrures 1016 consécutives pour empêcher la rotation du carrousel autour de son axe, et une position de libération dans laquelle il est dégagé du carrousel pour autoriser sa rotation. Ce pion de blocage 8 est solidaire de la plaque de support 1011 au moyen d'une lame ressort 1027 qui tend à le maintenir dans sa position de blocage. Il constitue un moyen de blocage et d'indexation du carrousel 1008 dans des positions dans lesquelles une alvéole 1009 du carrousel 1008 se trouve dans l'alignement du vérin de chargement 1006, i.e. à la zone de distribution. Préférentiellement, au moins une autre alvéole se situe alors à une zone d'alimentation.

Pour entrainer en rotation le carrousel 1008 dans le sens horaire, de l'air sous pression est injecté dans la chambre 1019 de sorte à déplacer le piston 1018 selon la flèche G dans sa position de fin. Au cours de ce déplacement, la surface d'appui 1025 du cliquet 1023 est en butée contre la butée 1026 du piston 1018 si bien que le cliquet 1023 est bloqué en rotation dans le sens horaire. Le carrousel 1008 est ainsi entrainé en rotation dans le sens horaire jusqu'à ce que le piston 1018 se trouve en butée dans sa position de fin. Une nouvelle alvéole 1009 du carrousel 1008 se trouve alors dans l'alignement du vérin de chargement 1006. Au cours du déplacement du carrousel 1008, le pion de blocage 8 glisse contre la surface périphérique du carrousel 1008 et est progressivement déplacé depuis sa position de blocage à sa position de déblocage contre l'effet de la lame ressort 1027 puis de nouveau dans sa position de blocage sous l'effet de la lame ressort 1027 si bien que le carrousel 1008 est maintenu immobile.

Le vérin 1017 est actionné selon la flèche H pour revenir dans sa position de début. Au cours de ce déplacement, le cliquet 1023 glisse contre la surface périphérique du carrousel 1008 et passe progressivement de sa position déployée à sa position rétractée puis à sa position déployée en tournant autour de son axe.

Le carrousel 1008 peut de nouveau être entrainé en rotation dans le sens horaire en réitérant ce processus.

Le piston 1021 du deuxième vérin 1020 porte un cliquet 1028 qui est monté mobile en rotation par rapport au piston 1021 autour d'un axe 1029 essentiellement parallèle à l'axe de rotation du carrousel 1008.

Le cliquet 1028 comprend une surface d'appui 1030 prévue pour venir en appui contre une butée 1031 du piston 1021 définissant la position extrême d'entrainement.

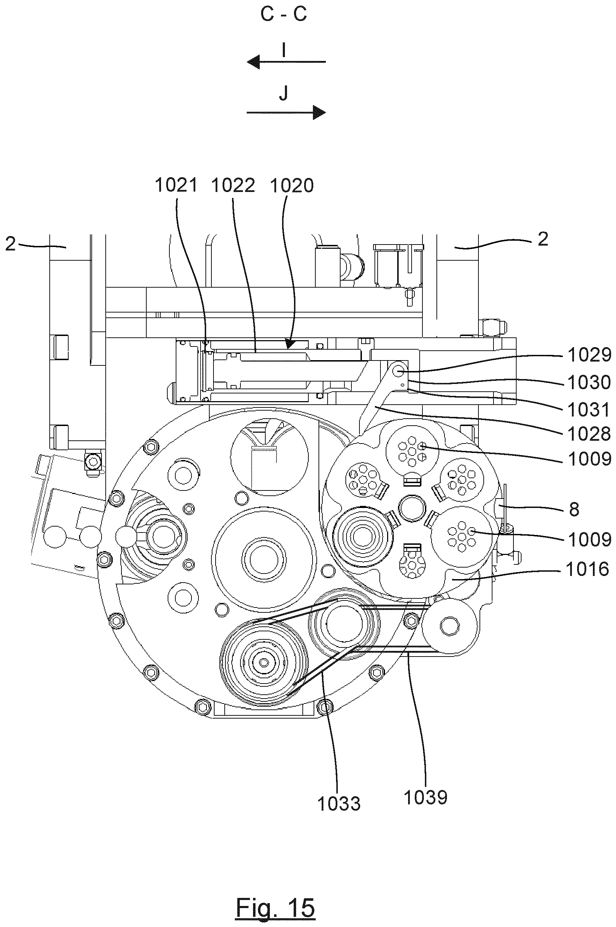

Le cliquet 1028 est mobile entre deux positions extrêmes, à savoir :
- une position déployée dans laquelle sa surface d'appui 1030 se trouve en appui contre la butée 1031 du piston 1021 si bien que son extrémité se trouve écartée du piston 1021 et au moins partiellement logée dans une échancrure 1016 du carrousel 1008 (cf. figure 15), et
- une position rétractée dans laquelle sa surface d'appui 1030 n'est pas en appui contre la butée 1031 du piston 1021 si bien que son extrémité se trouve rapprochée du piston 1021 et dégagée de toute échancrure 1016 du carrousel. 1008

Des moyens de rappel (non représentés), comme par exemple un ressort ou autre, peuvent éventuellement être mise en œuvre pour agir sur le cliquet 1028 pour tendre à le ramener dans sa position déployée.

Le piston 1021 est mobile entre deux positions d'extrêmes, à savoir :
- une position de départ dans laquelle il se trouve en butée du côté droit sur la figure 15 (dans la mesure ou le dispositif peut prendre n'importe quelle orientation dans l'espace, l'indication du côté droit est purement illustrative en référence à la figure 15 pour des raisons de compréhension), et
- une position de fin dans laquelle il se trouve en butée du côté gauche sur la figure 15 et le cliquet 1028 se trouve en position déployée entre deux échancrures 1016.

Dans la configuration illustrée à la figure 15, le piston 1021 de trouve dans sa position de fin et le cliquet 1028 se trouve dans sa position déployée.

Pour entrainer en rotation le carrousel 1008 dans le sens antihoraire, de l'air sous pression est injecté dans la chambre 1022 de sorte à déplacer le piston 1021 selon la flèche I dans sa position de fin. Au cours de ce déplacement, la surface d'appui 1030 du cliquet 1028 est en butée contre la butée 1031 du piston 1021 si bien que le cliquet 1028 est bloqué en rotation dans le sens antihoraire. Le carrousel 1008 est ainsi entrainé en rotation dans le sens antihoraire jusqu'à ce que le piston 1021 se trouve en butée dans sa position de fin. Une nouvelle alvéole 1009 du carrousel 1008 se trouve alors dans l'alignement du vérin de chargement 1006. Au cours du déplacement du carrousel 1008, le pion de blocage 8 glisse contre la surface périphérique du carrousel 1008 et est progressivement déplacé depuis sa position de blocage à sa position de déblocage contre l'effet de la lame ressort 1027 puis de nouveau dans sa position de blocage sous l'effet de la lame ressort 1027 si bien que le carrousel 1008 est maintenu immobile.

Le vérin 1020 est actionné selon la flèche J pour revenir dans sa position de début. Au cours de ce déplacement, le cliquet 2018 glisse contre la surface périphérique du carrousel 1008 et passe progressivement de sa position déployée à sa position rétractée puis à sa position déployée en tournant autour de son axe.

Le carrousel 1008 peut de nouveau être entrainé en rotation dans le sens antihoraire en réitérant ce processus.

Le carrousel 1008 et les cliquets 1023, 1028 forment des systèmes de roue à rochets.

Les premier 1017 et deuxième 1020 vérins ainsi que les cliquets 1023, 1028 correspondants ont des mouvements antagonistes en ce qu'ils permettent d'entrainer en rotation le carrousel 1008 dans des sens opposés.

La mise en œuvre des premier 1017 et deuxième 1020 vérins permet de mettre en ligne l'alvéole 1009 souhaitée avec la broche principale 51 plus rapidement en choisissant le sens de rotation du carrousel 1008 qui permettra la mise en ligne la plus rapide. Toutefois, un seul vérin pourra être mis en œuvre. Ceci permettra de simplifier le dispositif mais induira des temps d'alignement plus longs.

Les moyens d'entrainement en rotation du carrousel secondaire 1008 pourront être du type de ceux du carrousel principal 6, qui sont décrits plus loin. Dans ce cas, plutôt que de mettre en œuvre des vérins simples pour entrainer les cliquets, des vérins doubles pourront être mis en œuvre, i.e. vérins externes contenant un vérin inteme de blocage de cliquet.

L'indexation du carrousel secondaire pourra également être obtenue au moyen d'un pion de blocage commandé par un vérin comme pour le carrousel principal.

Ce dispositif comprend des moyens d'alimentation du carrousel en rivet. Les rivets sont amenés au travers d'un tube flexible poussés à l'intérieur de ce tube par un gaz sous pression.

### Poste d'enduction de rivets

Le dispositif comprend un dispositif d'enduction placé à un poste P4 d'enduction de rivets. Ce poste permet de déposer sur un rivet un mastic d'étanchéité.

Ce poste P4 d'enduction est situé à proximité du poste de travail P5.

Il comprend une première poulie 1032 mobile en rotation autour d'un axe essentiellement parallèle à celui de la broche principale 51 et liée en rotation au moyen d'une courroie 1033 avec une poulie motrice 1034 fixée à la broche principale 51 de manière telle qu'elle y est liée en rotation selon son axe de rotation mais non en translation par exemple au moyen de rainures.

Cette première poulie 1032 est liée en rotation au carter d'un vérin 1036 suivant un axe essentiellement parallèle à celui de la broche principale 51. Ce carter est monté mobile en rotation par rapport au bâti suivant le même axe. La tige du piston 1035 du vérin 1036 est liée en rotation avec le carter.

Ce piston 1035 est monté mobile en translation et en rotation selon un axe parallèle à l'axe de la broche principale 51 à l'intérieur d'une chambre 1037. Il porte à son extrémité un demi-crabot 1038 de forme complémentaire du demi-crabot 211 du module de support de rivet 200.

Une deuxième poulie 1039 est liée en rotation au carter du vérin 1036 suivant un axe essentiellement parallèle à celui de la broche principale 51. Cette deuxième poulie 1039 est liée en rotation au moyen d'une courroie 1040 à une troisième poulie 1041.

La troisième poulie 1041 est montée sur un arbre 1042 auquel elle est liée en rotation.

L'arbre 1042 porte à son extrémité opposée à celle à laquelle la poulie 1041 est fixée une vis mère 1043.

Cette vis mère 1043 comprend un filet dont le profil comprend un premier flanc 1044 destiné à engrener avec un sabot 1046 et un second flanc 1045 incliné par rapport à l'axe de la vis mère.

Le premier flanc est incliné de quelques degrés par rapport à la perpendiculaire à l'axe de la vis mère dans un sens tel que, le sabot, étant appliqué sur ce flanc, ait une tendance à glisser vers le fond de filet.

Ce sabot 1046 est monté l'extrémité du piston 1047 monté mobile en translation selon un axe essentiellement orthogonal à l'axe de la broche principale 51 dans la chambre 1048 d'un vérin 1049.

Le sabot 1046 est ainsi mobile entre au moins :
- une position d'engrènement dans laquelle il engrène avec la vis-mère 1043, et
- une position de désengrènement dans laquelle il n'engrène pas avec la vis-mère 1043.

Ce poste comprend des moyens de distribution de mastic comprenant une buse 1050 reliée à des moyens d'alimentation en mastic (non représentés) comprenant une pompe reliée d'une part à une réserve de mastic et d'autre part à la buse 1050 via des tuyaux prévus à cet effet.

La buse 1050 comprend une extrémité de distribution 1051 destinée à venir à proximité d'un rivet 216 porté pour un module de support de rivet 200 amené au poste d'enduction P4. Cette extrémité peut être droite (s'étendant dans un plan perpendiculaire à un axe perpendiculaire à l'axe du module de support de rivet 200). Cette extrémité est toutefois préférentiellement biseautée ou incurvée de sorte que la buse 1050 puisse venir en butée contre le rivet 216 tout en ménageant un orifice pour distribuer du mastic sur le rivet 216. Cette solution est préférée dans la mesure où elle permet de garantir simplement et efficacement la calibration du ou des filets de mastic déposés sur le rivet.

La buse 1050 est solidaire de l'extrémité d'un piston 1051 monté mobile en translation suivant un axe perpendiculaire l'axe du module de support de rivet dans la chambre 1052 d'un vérin 1053.

Le sabot 1046, la buse 1050 et leurs vérins 1049, 1053 respectifs sont montés dans un bloc 1054 solidaire du piston 1055 monté mobile en translation selon un axe parallèle l'axe de la vis-mère 1043 dans la chambre 1056 d'un vérin 1057.

Ce poste comprend des moyens de détermination (évaluation) de la longueur du rivet 216 amené au poste d'enduction. Ces moyens comprennent un palpeur 1058. Une extrémité du palpeur est solidaire du piston 1059 monté mobile en translation suivant un axe parallèle à l'axe de la vis-mère 1043 dans la chambre (non représentée) d'un vérin 1060. L'autre extrémité du palpeur 1058 comprend une pointe de centrage conique 1061 orientée vers un rivet 216 amené au poste d'enduction. Le vérin 1060 permet d'approcher et d'éloigner la pointe conique 1061 du rivet 216 pour venir palper son extrémité et ainsi déterminer sa longueur. Le palpeur 1058 défini alors une butée contre laquelle est susceptible de venir en appui le support 1062 de la buse 1050 pour déterminer une limite d'enduction au niveau de l'extrémité du rivet. On entend par extrémité du rivet, une zone située à l'extrémité du corps du rivet opposée à la tête du rivet.

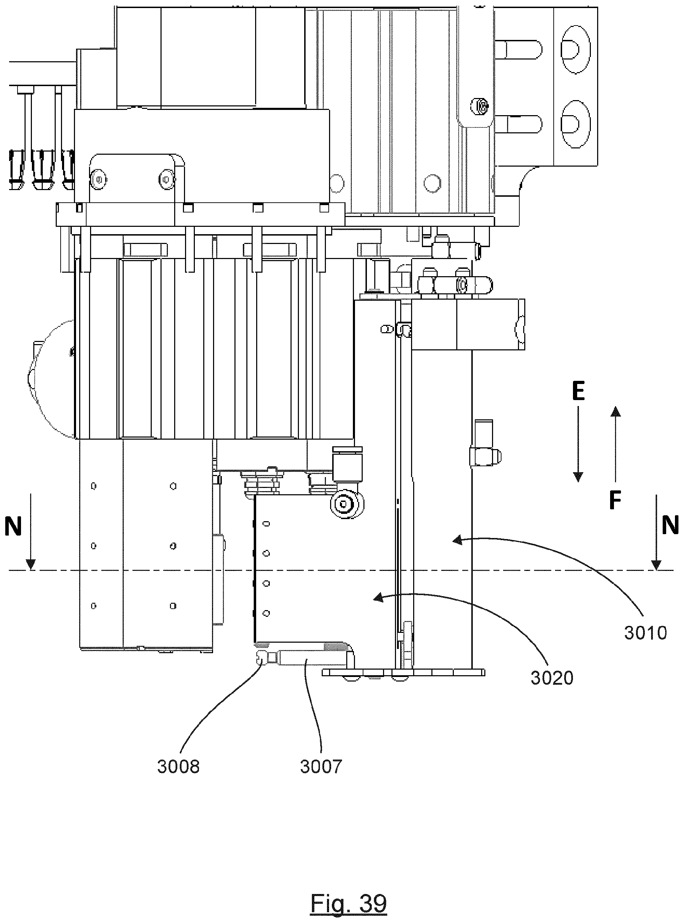

Les figures 39 à 41 illustrent une variante du poste d'enduction.

Selon cette variante, la buse 3000 est fixe par rapport au bâti et comprend :
- un bloc 3001 muni d'un alésage 3002 définissant une chambre et d'une pluralité de canaux de distribution 3003 de matériau d'enduction, ces canaux 3003 étant en communication fluidique avec la chambre 3002 et débouchant par des orifices de distribution 3004 ménagés le long d'un axe essentiellement parallèle à l'axe du corps de l'élément de fixation à enduire ;
- un tiroir 3005 monté mobile en translation à l'intérieur de la chambre 3002, ce tiroir 3005 présentant une rainure longitudinale borgne 3006 de part et d'autre ménagée selon ledit axe sur une longueur autorisant une mise en communication fluidique de la rainure 3006 avec l'ensemble des canaux 3003, la rainure 3006 étant reliée à des moyens d'alimentation en matériau d'enduction comprenant par exemple une pompe à mastic dont la sortie est reliée par une canalisation à la rainure 3006.

Un raccord 3011 permet d'injecter du mastic dans un des canaux 3003, lui-même en communication avec la rainure 3006.

Selon cette variante, le palpeur 3007, qui comprend une extrémité 3008 prévue pour venir en contact avec l'extrémité (pied) d'un élément de fixation, est à son extrémité opposée lié en translation avec le tiroir 3005.

Le palpeur 3007 est en outre lié en translation avec le piston 3009 d'un vérin 3010 dont l'axe s'étend essentiellement parallèlement à l'axe de la broche principale 51.

De cette façon, lorsque le palpeur est en contact avec l'extrémité d'un élément de fixation, le ou les canaux 3003 débouchant au-delà de cette extrémité opposée ne communiquent pas avec la rainure 3006.

Le canal 3003 situé à l'opposée de celui situé du côté de l'extrémité d'un élément à de fixation à enduire s'étend ai niveau de la zone de raccordement entre le corps et la tête de cet élément de fixation.

La buse permet ainsi de distribuer du mastic sous la forme de cordons parallèles sur le corps d'un élément de fixation entre son extrémité et la zone de raccordement entre son corps et sa tête.

### Poste de travail

Le poste de travail P5 est situé dans le prolongement de la broche principale 51.

Ce poste permet de réaliser différentes opérations selon le module fonctionnel amené à son niveau, en l'occurrence :
- perçage et/ou fraisurage ;
- pose de rivet ;
- pose de fixation temporaire.

Ce poste comprend, outre la broche principale 51, une broche secondaire 170 montée mobile en translation à l'intérieur de la broche principale 51 qui est creuse.

Cette broche secondaire 170 est solidaire du piston 172 monté mobile en translation suivant l'axe de la broche principale 51 dans la chambre 171 d'un vérin 17. La broche secondaire constitue la tige de ce vérin.

Le poste de travail comprend des moyens d'appareillage 16 de modules fonctionnels. Les moyens d'appareillage comprennent des moyens de type à connexion rapide. Dans ce mode de réalisation, ils comprennent :
- la cloche 160 de certains modules fonctionnels comprenant des trous radiaux 161 ;
- un élément mâle 162 solidaire de la broche principale d'entrainement 51 et lié en mouvement à celle-ci et susceptible de venir se loger dans la cloche 160 ;
- des éléments de verrouillage (billes ou galets) 163 solidaires de l'élément mâle 162 et situés dans le prolongement des trous radiaux 161 lorsque l'élément mâle 162 se trouve logé dans la cloche 160 : de manière préférentielle, ces éléments de verrouillage comprennent un corps cylindrique prévu pour coulisser dans des trous radiaux 1620 de l'élément mâle 162 pour de sorte que leur extrémité puisse venir se loger dans les trous radiaux 161 de la cloche 160, et une tête en portion de sphère de diamètre plus large que le corps cylindrique pour les empêché d'être évacués de l'élément mâle par la clé de verrouillage ;
- une clé de verrouillage 164 montée mobile en translation à l'intérieur de l'élément mâle 162 et comprenant une rampe circonférentielle 165 susceptible de venir agir contre les éléments de verrouillage 163 (en particulier leur tête cylindrique) pour les déplacer à l'intérieur de l'élément mâles 162 jusqu'à les faire coopérer avec les trous radiaux 162 de la cloche 160 et ainsi rendre la cloche et l'élément mâle solidaires en rotation et en translation.

La clé de verrouillage 164 est solidaire de l'extrémité de la broche secondaire 170.

La clé de verrouillage 164 est mobile entre au moins deux positions entre lesquelles elle peut être déplacée au moyen du vérin 17, à savoir :
- une position d'appareillage dans laquelle elle est rapprochée des éléments de verrouillage 163 de telle sorte que sa rampe circonférentielle 165 agit sur les éléments de verrouillage 163 pour les faire coulisser à l'intérieur des trous radiaux afin que leurs extrémités forment saillie en dehors de l'élément mâle pour venir le cas échéant se loger dans les trous radiaux 161 d'une cloche 160, et
- une position de désappareillage dans laquelle la clé de verrouillage 164 est éloignée des éléments de verrouillage 163 de sorte qu'elle n'agit pas sur eux si bien que leurs extrémités ne forme pas saillie en dehors de l'élément mâle pour être le cas échéant délogés des trous radiaux 161 d'une cloche 160.

Des moyens de rappels élastique peuvent éventuellement être mis en œuvre pour tendre à ramener les éléments de verrouillage 163 dans leur position de désappareiillage lorsque la clé de verrouillage n'agit pas sur eux.

Le dispositif comprend une conduite d'admission d'air sous pression 907 qui débouche au poste de travail de telle sorte qu'elle communique avec la conduite d'air 906 du fourreau d'un module fonctionnel se trouvant au poste de travail.

### Téléscopie

La broche secondaire 170 peut permettre de réaliser une fonction de téléscopie de différents modules fonctionnels, comme notamment les modules de support de rivet.

Cette téléscopie permet, ainsi que cela sera décrit plus en détail par la suite, d'amener la broche secondaire 170, initialement logée dans la broche principale dans une position rétractée, à sortir de la broche principale 51 pour atteindre une position déployée dans laquelle elle s'étend au moins en partie à l'extérieur de la broche principale, puis à les lier en translation de sorte que le déplacement de la broche principale 51 s'accompagne d'un déplacement de la broche secondaire 170 : la broche principale et la broche secondaire forment alors une même broche de grande longueur.

Pour cela, la broche secondaire 170 comprend à son extrémité opposée à celle de la clé de verrouillage 164, le piston 172 mobile en translation à l'intérieur de la broche principale 51 qui constitue sa chambre 171 du vérin 17.

La broche secondaire 170 comprend en aval du piston 172 une rainure circonférentielle 1063.

Le dispositif comprend des moyens de liaison en translation de ladite broche inteme avec ladite broche externe.

Plus précisément, la broche principale 51 porte une bague de déverrouillage 1064.

Cette bague de déverrouillage 1064 est fixe en translation avec le bâti. Elle est liée en rotation avec la broche principale au moyen de rainures (non représentées) qui permettent en outre à la broche principale de se translater à l'intérieur de la bague de verrouillage 1064. La bague de verrouillage 1064 est liée en rotation avec la poulie motrice 1034.

Cette bague de déverrouillage 1064 comprend un alésage avec une portion cylindrique 1065 suivie d'une portion tronconique 1066 d'élargissant vers une ouverture débouchant du côté de la broche 51 orientée vers un module fonctionnel amené au poste de travail.

La broche principale 51 porte un organe de verrouillage. Cet organe de verrouillage comprend une bague de verrouillage 1067 montée sur l'élément mâle 162.

Cette bague de verrouillage 1067 est traversée par un trou 1068 dont le diamètre permet le passage de la clé de verrouillage 164 et de la broche secondaire 170.

Cette bague de verrouillage 1067 comprend une portion latérale d'actionnement 1069 comprenant :
- une première portion de gorge périphérique externe 1070, et
- une surface externe 1072 contre laquelle est susceptible d'agir la bague de déverrouillage 1064.

La bague de verrouillage 1067 présente deux pans coupés opposés 1073 et est montée dans une rainure de forme complémentaire 1074 ménagée dans l'élément mâle 162.

La première portion de gorge 1070 forme, avec une deuxième portion de gorge périphérique 1070' ménagée sur l'élément mâle, une gorge périphérique logeant un élément de rappel élastique comme par exemple un joint torique ou un ressort.

La bague de verrouillage 1067 est mobile en translation dans la rainure 1074 de l'élément mâle 162 suivant un axe orthogonal à l'axe de la broche principale 51 entre :
- une position de verrouillage dans laquelle la portion d'actionnement 1069 est rapprochée de l'axe de l'élément mâle 162 grâce à l'action de l'élément de rappel élastique, l'extrémité périphérique 1075 étant engagée dans la rainure 1063 (ou logement) pratiquée dans la broche secondaire, et
- une position de déverrouillage dans laquelle la portion d'actionnement 1069 est écartée de l'axe de l'élément mâle 162, l'extrémité périphérique 1075 étant alors désengagée de la rainure 1063 pratiquée dans la broche secondaire.

Le passage dans la position de déverrouillage est obtenu en introduisant la portion de l'élément mâle 162 portant la bague de verrouillage 1067 dans la portion conique 1066 puis dans la portion cylindrique 1065 de la bague de déverrouillage 1064 qui agit de ce fait sur la bague de verrouillage 1067 pour la déplacer par rapport à l'élément mâle 162 contre l'effet du ressort de compression.

Il est alors possible de translater la broche secondaire 170 à l'intérieur de la broche principale 51 entre au moins :
- une position rétractée dans laquelle elle se trouve logée à l'intérieur de ladite broche externe, et
- une position déployée dans laquelle elle s'étend au moins en partie à l'extérieur de ladite broche externe.

Le passage dans la position de verrouillage est obtenu :
- après extraction de l'élément mâle 162 et de la bague de verrouillage 1067 de la bague de déverrouillage 1064, puis
- lorsque la rainure circonférentielle 1063 de la broche secondaire 170 arrive au niveau de la bague de verrouillage 1067, celle-ci passe dans sa position de verrouillage sous l'effet du ressort de compression si bien que l'extrémité de verrouillage 1075 de la bague de verrouillage 1067 vient se loger dans la rainure 1063 de la broche secondaire 170 en se rapprochant de l'axe l'élément mâle 162.

La broche secondaire 170 est alors liée en translation avec la broche principale 51 si bien que le déplacement en translation de la broche principale 51 s'accompagne d'un déplacement en translation de la broche secondaire 170 qui forment ensemble une même broche de grande longueur.

### Entrainement en rotation du carrousel principal

Comme cela a été mentionné plus haut, le carrousel est monté mobile en rotation autour de son axe qui s'étend essentiellement parallèlement à celui de la broche.

Le carrousel comprend le long de son contour périphérique extérieur des échancrures longitudinales 62 qui s'étendent essentiellement parallèlement à l'axe du carrousel. Ces échancrures forment des dents d'entrainement ainsi que cela ressortira plus clairement par la suite.

Le dispositif comprend des moyens d'entrainement en rotation du carrousel autour de son axe.

Ces moyens d'entrainement en rotation comprennent :
- une premier vérin 70 comprenant un piston 700 mobile en translation dans une chambre 701 ;
- un deuxième vérin 71 comprenant un piston 710 mobile en translation à l'intérieur d'une chambre 711.

Le piston 700 du premier vérin 70 porte un cliquet 702 qui est monté mobile en rotation par rapport au piston 700 autour d'un axe 703 essentiellement parallèle à l'axe de rotation du carrousel.

Le cliquet 702 comprend une surface d'appui 704 prévue pour venir en appui contre une butée 705 du piston 700 définissant la position extrême d'entrainement.

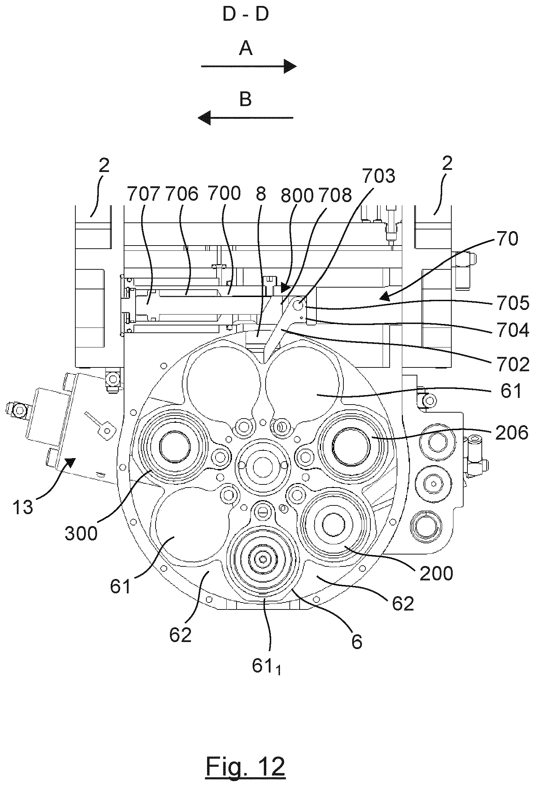

Le cliquet 702 est mobile entre deux positions extrêmes, à savoir :
- une position déployée dans laquelle sa surface d'appui 704 se trouve en appui contre la butée 705 du piston 700 si bien que son extrémité se trouve écartée du piston 700 et au moins partiellement logée dans une échancrure 62 du carrousel (cf. figure 12), et
- une position rétractée dans laquelle sa surface d'appui 704 n'est pas en appui contre la butée 705 du piston 700 si bien que son extrémité se trouve rapprochée du piston 700 et dégagée de toute échancrure 62 du carrousel .

Des moyens de rappel (non représentés), comme par exemple un ressort ou autre, peuvent éventuellement être mise en œuvre pour agir sur le cliquet pour tendre à le ramener dans sa position déployée.

Le piston 700 comprend une chambre intérieure 706 dans laquelle se trouve loger un piston inteme 707 dont l'extrémité 708 est biseautée.

Ce piston inteme 707 est monté mobile en translation dans la chambre 706 entre :
- une position de déblocage dans laquelle son extrémité biseautée 708 se trouve éloignée du cliquet 702 de sorte à laisser celui-ci libre en rotation autour de l'axe 703, et
- une position de blocage, susceptible d'être prise lorsque le cliquet 702 se trouve dans sa position déployée, dans laquelle son extrémité biseautée 708 se trouve en appuis contre le cliquet 702 afin de l'immobiliser en rotation autour de l'axe 703.

Le piston 700 est mobile entre deux positions d'extrêmes, à savoir :
- une position de départ dans laquelle il se trouve en butée du côté droit sur la figure 12 (dans la mesure ou le dispositif peut prendre n'importe quelle orientation dans l'espace, l'indication du côté droit est purement illustrative en référence à la figure 12 pour des raisons de compréhension), et
- une position de fin dans laquelle il se trouve en butée du côté gauche sur la figure 12 et le cliquet 702 se trouve en position déployée entre deux échancrures 62.

Dans la configuration illustrée à la figure 12, le piston 700 de trouve dans sa position de fin et le cliquet se trouve dans sa position déployée.

Le dispositif comprend un pion de blocage 8 monté mobile entre :
- une position d'indexation dans laquelle il est amené en butée contre le carrousel entre deux échancrures 62 consécutives pour empêcher la rotation du carrousel autour de son axe, et
- une position de libération dans laquelle il est dégagé du carrousel pour autoriser sa rotation.

Un moyen de rappel élastique, comme par exemple un ressort (non représenté), agit sur le pion 8 pour tendre à le ramener dans sa position de blocage. Un vérin 800 permet de bloquer le pion de blocage 8 dans sa position de blocage.

Le pion de blocage 8 constitue un moyen de blocage et d'indexation du carrousel dans des positions dans lesquelles au moins une alvéole 61 du carrousel se trouve à un poste fonctionnel. Dans ce mode de réalisation, lorsque le pion de blocage 8 se trouve en position de blocage dans une échancrure entre deux alvéoles consécutives, plusieurs alvéoles se trouvent dans l'alignement de différents postes fonctionnels, en l'occurrence :
- une alvéole se trouve au poste de chargement/déchargement de modules ;
- une alvéole se trouve au poste de chargement de fixation temporaire ;
- une alvéole se trouve au poste de chargement de rivet ;
- une alvéole se trouve au poste d'enduction de rivet ;
- une alvéole se trouve au poste de travail dans le prolongement de la broche unique 51.

Pour entrainer en rotation le carrousel dans le sens antihoraire, le vérin 800 est mis à l'échappement si bien que le pion de blocage 8 est maintenu dans sa position de blocage par le seul effet du ressort.

Le piston 700 se trouve dans sa position de départ (en butée à droite sur la figure 12).

Le cliquet 702 se trouve dans sa position déployée.

Le piston inteme 707 se trouve dans sa position de blocage si bien que le cliquet 702 est maintenu dans sa position déployée sans pouvoir tourner autour de son axe 703.

De l'air sous pression est ensuite injecté dans la chambre 701 de sorte à déplacer le piston 700 selon la flèche B depuis sa position de départ vers sa position de fin.

Au cours de ce déplacement, le cliquet engrène avec l'échancrure dans laquelle il se trouve si bien que le carrousel est ainsi entrainé en rotation dans le sens antihoraire. Le pion de blocage 8 glisse contre la surface périphérique du carrousel si bien qu'il passe progressivement de sa position d'indexation à sa position de libération puis de sa position de libération à sa position d'indexation lorsque le piston 700 se trouve en butée dans sa position de fin. Le vérin 800 est alimenté pour bloquer le pion de blocage dans sa position d'indexation si bien que le carrousel est maintenu immobile. Au moins une nouvelle alvéole 61 du carrousel se trouve alors à un poste fonctionnel.

Le piston inteme 707 est déplacé dans sa position de déblocage si bien que le cliquet est libre en rotation autour de l'axe 703 (dans la limite du débattement autorisé par sa forme est les surfaces qui l'entourent).

Le vérin 70 est actionné de sorte que le piston 700 se déplace selon la flèche A pour être ramené dans sa position de départ.

Au cours de ce déplacement, le cliquet 702 passe progressivement de sa position déployée à sa position rétractée puis de sa position rétractée à sa position déployée en glissant contre la surface périphérique du carrousel et en pivotant autour de l'axe 703 dans le sens horaire jusqu'à ce que le piston se trouve dans sa position de départ. Le cliquet se trouve alors loger dans une autre échancrure 62 du carrousel.

Le carrousel peut de nouveau être entrainé en rotation dans le sens antihoraire en réitérant ce processus.

Le piston 710 du deuxième vérin 71 porte un cliquet 712 qui est monté mobile en rotation par rapport au piston 710 autour d'un axe 713 essentiellement parallèle à l'axe de rotation du carrousel.

Le cliquet 712 comprend ainsi une surface d'appui 714 prévue pour venir en appui contre une butée 715 du piston 710 définissant la position extrême d'entrainement.

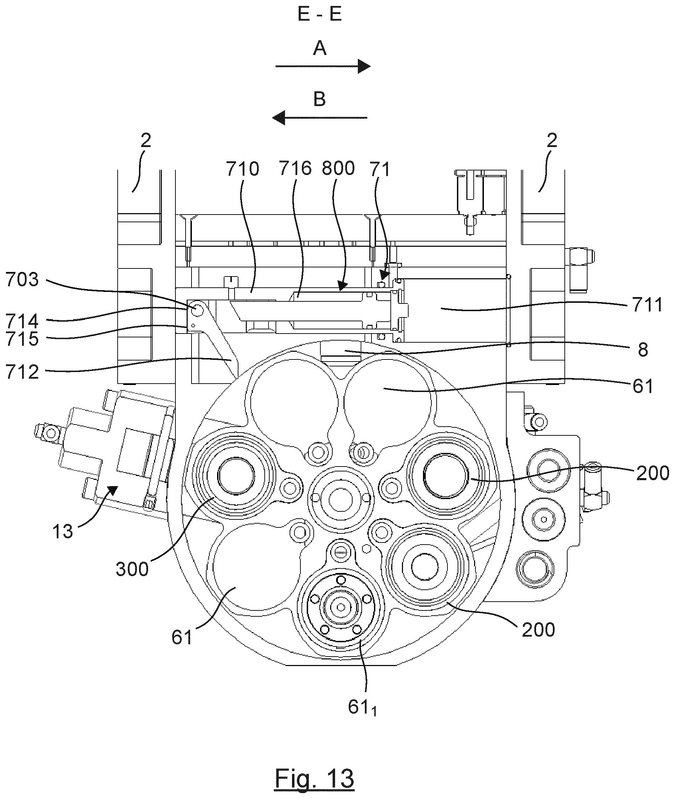

Le cliquet 712 est mobile entre deux positions extrêmes, à savoir :
- une position déployée dans laquelle sa surface d'appui 714 se trouve en appui contre la butée 715 du piston 710 si bien que son extrémité se trouve logée dans une échancrure 62 du carrousel (cf. figure 13), et
- une position rétractée dans laquelle son extrémité se trouve rapprochée du piston 710 et dégagée de toute échancrure 62 du carrousel (non représentée).

Des moyens de rappel (non représentés), comme par exemple un ressort ou autre, peuvent éventuellement être mise en œuvre pour agir sur le cliquet pour tendre à le ramener dans sa position déployée.

Le piston 710 comprend une chambre intérieure 716 dans laquelle se trouve loger un piston inteme (non représenté) dont l'extrémité est biseautée comme le piston inteme 707.

Ce piston inteme est monté mobile en translation dans la chambre entre :
- une position de déblocage dans laquelle son extrémité se trouve éloignée du cliquet de sorte à laisser celui-ci libre en rotation autour de l'axe 713, et
- une position de blocage, susceptible d'être prise lorsque le cliquet se trouve dans sa position déployée, dans laquelle son extrémité biseautée se trouve en appui contre le cliquet afin de l'immobiliser en rotation autour de l'axe 713.

Le piston 710 est mobile entre deux positions d'extrêmes, à savoir :
- une de départ dans laquelle il se trouve en butée du côté gauche sur la figure 13 (dans la mesure ou le dispositif peut prendre n'importe quelle orientation dans l'espace, l'indication du côté droit est purement illustrative en référence à la figure 12 pour des raisons de compréhension), et
- une position de fin dans laquelle il se trouve en butée du côté droit sur la figure 13 et le cliquet se trouve en position déployée entre deux échancrures 62.

Dans la configuration illustrée à la figure 13, le piston 710 se trouve dans sa position de départ et le cliquet 712 se trouve dans sa position déployée.

Pour entrainer en rotation le carrousel dans le sens horaire, le vérin 800 est mis à l'échappement si bien que le pion de blocage 8 est maintenu dans sa position de blocage par le seul effet du ressort.

Le piston 710 se trouve dans sa position de départ (en butée à gauche sur la figure 13).

Le cliquet 712 se trouve dans sa position déployée.

Le piston inteme se trouve dans sa position de blocage si bien que le cliquet est maintenu dans sa position déployée sans pouvoir tourner autour de son axe 713.

De l'air sous pression est ensuite injecté dans la chambre 711 de sorte à déplacer le piston 710 selon la flèche A puis sa position de départ vers sa position de fin.

Au cours de ce déplacement, le cliquet engrène avec l'échancrure dans laquelle il se trouve si bien que le carrousel est ainsi entrainé en rotation dans le sens horaire. Le pion de blocage 8 glisse contre la surface périphérique du carrousel si bien qu'il passe progressivement de sa position d'indexation à sa position de libération puis de sa position de libération à sa position d'indexation lorsque le piston 710 se trouve en butée dans sa position de fin. Le vérin 800 est alimenté pour bloquer le pion de blocage dans sa position d'indexation si bien que le carrousel est maintenu immobile. Au moins une nouvelle alvéole 61 du carrousel se trouve alors à un poste fonctionnel.

Le piston inteme est déplacé dans sa position de déblocage si bien que le cliquet est libre en rotation autour de l'axe 713 (dans la limite du débattement autorisé par sa forme est les surfaces qui l'entourent).

Le vérin 71 est actionné de sorte que le piston 710 se déplace selon la flèche B pour être ramené dans sa position de départ.

Au cours de ce déplacement, le cliquet 712 passe progressivement de sa position déployée à sa position rétractée puis de sa position rétractée à sa position déployée en glissant contre la surface périphérique du carrousel et en pivotant autour de l'axe 713 dans le sens antihoraire jusqu'à ce que le piston se trouve dans sa position de départ. Le cliquet se trouve alors loger dans une autre échancrure 62 du carrousel.

Le carrousel peut de nouveau être entrainé en rotation en sens horaire en réitérant ce processus.

Le carrousel et les cliquets forment des systèmes de roue à rochets.

Les premier 70 et deuxième 71 vérins ainsi que les cliquets correspondants ont des mouvements antagonistes en ce qu'ils permettent d'entrainer en rotation le carrousel dans des sens opposés.

La mise en œuvre des premier 70 et deuxième 71 vérins permet de placer un module au poste fonctionnel souhaité le plus rapidement en choisissant le sens de rotation du carrousel qui permettra d'assurer le trajet le plus court. Toutefois, un seul vérin pourra être mis en œuvre. Ceci permettra de simplifier le dispositif mais induira des temps d'alignement plus longs.

Les moyens d'entrainement en rotation du carrousel principal pourront être du type de ceux du carrousel secondaire. Dans ce cas, plutôt que de mettre en œuvre des vérins doubles pour entrainer les cliquets, i.e. vérins externes contenant un vérin inteme de blocage de cliquet, des vérins simples pourront être mis en œuvre.

L'indexation du carrousel secondaire pourra également être obtenue au moyen d'un pion de blocage non commandé par un vérin comme pour le carrousel secondaire.

Le carrousel 6 est monté mobile en rotation autour d'un arbre 8 fixe sur lequel il est guidé en rotation au moyen d'un palier 87 à aiguilles, à billes ou autre.

L'arbre 8 est creux et comprend à l'une de ses extrémités une portion élargie définissant une chambre 81 dans laquelle coulisse un piston 82 d'un vérin 80.

L'arbre 8 comprend à l'autre de ses extrémités une rainure circonférentielle 83 et est traversé par une lumière latérale 84 communiquant avec l'intérieur creux de l'arbre. L'arbre comprend en outre à cette extrémité un méplat 85 qui débouche dans la rainure 83.

Un élément de guidage 14 est solidarisé à l'extrémité de la tige 820 du piston 82.

Cet élément de guidage 14 comprend une portion formant saillie 140 qui s'étend à l'intérieur de la lumière 84 de l'arbre 8. Une rainure 141 est ménagée à l'extrémité de la portion formant saillie 140. Cette rainure 141 s'étend dans le prolongement de la rainure 83 de l'arbre avec laquelle elle forme une rainure circulaire.

Le fourreau 90 de chaque module fonctionnel est prévu pour être monté coulissant à l'intérieur des alvéoles 61 du carrousel 6.

L'extrémité du doigt latéral 900 de chaque du fourreau 90 de chaque module fonctionnel est prévue pour venir se loger selon la position angulaire du carrousel 6 alternativement dans la rainure 83 de l'arbre 8 et dans la rainure 141 de l'élément de guidage 14 de telle sorte que le fourreau soit maintenu solidaire de l'arbre 8 ou du piston 82 selon l'axe de rotation du carrousel 6, et soit ainsi immobilisé en translation selon l'axe de l'alvéole dans laquelle il se trouve.

La portion formant saillie 140 et les rainures 141 et 84 s'étendent à une position angulaire correspondant au doigt 900 d'un fourreau 90 d'un module fonctionnel 9 situé au poste de travail dans le prolongement de la broche 51.

La rainure 901 de chaque fourreau 90 est apte à loger l'ergot 10 placé à l'extrémité du piston 11 mobile en translation dans la chambre 12 du vérin 13.

Le vérin 13 est situé à un poste de chargement/déchargement du carrousel 6. Ce poste est situé de manière telle que lorsqu'une alvéole 61 du carrousel se trouve au poste de travail dans le prolongement de la broche 51, une autre alvéole se trouve au poste de chargement/déchargement (i.e. au poste de chargement d'agrafe dans ce mode de réalisation), une autre alvéole se trouve au poste de chargement de rivet et une autre alvéole se situe au poste d'enduction.

Le méplat 85 et l'ergot 10 s'étendent le long d'axes parallèles et perpendiculaires à par l'axe de rotation du carrousel 6.

### Chargement-déchargement de modules fonctionnels

Le chargement du carrousel 6 en modules fonctionnels 9 est obtenu de la manière suivante.

De l'air sous pression est injecté dans la chambre 12 du vérin 13 de façon à déplacer le piston 11 selon la flèche C afin de dégager l'ergot 10 de l'intérieur de l'alvéole 61 située au poste de chargement/déchargement.

Le vérin 1005 est actionné pour placer la fourchette 1003 dans sa position de libération.

Un module est introduit à l'intérieur de l'alvéole 61 située au poste de chargement/déchargement par le côté du carrousel 6 situé du côté de l'extrémité de l'arbre 8 où se trouve la rainure 84.

Le doigt 900 du fourreau 90 est introduit dans la rainure 83 en passant par le méplat 85 qui forme un passage d'introduction.

De l'air est ensuite introduit dans la chambre 12 du vérin 13 de sorte à déplacer le piston 11 selon la flèche D pour introduire l'ergot 10 dans la rainure 901 du fourreau 90. Le fourreau 90, et donc le module fonctionnel 9 correspondant, est ainsi maintenu dans l'alvéole 61 le long de l'axe de laquelle il est bloqué en translation.

La forme de cette rainure 901 permet l'arrivée du fourreau au poste de chargement/déchargement et son départ depuis ce poste alors que l'ergot 10 forme saillie dans la rainure 901.

Le carrousel 6 peut ensuite être entrainé en rotation pour placer l'alvéole suivante au poste de chargement/déchargement et le processus est réitéré pour charger un nouveau module fonctionnel 9.

Il est ainsi possible de charger les sept, ou plus généralement l'ensemble, des alvéoles du carrousel principal. Toutefois, seule certaines alvéoles peuvent être chargée selon les besoins. Il est également possible, dans d'autres mode de réalisation, que le carrousel principal comprenne plus ou moins de sept alvéoles.

Le déchargement d'un module fonctionnel 9 est obtenu, après avoir placé l'alvéole correspondant au poste de chargement/déchargement, en actionnant le vérin 13 pour dégager l'ergot 10 de la rainure 901 et laisser ainsi glisser le module fonctionnel 9 en dehors de l'alvéole 61 correspondante.

### Élément presseur

Le dispositif comprend un élément presseur 15 de forme tubulaire monté mobile en translation par rapport au bâti 2 selon l'axe de déplacement de la broche 51 et dans le prolongement de celle-ci. Un tel élément presseur 15 peut par exemple être utilisé au cours d'une opération de perçage pour exercer un effort de compression sur la structure à percer, notamment pour assurer le contact entre les plaques d'un empilement et éviter la formation de bavures entre ces plaques lors du perçage.

### Mise en place du dispositif mutli-tâche

Le bras robot auquel est solidarisé le dispositif est actionné pour venir placer le dispositif multi-tâche de sorte que le poste de travail soit positionné à l'emplacement de la structure à travailler auquel on souhaite réaliser une opération.

Le robot applique le dispositif contre la structure à travailler jusqu'à ce que les ventouses 41 viennent en appui contre la surface de celle-ci. Le vide est ensuite fait dans les ventouses pour assurer une liaison efficace entre le dispositif multi-tâches et la structure à travailler.

Un C de clampage 42 peut être utilisé de façon alternative aux ventouses.

### Opération de perçage et/ou fraisurage

Afin de réaliser une opération de perçage et/ou fraisurage, le carrousel principal est entrainé en rotation jusqu'à ce que le module de perçage souhaité se trouve au poste de travail.

Pour mémoire, les moyens de rappel élastique tendent à ramener le piston 903 du vérin dans une position dans laquelle son extrémité 905 est logée dans le logement 950 ou forme saillie dans le fourreau pour empêcher que l'ensemble fonctionnel du module de perçage ne coulisse dans le fourreau, l'extrémité 905 du piston 903 entrant en contact avec l'extrémité 951 du coussinet 95.

Le module de perçage et/ou fraisurage 9 doit ensuite être appareillé à la broche d'entrainement 51 de sorte que celle-ci puisse entrainer en mouvement l'arbre de sortie 91 qui constitue un organe mobile du module.

Pour cela, la broche 51 est entrainée en translation selon son axe en direction du module fonctionnel placé au poste de travail jusqu'à ce que l'élément mâle 162 se trouve logé dans la cloche 160.

De l'air sous pression est injecté dans la chambre 171 du vérin 17 afin de déplacer la broche inteme 170 selon la flèche E. La rampe 165 de la clé de verrouillage 164 agit alors sur les éléments de verrouillage 163 pour les placer dans leur position d'appareillage dans laquelle ils coopèrent avec les trous radiaux 161 de la cloche 160. La broche 51 et l'arbre de sortie 9 sont alors liés en rotation et en translation.

La position angulaire de l'élément mâle 162 de façon relative à la cloche 160 est aléatoire et en conséquence les éléments de verrouillage peuvent ne pas être parfaitement en ligne avec les trous radiaux de la cloche. Les têtes sphériques des éléments de verrouillage permettent d'induire une légère rotation relative de la cloche par rapport à l'élément mâle provoquant la mise en co-axialité des trous de la cloche et de l'élément mâle et autorisant ainsi la pénétration des éléments de verrouillage dans les trous de la cloche.

Un surnombre de trous dans la cloche par rapport à ceux de l'élément mâle facilite ce ré indexage.

Si toutefois les éléments de verrouillage restaient en équilibre entre 2 trous sans y pénétrer, le couple résistant résultant de la première opération de perçage induirait alors un déplacement relatif en rotation de l'élément mâle et de la cloche pour mettre en en ligne les éléments de verrouillage avec les trous radiaux et finaliser l'appareillage.

Le vérin 904 est actionné pour extraire l'extrémité 905 de son piston 903 du logement 950 du coussinet 95 ou pour que l'extrémité 905 ne forme plus saillie à l'intérieur du fourreau.

De l'air sous pression est ensuite injecté dans la chambre 81 du vérin 80 afin de déplacer le piston 82 selon la flèche E. Dans la mesure où l'équipage mobile est en butée à l'intérieur du fourreau contre le segment d'arrêt situé du côté de la cloche, l'actionnement du vérin 80 ne produit aucun effet. La broche principale 51 est ensuite entrainée en translation suivant la flèche E. Ceci a pour effets :
- de faire translater l'équipage mobile et le fourreau suivant la flèche E
- de faire suivre le même mouvement à l'élément d'entrainement 14 si bien que le module fonctionnel 9 de perçage, dont le doigt 900 coopère avec la rainure 141 de l'élément d'entrainement 14, est entrainé en translation suivant la flèche E le long de l'axe de la broche 51,
jusqu'à ce que le fourreau 90 vienne en appui contre l'élément presseur 15.

L'élément presseur suit alors le même mouvement l'amenant ainsi à venir se plaquer contre la structure à travailler et exercer un effort de pression sur la structure à travailler.

L'effort de placage de l'élément presseur 15 contre la surface à travailler est maintenu par le vérin 80 alors que le déplacement en translation de la broche 51 selon la flèche E s'accompagne d'une déplacement de l'équipage mobile à l'intérieur du fourreau qui est alors immobile en translation suivant la flèche E.

La broche 51 peut alors être entrainée en rotation et en translation et transmettre ses mouvements à l'arbre de sortie 91 du module fonctionnel 9 appareillé pour réaliser l'opération de perçage souhaitée.

L'appareillage de la broche principale et de l'arbre de sortie constitue ici une liaison en rotation et en translation.

En solidarisant au module une douille de vissage plutôt qu'un outil de coupe, il est possible de réaliser une opération de vissage/dévissage.

### Chargement de rivet

Préalablement à la réalisation d'une opération de pose de rivet, précédée ou non d'une opération d'enduction de mastic, un module de support de rivet 200 doit être chargé avec un rivet 216.

Pour cela, le carrousel principal 6 est entrainé en rotation de sorte à amener au poste P3 de chargement de rivet le module de support de rivet 200 correspondant à la taille du rivet 216 que l'on souhaite poser et le cas échéant enduire.

Une fois le module de support de rivet 200 amené au poste P3 de chargement de rivet, une opération de chargement de rivet est mise en œuvre.

Préalablement, l'alvéole 1009 du carrousel secondaire 1008 correspondant à la taille de ce rivet 216 est alimenté avec un rivet par les moyens d'alimentation du carrousel 1008 en rivet. Les rivets sont amenés au travers d'un tube flexible poussés à l'intérieur de ce tube par un gaz sous pression.

Le carrousel secondaire 1008 est ensuite entrainé en rotation de sorte à placer l'alvéole 1009 contenant le rivet au poste de chargement de rivet P3.

De l'air sous pression est injecté dans la conduite d'air 906 du module de support de rivet 200 de sorte à maintenir son piston 205 dans sa première position extrême en butée contre le circlips 218 du côté opposé à la bague fendue.

Le vérin 1006 est ensuite mis en œuvre pour pousser le rivet 216 contenu dans l'alvéole 1009 à l'intérieur du module de support de rivet 200 jusqu'à ce que la tête 219 du rivet 216 soit logée dans la bague fendue 213. Au cours de ce déplacement, la tête 219 du rivet 216 agit sur la bague fendue 213 pour l'élargir de sorte à venir se loger dans la rainure 214 et dans l'alésage conique 215 de la bague fendue 213. La bague 213 se resserre alors autour de la tête 219 du rivet 216 sous l'effet des joints toriques mis en œuvre à cet effet si bien que le rivet 216 ne peut plus sortir de la bague 213 en suivant le chemin inverse. Le rivet 216 se trouve alors maintenu dans le module de support de rivet 100 et son corps 220 forme saillie en dehors du module 200 au-delà de la bague fendue 213.

### Opération d'enduction de rivet

Pour réaliser une opération d'enduction d'un rivet, le module de support de rivet 200 préalablement chargé du rivet 216 qu'il est souhaité d'enduire de mastic est amené au poste d'enduction P4 en faisant tourner le carrousel principal 6.

Au cours de ce déplacement, le piston 205 du module de support de rivet reste en butée contre le circlips 218 sous l'effet des frottements des joints toriques assurant l'étanchéité de la chambre.

Il est possible de réaliser une enduction du type hélicoïdal, ou une enduction du type annulaire ou encore une enduction de cordons annulaires parallèles.

### Enduction hélicoïdale

Une enduction de type héliocoïdale consiste à déposer au moins un cordon annulaire de mastic à l'extrémité 221 du rivet, au moins un cordon annulaire de mastic sous la tête 219 du rivet et un cordon hélicoïdal le long du corps 220 du rivet entre l'extrémité et la tête du rivet.

Pour cela, il est procédé comme suit.

Préalablement à l'arrivée au poste d'enduction d'un module de support de rivet :
- le vérin 1053 est actionné pour maintenir l'extrémité de la buse 1050 dans sa position extrême dans laquelle elle se trouve la plus éloignée du corps 220 du rivet 216 ;
- le vérin 1047 est actionné de sorte à maintenir le sabot 1046 dans sa position de désengrènement ;
- le vérin 1060 est actionné de sorte que le palpeur 1058 se trouve dans sa position extrême du côté de l'extrémité 221 du rivet 216 ;
- le vérin 1057 est actionné de sorte que le bloc 1054 portant le sabot 1046 et la buse 1050 se trouve dans sa position extrême du côté de l'extrémité 221 du rivet 216.

Le support 1062 de la buse 1050 est alors en butée contre le palpeur 1058.

Le chambre du vérin 1057 portant le bloc 1054 est mise à l'échappement.

Le vérin 1036 est actionné de sorte à mettre en prise le demi-crabot 1038 qu'il porte avec le demi crabot 211 du piston du module de support de rivet 100 placé au poste d'enduction. Le piston constitue ici un organe mobile et la mise en coopération des deux demi-crabot constitue un appareillage indirect de la broche principale avec cet organe mobile. L'appareillage est ici une liaison en rotation.

Le demi-crabot 1038 porté par le vérin 1036 vient alors déplacer le piston 205 du module de support de rivet 100 en direction du palpeur 1058. Lorsque le vérin 1036 arrive en fin de course, le piston 205 du module est placé de telle sorte que la zone de raccordement entre la tête 219 et le corps 220 du rivet porté par le module se trouve à une position donnée. Il est à noter que chaque module de support de rivet est propre à supporter un rivet d'une taille donnée. La longueur selon l'axe de la broche 51 du piston 205 de chaque module de support de rivet est déterminée en fonction de la taille du rivet qu'il est destiné à supporter de sorte que, lorsque le vérin 1036 portant le demi crabot 1038 arrive en fin de course, la zone de raccordement entre la tête 219 et le corps 220 du rivet porté par un module se trouve toujours à la même position donnée suivant l'axe de la broche 51.

Le vérin 1060 est actionné pour déplacer le palpeur 1058 en direction de la tête 219 du rivet jusqu'à ce que la pointe conique 1061 vienne en appui contre l'extrémité 221 du rivet stoppant ainsi la course du vérin 1060.

Le palpeur 1058, contre lequel est en butée la buse 1050, déplace ainsi la buse au niveau de l'extrémité 221 du rivet (à une distance prédéterminée de l'extrémité du rivet).

Le vérin 1053 déplace la buse 1050 vers le corps 220 du rivet jusqu'à ce que son extrémité entre en contact avec le corps du rivet.

La broche principale 51 est entrainée en rotation de sorte à entrainer en rotation via les poulies et courroies d'une part le piston 205 du module et donc le rivet qu'il porte mais aussi la vis-mère 1043 au temps t0.

Dans le même temps, la pompe à mastic est mise en œuvre de sorte que la buse 1050 délivre du mastic au niveau de l'extrémité 221 du rivet.

Après une durée correspondant à un tour de vis mère 1043, le sabot 1046 est déplacé vers sa position d'engrènement avec la vis mère 1043 au moyen du vérin 1049.

Le contact entre le sabot 1046 et la surface 1045 du filet 1044 de la vis mère 1043 est finalisé après une fraction X d'un tour de vis mère 1043. Cette fraction de tour est nécessaire dans la mesure où lorsque le sabot entre en contact avec la vis, il est dans une position relative aléatoire telle qu'un espace entre le sabot et le flanc du filet subsiste. Ainsi l'entrainement en translation du sabot par la vis mère n'est effectif qu'après que cet espace se soit résorbé sous l'action d'une fraction aléatoire de tour X.

A ce stade, un cordon de mastic de 1 + X tour a été déposé au niveau de l'extrémité 221 du rivet.

Lorsque le sabot 1046 se trouve dans sa position d'engrènement, i.e. après finalisation du contact entre le sabot et la vis mère, la buse 1050 se met alors à se déplacer vers la tête 219 du rivet et la buse 1050 commence à déposer un cordon de mastic en spirale le long du corps 220 de rivet.

Lorsque le piston 1055 du vérin 1057 portant le bloc 1054 arrive en butée en étant déplacé depuis l'extrémité 221 vers la tête 219 du rivet, la buse 1050 arrive à la hauteur du raccordement entre le corps 220 et la tête 219 du rivet.

La rotation de la broche unique 51 est arrêtée après un temps écoulé depuis t0 permettant un nombre de tour de vis mère de 3 + Y, Y étant le nombre de tour de la spirale entre le cordon sur l'extrémité et le cordon sous tête du rivet. La connaissance de la longueur de rivet permet de connaitre la distance Z entre les cordons de l'extrémité et de tête, Y = Z / pas de vis mère (en faisant ici l'hypothèse que le rivet à enduire et la vis mère tourne à la même fréquence).

La longueur de cordon déposée sur l'extrémité pouvant être de 2 tours au plus justifie le nombre de tours total de 3 + Y pour avoir au moins un dépôt de 1 tour sous tête.

En même temps que la broche principale 51 est stoppée en rotation, la dépose de mastic est désactivée par mise hors pression de la pompe à mastic.

Au moment de l'arrêt de la broche unique 51, un cordon de mastic de 2 - X tour a été déposé sous la tête de rivet (3 tours moins (1 + X)).

Le sabot 1046 est déplacé dans sa position de désengrènement grâce au vérin 1049.

La buse 1050 est écartée du corps 220 de rivet grâce au vérin 1053.

La buse 1050 et le palpeur 1058 sont amenés en position extrême du côté de l'extrémité 221 du rivet respectivement grâce à l'extension des vérins 1057 et 1060.

Le carrousel principal 6 est entrainé en rotation pour amener le rivet enduit de mastic au poste de pose de rivet auquel se trouve un dispositif de pose de rivet.

### Enduction annulaire

Une enduction de type annulaire consiste à déposer au moins un cordon annulaire de mastic sous la tête 219 du rivet.

Pour cela, il est procédé comme suit.

Préalablement à l'arrivée au poste d'enduction d'un module de support de rivet 100 :
- le vérin 1053 est actionné pour maintenir l'extrémité de la buse 1050 dans sa position extrême dans laquelle elle se trouve la plus éloignée du corps 220 du rivet ;
- le vérin 1049 est actionné de sorte à maintenir le sabot 1046 dans sa position de désengrènement ;
- le vérin 1060 est actionné de sorte que le palpeur 1058 se trouve dans sa position extrême du côté de l'extrémité 221 du rivet.

Le vérin 1036 est actionné de sorte à mettre en prise le demi-crabot 1038 qu'il porte avec le demi crabot 211 du module de support de rivet 100 placé au poste d'enduction.

Le demi-crabot 1038 vient alors déplacer le piston 205 du module de support de rivet 100 en direction du palpeur 1058. Lorsque le vérin 1036 arrive en fin de course, le piston 205 du module est placé de telle sorte que la zone de raccordement entre la tête 219 et le corps 220 du rivet porté par le module 200 se trouve à une position donnée. Il est à noter que chaque module de support de rivet est propre à supporter un rivet d'une taille donnée. La longueur selon l'axe de la broche du piston de chaque module de support de rivet est déterminée en fonction de la taille du rivet qu'il est destiné à supporter de sorte que, lorsque le vérin portant le demi crabot arrive en fin de course, la zone de raccordement entre la tête et le corps du rivet porté par un module se trouve toujours à la même une position donnée.

Le vérin 1060 est actionné pour déplacer le palpeur 1058 en direction de la tête 219 du rivet jusqu'à ce que la pointe conique 1061 vienne en appui contre l'extrémité 221 du rivet stoppant ainsi la course du vérin 1060.

Le vérin 1057 est actionné pour venir en butée à son extrémité du côté de la tête 219 de rivet arrêtant ainsi la buse 1050 à la hauteur du raccordement entre le corps 220 et la tête 219 de rivet.

Le vérin 1053 déplace la buse 1050 vers le corps 220 du rivet jusqu'à ce que son extrémité entre en contact avec le corps 220 du rivet.

La broche principale 51 est entrainée en rotation de sorte à entrainer en rotation via les poulies et courroies d'une part le piston 205 du module et donc le rivet qu'il porte.

Dans le même temps, la pompe à mastic est mise en œuvre de sorte que la buse 1050 délivre du mastic au niveau de la zone de raccordement entre la tête 219 et le corps 220 du rivet.

La rotation de la broche principale 51 est arrêtée après avoir imprimer une rotation d'au moins un tour au rivet, à ce stade un cordon d'au moins un tour est déposé sous la tête 219 de rivet.

Dans le même temps la dépose de mastic est désactivée par mise hors pression de la pompe à mastic.

La buse 1050 est écartée du corps 220 de rivet grâce à la rétraction du vérin 1053.

La buse 1050 et le palpeur 1058 sont amenés en position extrême du côté de l'extrémité 221 du rivet respectivement grâce à l'extension des vérins 1057 et 1060.

Le carrousel principal 6 est tourné pour amener le rivet enduit de mastic au poste de travail pour poser le rivet.

### Enduction avec des cordons annulaires parallèles

Une enduction d'un rivet avec des cordons de mastic annulaires parallèles entre son extrémité et la zone de raccordement de son corps avec sa tête est obtenue de la manière suivante.

Le vérin 3010 est actionné pour déplacer le palpeur 3008 suivant la flèche E jusqu'à sa position extrême.

Un module support de rivet portant un rivet à enduire est ensuite amené au poste d'enduction.

Le demi-crabot 1038 est déplacé jusqu'en butée par le vérin correspondant de sorte à venir en prise avec le demi-crabot 211 du module et à déplacer le piston du module dans une position dans laquelle la zone de raccordement du rivet qu'il porte se trouve en alignement avec le canal 3003 de la buse situé à l'opposé de celui situé du côté d l'extrémité du rivet.

Le vérin 3010 est actionné suivant la flèche F pour que l'extrémité 3008 du palpeur vienne en contact avec l'extrémité du rivet.

Le tiroir 3005 coulisse alors à l'intérieur de la chambre 3002 de sorte à obturer les canaux qui s'étendent au-delà de l'extrémité du rivet.

Le rivet est ensuite entrainé en rotation sur un tour alors que la pompe à mastic est mise en œuvre pour distribuer du mastic. Ceci permet de déposer sur le corps du rivet simultanément une pluralité de cordons annulaires de mastic parallèlement entre l'extrémité et la zone de raccordement du rivet.

Une fois les cordons déposés, la rotation du rivet est stoppée, la pompe est arrêtée, le vérin est actionné suivant la flèche E pour éloigner le palpeur du rivet puis le carrousel principal est actionné pour déplacer le module portant le rivet enduit au poste de travail pour poser le rivet.

### Opération de pose de rivet

Le dispositif peut-être mis en œuvre pour procéder à la pose de rivets, préalablement enduit ou non de mastic, selon les cas. Il comprend donc un dispositif de pose de rivet.

Après l'arrivée au poste de travail P5 d'un module de support de rivet 200 portant un rivet, la pose de ce dernier, dans un trou préalablement réalisé dans la structure à travailler, est obtenue de la manière suivante.

La broche principale 51 est entrainée en translation selon son axe via le moteur d'avance.

La broche principale 51 vient alors en appui contre le piston 205 du module de support de rivet 200 si bien que celui-ci se déplace en translation à l'intérieur de la chambre depuis une position rétractée dans laquelle il s'étend à l'intérieur du fourreau vers une position déployée dans laquelle il s'étend au moins en partie à l'extérieur du fourreau jusqu'à venir en butée au fond de celle-ci et que le fourreau se translate dans l'alvéole du carrousel sur une distance suffisante pour venir engager l'extrémité 221 du rivet dans le trou correspondant (dans le cas d'un rivet à extrémité fileté, l'insertion de la portion filetée peut suffire).

Le piston du module constitue un organe mobile et l'appareillage constitue ici une simple mise en contact de la broche principale avec l'organe mobile de sorte à l'entrainer en translation dans un sens.

Le moteur d'avance est ensuite piloté de sorte à déplacer la broche principale 51 dans le sens inverse.

Au cours de ce déplacement de la broche principale, le piston 205 du module de support de rivet reste immobile à l'intérieur de sa chambre sous l'effet des frottements.

La broche principale 51 est translatée jusqu'à ce que ce qu'elle atteigne sa position extrême dans laquelle la portion de l'élément mâle 162 portant la bague de verrouillage 1067 se trouve logée dans la portion cylindrique 1065 de la bague de déverrouillage 1064 qui agit sur la bague de déverrouillage 1067 pour la déplacer dans sa position de déverrouillage.

La broche secondaire 170 est ensuite translatée à l'intérieur de la broche principale 51 en alimentant la chambre de son vérin 17 (jusqu'à venir en contact avec la tête du rivet).

Durant cette sortie de la broche secondaire, la rainure circonférentielle 1063 passe au travers de la bague de déverrouillage 1064.

Puis la broche principale 51 est avancée, la portion de l'élément mâle 162 sort de la portion cylindrique 1065, ainsi la bague de déverrouillage se trouve de nouveau appuyée contre la broche secondaire et lorsque cette bague arrive de nouveau au niveau de la rainure circonférentielle 1063, elle vient se loger dans la rainure 1063 sous l'action de l'élément de rappel élastique.

La broche secondaire 170 est alors liée en translation avec la broche principale 51 si bien que le déplacement en translation de la broche principale 51 s'accompagne d'un déplacement en translation de la broche secondaire 170 qui forment ensemble une broche longue.

La clé de verrouillage 164 vient alors pousser sur la tête 219 du rivet pour l'extraire de la pince et l'insérer complètement dans le trou.

Le rivet est ainsi évacué du module par des moyens d'évacuation qui permettent de l'insérer dans un trou et qui comprennent dans ce mode de réalisation notamment les broches principale et secondaire.

La lecture des courants des moteurs entrainant la broche principale, en l'occurrence du moteur d'avance, permet de connaître l'effet de poussée sur le rivet et de stopper la progression de la broche principale lorsque l'effet de poussé devient supérieur à un seuil prédéterminé correspondant à une insertion totale du rivet dans son trou.

Cette approche permet d'assurer une mise en place efficace d'un rivet avec des efforts plus importants que si la mise en place était réalisée avec le vérin central mis en œuvre pour contrôler l'élément presseur 15 et avec une meilleure précision compte tenu de la prise en compte des efforts de poussée enregistrée au niveau de la broche principale.

Une fois le rivet correctement inséré dans le trou, la broche principale 51 est déplacée vers sa position extrême dans laquelle la portion de l'élément mâle 162 portant la bague de verrouillage 1067 se trouve logée dans la portion cylindrique 1065 de la bague de déverrouillage 1064 qui agit de ce fait sur la surface externe de la portion latérale d'actionnement 1069 pour déplacer la bague de verrouillage 1067 par rapport à l'élément mâle 162 contre l'effet du ressort de compression dans sa position de déverrouillage.

La broche secondaire 170 est ensuite rentrée dans la broche principale 51 en actionnant son vérin 17.

Enfin, le piston 205 du module de support de rivet est rentré dans le fourreau en alimentant sa chambre en air comprimée jusqu'à venir en butée contre le circlips 218 et le fourreau 90 est rentré dans son alvéole grâce à l'action du vérin 80.

### Chargement de fixation temporaire

Un dispositif selon l'invention peut être mis en œuvre pour réaliser la pose de fixations temporaires.

Une fixation temporaire 2000 comprend classiquement un corps 2001, une extrémité 2002 déformable (expansible et rétractable) en pointe de harpon présentant une fente longitudinale et contenant un élément écarteur fixe par rapport au corps, et un élément rotatif 2003 qui lorsqu'il est tourné par rapport au corps, provoque l'écartement (expansion) du harpon puis sa rétractation dans le corps. Ainsi lorsque qu'après avoir été introduit dans un trou traversant 2 tôles, l'élément rotatif est tourné et serré par rapport au corps, le harpon s'écarte de l'autre coté des tôles par rapport au corps puis rentre dans le corps et provoque le placage des tôles l'une sur l'autre. Un exemple illustratif et non limitatif de fixation temporaire est décrit dans le document US 4 548 533.

Les fixations temporaires selon l'invention comprennent un corps et un élément rotatif de section cylindrique et de même diamètre et présentant des surfaces externes lisses et uniformes. Le corps et l'élément rotatifs sont séparés par un espace (logement) pour permettre leur verrouillage en position comme cela sera décrit plus en détail par ailleurs.

Préalablement à la réalisation d'une opération de pose de fixation temporaire, un module 300 de support de fixation temporaire doit être chargé avec une fixation temporaire.

Pour cela, le carrousel principal 6 est entrainé en rotation de sorte à amener au poste de chargement P2 le module de support de fixation temporaire.

Une fois le module de support de fixation temporaire amené au poste de chargement de fixation temporaire, une opération de chargement de fixation temporaire est mise en œuvre.

Le vérin 1005 est actionné pour placer la fourchette 1003 dans sa position de maintien.

La cartouchière 1000 est mise en œuvre pour placer une fixation temporaire 2000 dans l'axe du module de support de fixation temporaire.

La chambre du module de support de fixation temporaire est alimentée en air comprimé de sorte à maintenir le piston 306 dans une position libération dans laquelle son épaulement 307 est proche de la collerette 314 du tube d'entrainement 313. Dans cette position, la surface de l'alésage conique 331 du piston 306 agit sur l'élément de verrouillage 321 pour le maintenir dans sa position de repos dans laquelle l'extrémité de l'ergot de verrouillage 327 est éloignée de l'axe longitudinal du tube d'entrainement.

Le vérin de chargement 1002 est activé de manière telle que l'extrémité de sa tige sorte de sa chambre pour venir pousser la tête de l'élément rotatif 2003 de la fixation temporaire de sorte à introduire la fixation temporaire dans le module de support de fixation temporaire jusqu'à ce que la partie femelle 2001 vienne en butée contre la fourchette 1003.

L'élément rotatif 2003 de la fixation temporaire se trouve alors en prise avec la première roue-libre 318 alors que la corps 2001 se trouve en prise avec la deuxième roue-libre 33'.

La chambre du module de support de fixation temporaire est mise à l'air libre si bien que le piston 306 s'éloigne de la collerette 314 sous l'effet du ressort 315 jusqu'à atteindre une position de verrouillage. Au cours de ce déplacement, l'élément de verrouillage 321 retourne dans sa position de verrouillage sous l'effet du ressort logé dans le logement 328 : l'extrémité de l'ergot de verrouillage 327 sa trouve alors logée dans l'espace E entre la tête de l'élément rotatif 2003 et le corps de la fixation temporaire si bien que celle-ci est bloquée en translation à l'intérieur du module suivant son axe longitudinal.

Le vérin de chargement 1002 est ensuite rétracté dans sa position de départ puis le vérin 1005 est actionné de sorte à ramener la fourchette 1003 dans sa position de libération.

### Opération de pose de fixation temporaire

Le dispositif permet la pose de fixation temporaires et comprend ainsi un dispositif de pose de fixation temporaire.

Afin de réaliser la pose d'une fixation temporaire, un module de support de fixation temporaire dans lequel une fixation temporaire a été introduite est amené avec le carrousel principal au poste de travail.

Le module de support de fixation temporaire doit ensuite être appareillé à la broche principale.

Pour cela, la broche 51 est entrainée en translation selon son axe en direction du module fonctionnel placé au poste de travail jusqu'à ce que l'élément mâle 162 se trouve logé dans la cloche 160.

Une légère pression d'air peut être introduite dans la chambre du module afin que le piston 306 exerce un contre effort suivant l'axe longitudinal du module vis-à-vis de l'effort d'appareillage.

De l'air sous pression est injecté dans la chambre 171 du vérin 17 afin de déplacer la broche interne 170 selon la flèche E. La rampe 165 de la clé de verrouillage 164 agit alors sur les éléments de verrouillage 163 pour les placer dans leur position d'appareillage dans laquelle ils coopèrent avec les trous radiaux 161 de la cloche 160. La broche 51 et le tube d'entrainement sont alors liés en rotation et en translation. Le tube d'entrainement est un organe mobile et l'appareillage de celui-ci avec la broche principale est une liaison en rotation et en translation.

Afin d'insérer la fixation temporaire dans le trou de la structure à travailler :
- le moteur d'avance est mis en œuvre pour translater la broche principale 51 de manière à faire coulisser le tube d'entrainement 313 et par la même le piston 306 à l'intérieur du module,
- le vérin 80 et l'alimentation en gaz comprimé du module support de fixation temporaire via la conduite 906 sont mis à l'échappement jusqu'à ce que la descente de la broche 51 ait permis l'insertion de la fixation temporaire dans son logement de la pièce à travailler ;
- le moteur d'avance continu d'être est mis en œuvre pour translater la broche principale 51 de manière à continuer de faire coulisser le tube d'entrainement 313 et par la même le piston 306 à l'intérieur du module jusqu'à ce que la poussée enregistrée au niveau de la broche principale 51 par le capteur de courant consommé par le moteur d'avance atteigne une valeur seuil prédéterminée correspondant à la mise en butée de la fixation temporaire contre la structure à travailler.
- La broche principale 51 est entrainée en rotation au moyen du moteur de rotation si bien que le tube d'entrainement entraine en rotation la tête de la partie mâle de la fixation temporaire. Compte tenu du fonctionnement antagoniste des roues libres, la partie mâle de la fixation temporaire tourne alors que la partie femelle est maintenue immobile en rotation. De ce fait, la partie mâle se visse entrainant l'expansion de l'extrémité déformable dans le trou et ainsi la solidarisation de la fixation temporaire dans le trou de la structure à travailler.
- Lorsque le couple de serrage déterminé par le capteur de courant du moteur de rotation atteint une valeur de seuil prédéterminée correspondant à l'achèvement du serrage de la fixation temporaire, le moteur de rotation est stoppé.
- Le moteur de rotation est entrainé en rotation dans l'autre sens de sorte à entrainer en rotation sur quelque degré la broche principale 51 afin de désengager les roues-libres du module.
- De l'air est introduit dans la conduite 906 pour déplacer le piston dans sa position de libération et placer l'ergot de verrouillage dans sa position de repos.
- Le moteur d'avance est mis en œuvre pour déplacer la broche 51 vers sa position d'origine.
- La broche principale est arrêtée lorsque le tube d'entrainement se trouve à sa position initiale.
- Le vérin 820 est activé pour replacer le fourreau dans sa position d'origine.
- Le vérin 17 est actionné pour libérer les éléments de verrouillage 163 des trous radiaux 161 de la cloche 160 et ainsi désaccoupler la broche principale 51 du tube d'entrainement 313 du module.
- Le moteur d'avance est de nouveau mis en œuvre pour ramener en butée la broche principale dans sa position initiale de départ.
- Le module de support de fixation temporaire peut alors être de nouveau mené au poste de chargement de fixation temporaire pour recevoir une nouvelle fixation temporaire à mettre en place.

### Variantes

Dans le cas des modules de perçage, l'appareillage entre la broche et l'organe mobile, i.e. l'arbre de sortie ou le tube d'entrainement, est direct. En effet, la broche et l'arbre de sortie ou le tube d'entrainement sont interconnectés directement via les moyens d'appareillage 16 sans transmission intermédiaire. Une transmission intermédiaire pourrait toutefois être interposée entre l'organe mobile et la cloche 160. Une telle transmission intermédiaire pourrait servir ou non de démultiplicateur. Elle pourrait ne pas induire de transformation de mouvement ou au contraire induire une transformation de mouvement (par exemple transformation d'un mouvement de translation de la broche en un mouvement de rotation d'au moins un organe mobile d'un module fonctionnel).

Dans le cas du module de support de rivet, l'appareillage entre l'organe mobile (le pison du module) et la broche se fait de manière indirecte au poste d'enduction via les poulies, courroies et demis-crabots. Elle se fait de manière directe pas simple contact au niveau du poste de travail.

Les exemples de modules fonctionnels décrits ici ne comprennent qu'un organe mobile, i.e. l'arbre de sortie, piston, tube d'entrainement. Il pourrait toutefois comprendre plusieurs organes de sortie.

Au cours de la réalisation d'une opération, les capteurs de l'ensemble de contrôle et de mesure peuvent permettre de relever des paramètres propres au fonctionnement du module appareillé.

Au cours d'une opération de perçage, on peut par exemple mesurer les paramètres suivants :
- poussée axiale sur le foret : déduite par exemple à partir d'un capteur d'effort sur la broche ou dans la transmission ou à partir de l'intensité du courant d'alimentation du moteur d'avance ;
- couple sur le foret : déduite par exemple à partir d'un capteur de couple sur la broche ou dans la transmission ou à partir de l'intensité du courant d'alimentation du moteur de rotation ;
- course du foret : par exemple déduite à partir du capteur d'angle du moteur d'avance.

Au cours d'une opération de vissage, on peut par exemple mesurer les paramètres suivants :
- course de la vis : déduite par exemple à partir du capteur d'angle du moteur de rotation ;
- couple de serrage : par exemple déduite à partir du capteur de couple dans la transmission ou de l'intensité du moteur de rotation.

Au cours d'une opération de pose de rivet on peut par exemple mesurer :
- la poussée axiale sur le rivet : déduite par exemple à partir d'un capteur d'effort sur la broche ou dans la transmission ou à partir de l'intensité du courant d'alimentation du moteur d'avance.
- la course axiale du rivet : déduite par exemple à partir du capteur d'angle du moteur d'avance.

Au cours d'une opération de pose de fixation temporaire, on peut par exemple mesurer les paramètres suivants :
- poussée axiale sur la fixation temporaire : déduite par exemple à partir d'un capteur d'effort sur la broche ou dans la transmission ou à partir de l'intensité du courant d'alimentation du moteur d'avance ;
- couple de serrage : par exemple déduite à partir du capteur de couple dans la transmission ou de l'intensité du moteur de rotation.

On pourra également utiliser la mesure de poussée axiale pour détecter la mise en coopération de l'élément mâle 162 et de la cloche 160 lors de l'appareillage d'un module fonctionnel.

Ceci ne représente bien entendu pas une liste exhaustive des mesures de paramètres possibles.

Tous les capteurs et autres moyens de mesure sont intégrés à l'ensemble de commande et de mesure 5. Les modules fonctionnels ne comprennent donc préférentiellement aucun capteur, ou à tout le moins un nombre très restreint de capteurs, ce qui rend leur structure particulièrement simple, robuste et économique.

Le dispositif comprend également une batterie de connecteurs pneumatiques 18 permettant de relier l'ensemble des actionneurs pneumatiques à des moyens d'alimentation en fluide sous pression et/ou à des moyens pour faire le vide.

Plusieurs opérations peuvent être mises en œuvre simultanément à différents postes, par exemple :
- une opération de perçage ou de pose de rivet ou de pose de fixation temporaire peut être mise en œuvre au poste de travail ;
- une opération de chargement de rivet au poste de chargement de rivet ;
- une opération de chargement de fixation temporaire au pose de chargement de fixation temporaire.

Le dispositif selon l'invention permet de réaliser une pluralité de fonctions, par exemple pose d'élément de fixation, enduction d'élément de fixation, perçage... Il constitue en ce sens un dispositif multitâches. Il comprend ainsi des dispositifs permettant de réaliser chacun des fonctionnalités, notamment dispositif d'enduction, dispositif de pose de fixation temporaire, dispositif de pose d'élément de fixation, dispositif de perçage, dispositif de transfert d'élément de fixation... Chacun de ces dispositifs peut être dissocié pour former un dispositif indépendant assurant sa fonction propre. Toute combinaison de plusieurs (notamment au moins 2) de ces dispositifs peut être réalisée.

## Revendications

1. Dispositif (1) de pose de rivet dans un orifice ménagé dans une structure à travailler, ledit dispositif comprenant au moins :
- un module de support de rivet (200) apte à contenir un rivet (216) ;
- des moyens de déplacement (6) dudit module (200) entre au moins un poste (P3) de chargement de rivet et un poste (P5) de travail pour la pose de rivet ;
- des moyens d'introduction (1006, 1007, 1008) d'un rivet (216) à l'intérieur dudit module (200) audit poste de chargement (P3) ;
- des moyens d'évacuation (51, 170) d'un rivet (216) contenu dans ledit module (200) en dehors de celui-ci audit poste de travail (P5), lesdits moyens d'évacuation (51, 170) étant configurés pour poser ledit rivet (216) dans ledit orifice, **caractérisé en ce que** ledit module (200) comprend un fourreau (90) logeant un piston (205) monté mobile en translation à l'intérieur dudit fourreau (90) entre au moins :
- une position rétractée dans laquelle il s'étend à l'intérieur dudit fourreau (90), et
- une position déployée dans laquelle il s'étend au moins en partie à l'extérieur dudit fourreau (90), ledit module (200) comprenant des moyens de maintien (212) dudit rivet (216) à l'extrémité dudit piston (205),
lesdits moyen d'évacuation comprennent une broche télescopique (51 170), montée mobile en translation suivant l'axe dudit module (200), comprenant une extrémité destinée à venir en contact avec un rivet (216) placé dans ledit module (200), ledit dispositif comprenant des moyens d'entrainement (510, T) en translation de ladite broche (51, 170).

2. Dispositif selon la revendication 1 dans lequel lesdits moyens d'évacuation (51, 170) sont mobiles sur deux courses successives de pré-insertion partielle puis d'insertion finale totale du rivet (216) dans ledit orifice au cours desquelles l'extrémité du rivet (216) puis le corps du rivet (216) sont successivement insérés dans ledit orifice.

3. Dispositif selon la revendication 1 ou 2 dans lequel ladite broche télescopique comprend :
- une broche principale (51) externe montée mobile en translation entre au moins :
- une position rétractée, et
- une position déployée en direction du module (200) placé au poste de travail (P5), et
- une broche secondaire (170) interne montée mobile en translation à l'intérieur de ladite broche (51) externe entre au moins :
- une position rétractée dans laquelle elle se trouve logée à l'intérieur de ladite broche (51) externe, et
- une position déployée dans laquelle elle s'étend au moins en partie à l'extérieur de ladite broche (51) externe.

4. Dispositif selon la revendication 3 dans lequel ladite broche externe (51) comprend une extrémité susceptible d'agir sur ledit piston (205) lorsque ladite broche (51) externe est translatée vers une position déployée, et que ladite broche interne (170) occupe sa position rétractée dans ladite broche externe (51), pour déplacer ledit piston (205) dans sa position déployée de sorte à insérer partiellement ledit rivet (216) solidaire du module (200) situé au poste de travail (P5) dans ledit orifice.

5. Dispositif selon la revendication 3 ou 4 comprenant des moyens de liaison en translation de ladite broche interne (170) avec ladite broche externe (51), lesdits moyens de liaison en translation pouvant prendre au moins :
- une position de déverrouillage dans laquelle ladite broche interne (170) est libre de coulisser à l'intérieur de ladite broche externe (51), et
- une position de verrouillage dans laquelle lesdites broches interne (170) et externe (51) sont liées en translation.

6. Dispositif selon la revendication 5 dans lequel lesdits moyens de liaison en translation comprennent une bague de verrouillage (1067) mobile entre :
- ladite position de verrouillage dans laquelle elle coopère avec un logement de forme complémentaire (1063) ménagé dans ladite broche interne (170), et
- ladite position de déverrouillage dans laquelle elle ne coopère pas avec ledit logement (1063).

7. Dispositif selon la revendication 6 dans lequel ledit logement ménagé dans ladite broche interne (170) est une rainure circonférentielle (1063), et ladite bague de verrouillage (1067) est mobile en translation selon un axe essentiellement orthogonal à celui de ladite broche interne (170).

8. Dispositif selon la revendication 6 ou 7 comprenant des moyens de rappel élastique tendant à ramener lesdits moyens de liaison (1067) dans ladite position de verrouillage, et des moyens de déverrouillage (1064) permettant de placer lesdits moyens de liaison (1067) dans leur position de déverrouillage.

9. Dispositif selon la revendication 8 dans lequel lesdits moyens de déverrouillage comprennent une bague de déverrouillage (1064) munie d'un alésage tronconique (1066) s'élargissant en direction du module (200) placé au poste de travail (P5), ladite bague de déverrouillage (1064) étant liée en rotation avec ladite broche externe (51), ladite bague de verrouillage (1067) se trouvant logée dans ladite bague de déverrouillage (1064) lorsque ladite broche externe (51) se trouve dans sa position rétractée, les parois de l'alésage tronconique (1066) agissant sur ladite bague de verrouillage (1067) pour la placer dans sa position de déverrouillage.

10. Dispositif selon la revendication 9 comprenant des moyens de commande configurés pour successivement :
- déplacer ladite broche externe (51) et ladite broche interne (170) dans leur position rétractée ;
- déplacer ladite broche principale (51) dans sa position déployée pour déplacer ledit piston (205) d'un module (200) placé au poste de travail (P5) dans sa position déployée afin d'insérer partiellement un rivet (216) solidaire dudit module (205) dans l'orifice de la structure à travailler ;
- déplacer ladite broche principale (51) dans sa position rétractée pour placer la bague de verrouillage (1067) dans sa position de déverrouillage ;
- déplacer ladite broche secondaire (170) dans sa position déployée dans laquelle son extrémité est en appui contre la tête du rivet (216) partiellement inséré dans ledit orifice ;
- déplacer ladite broche principale (51) vers sa position déployée pour déclencher le passage de ladite bague de verrouillage (1067) dans sa position de verrouillage et lier ainsi en translation lesdites broches interne (170) et externe (51) ;
- poursuivre le déplacement de ladite broche externe (51) vers sa position déployée pour évacuer ledit rivet (216) dudit module (200) et finaliser son insertion dans ledit orifice.

11. Dispositif selon l'une quelconque des revendications 3 à 10 comprenant des moyens d'entrainement en translation de ladite broche externe (51) entre ses positions déployée et rétractée et des moyens de déplacement en translation de ladite broche interne (170) à l'intérieur de ladite broche externe (51) entre ses positions rétractée et déployée.

12. Dispositif selon la revendication 11 dans lequel lesdits moyens d'entrainement en translation de ladite broche externe (51) comprennent une bague taraudée (512) coopérant avec une portion filetée (511) de ladite broche principale (51) et un moteur d'avance (510) susceptible d'entrainer en rotation ladite bague taraudée (512) pour induire une translation de ladite broche principale (51).

13. Dispositif selon la revendication 11 ou 12 dans lequel lesdits moyens de déplacement en translation de ladite broche interne (170) comprennent un vérin pneumatique (17).

14. Dispositif pour la réalisation d'au moins une tâche sur une structure à travailler, ledit dispositif comprenant :
- des moyens de solidarisation (3) dudit dispositif à des moyens de manutention motorisés aptes à déplacer au moins en partie ledit dispositif dans l'espace par rapport à une structure à travailler ;
- des moyens de solidarisation (4) dudit dispositif à ladite structure à travailler ;
ledit dispositif comprenant au moins un dispositif de pose de rivet selon l'une quelconque des revendications 1 à 13.

15. Procédé de pose d'un rivet au moyen d'un dispositif selon l'une quelconque des revendications 2 à 14, ledit procédé comprenant une étape de pré-insertion partielle puis une étape d'insertion finale totale du rivet (216) dans ledit orifice au cours desquelles l'extrémité du rivet (216) puis le corps du rivet (216) sont successivement insérés dans ledit orifice.

16. Procédé de pose d'un rivet selon la revendication 15 au moyen d'un dispositif selon la revendication 10 comprenant les étapes successives suivantes :
- étape de déplacement de ladite broche principale (51) et de ladite broche secondaire (170 dans leur position rétractée ;
- étape de déplacement de ladite broche principale (51) dans sa position déployée pour déplacer ledit piston (205) d'un module (200) placé au poste de travail (P5) dans sa position déployée afin d'insérer partiellement un rivet (216) solidaire dudit module (200) dans l'orifice de la structure à travailler ;
- étape de déplacement de ladite broche principale (51) dans sa position rétractée pour placer la bague de verrouillage (1067) dans sa position de déverrouillage;
- étape de déplacement de ladite broche secondaire (170) dans sa position déployée dans laquelle son extrémité est en appui contre la tête du rivet (216) partiellement inséré dans ledit orifice ;
- étape de déplacement de ladite broche principale (51) vers sa position déployée pour déclencher le passage de ladite bague de verrouillage dans sa position de verrouillage et lier ainsi en translation lesdites broches interne (170) et externe (51) ;
- étape de poursuite du déplacement de ladite broche externe (51) vers sa position déployée pour évacuer ledit rivet (216) dudit module (200) et finaliser son insertion dans ledit orifice.

## Patentansprüche

1. Vorrichtung (1) zum Setzen von Nieten in eine in einer zu bearbeitenden Struktur ausgebildete Öffnung, wobei die Vorrichtung zumindest Folgendes umfasst:
- ein Niettragemodul (200), das dazu geeignet ist, einen Niet (216) zu enthalten;
- Mittel (6) zum Bewegen des Moduls (200) zumindest zwischen einer Nietladestation (P3) und einer Arbeitsstation (P5) zum Setzen von Nieten;
- Mittel (1006, 1007, 1008) zum Einführen eines Niets (216) in das Innere des Moduls (200) an der Nietladestation (P3);
- Mittel (51, 170) zum Entnehmen eines in dem Modul (200) enthaltenen Niets (216) aus selbigem an der Arbeitsstation (P5), wobei die Mittel (51, 170) zum Entnehmen dazu ausgelegt sind, den Niet (216) in die Öffnung einzusetzen,
**dadurch gekennzeichnet, dass** das Modul (200) eine Hülse (90) umfasst, die einen Kolben (205) aufnimmt, der im Inneren der Hülse (90) translatorisch beweglich montiert ist zwischen zumindest:
- einer eingefahrenen Stellung, in der er sich im Inneren der Hülse (90) erstreckt, und
- einer ausgefahrenen Stellung, in der er sich zumindest teilweise außerhalb der Hülse (90) erstreckt, wobei das Modul (200) Mittel (212) zum Halten (216) des Niets am Ende des Kolbens (205) umfasst,
wobei die Mittel zum Entnehmen eine teleskopische Spindel (51, 170) umfassen, die entlang der Achse des Moduls (200) translatorisch beweglich montiert ist und ein Ende umfasst, das dazu bestimmt ist, mit einem im Modul (200) angeordneten Niet (216) in Kontakt zu kommen, wobei die Vorrichtung Mittel (510, T) zum translatorischen Antrieb der Spindel (51, 170) umfasst.

2. Vorrichtung nach Anspruch 1, wobei die Mittel zum Entnehmen (51, 170) über zwei aufeinanderfolgende Hübe des partiellen Voreinsetzen und dann des vollständigen Endeinsetzens des Niets (216) in die Öffnung beweglich sind, während derer das Ende des Niets (216) und dann der Körper des Niets (216) nacheinander in die Öffnung eingesetzt werden.

3. Vorrichtung nach Anspruch 1 oder 2, wobei die teleskopische Spindel Folgendes umfasst:
- eine äußere Hauptspindel (51), die translatorisch beweglich montiert ist zwischen zumindest:
- einer eingefahrenen Stellung und
- einer ausgefahrenen Stellung in Richtung des an der Arbeitsstation (P5) angeordneten Moduls (200) und
- eine innere Sekundärspindel (170), die im Inneren der äußeren Spindel (51) translatorisch beweglich montiert ist zwischen zumindest:
- einer eingefahrenen Stellung, in der sie im Inneren der äußeren Spindel (51) untergebracht ist, und
- einer ausgefahrenen Stellung, in der sie sich zumindest teilweise außerhalb der äußeren Spindel (51) erstreckt.

4. Vorrichtung nach Anspruch 3, wobei die äußere Spindel (51) ein Ende umfasst, das auf den Kolben (205) wirken kann, wenn die äußere Spindel (51) in eine ausgefahrene Stellung verschoben wird und die innere Spindel (170) ihre in die äußere Spindel (51) eingefahrene Stellung einnimmt, um den Kolben (205) in seine ausgefahrene Stellung zu bewegen, sodass der Niet (216), der mit dem an der Arbeitsstation (P5) befindlichen Modul (200) fest verbunden ist, teilweise in die Öffnung eingesetzt wird.

5. Vorrichtung nach Anspruch 3 oder 4, umfassend Mittel zur translatorischen Verbindung der inneren Spindel (170) mit der äußeren Spindel (51), wobei die Mittel zur translatorischen Verbindung zumindest folgende Stellungen einnehmen können:
- eine Entriegelungsstellung, in der die innere Spindel (170) im Inneren der äußeren Spindel (51) frei gleiten kann, und
- eine Verriegelungsstellung, in der die innere Spindel (170) und die äußere Spindel (51) translatorisch miteinander verbunden sind.

6. Vorrichtung nach Anspruch 5, wobei die Mittel zur translatorischen Verbindung einen Verriegelungsring (1067) umfassen, der beweglich ist zwischen:
- der Verriegelungsstellung, in der er mit einer komplementär geformten Aufnahme (1063) zusammenwirkt, die in der inneren Spindel (170) ausgebildet ist, und
- der Entriegelungsstellung, in der er nicht mit der Aufnahme (1063) zusammenwirkt.

7. Vorrichtung nach Anspruch 6, wobei es sich bei der in der inneren Spindel (170) ausgebildeten Aufnahme um eine Umfangsnut (1063) handelt und der Verriegelungsring (1067) entlang einer Achse, die im Wesentlichen senkrecht zu der der inneren Spindel (170) verläuft, translatorisch beweglich ist.

8. Vorrichtung nach Anspruch 6 oder 7, umfassend elastische Rückstellmittel, die dazu neigen, die Mittel zur Verbindung (1067) in die Verriegelungsstellung zurückzubringen, und Entriegelungsmittel (1064), die es ermöglichen, die Mittel zur Verbindung (1067) in ihre Entriegelungsstellung zu bringen.

9. Vorrichtung nach Anspruch 8, wobei die Entriegelungsmittel einen Entriegelungsring (1064) umfassen, der mit einer kegelstumpfförmigen Bohrung (1066) versehen ist, die sich in Richtung des an der Arbeitsstation (P5) angeordneten Moduls (200) erweitert, wobei der Entriegelungsring (1064) drehbar mit der äußeren Spindel (51) verbunden ist, wobei der Verriegelungsring (1067) im Entriegelungsring (1064) untergebracht ist, wenn sich die äußere Spindel (51) in ihrer eingefahrenen Stellung befindet, wobei die Wände der kegelstumpfförmigen Bohrung (1066) auf den Verriegelungsring (1067) wirken, um ihn in seine Entriegelungsstellung zu bringen.

10. Vorrichtung nach Anspruch 9, umfassend Steuermittel, die dazu ausgelegt sind, nacheinander:
- die äußere Spindel (51) und die innere Spindel (170) in ihre eingefahrene Stellung zu bewegen;
- die Hauptspindel (51) in ihre ausgefahrene Stellung zu bewegen, um den Kolben (205) eines an der Arbeitsstation (P5) angeordneten Moduls (200) in seine ausgefahrene Stellung zu bewegen, um einen mit dem Modul (205) fest verbundenen Niet (216) teilweise in die Öffnung der zu bearbeitende Struktur einzusetzen;
- die Hauptspindel (51) in ihre eingefahrene Stellung zu bewegen, um den Verriegelungsring (1067) in seine Entriegelungsstellung zu bringen;
- die Sekundärspindel (170) in ihre ausgefahrene Stellung zu bewegen, in der ihr Ende am Kopf des teilweise in die Öffnung eingesetzten Niets (216) anliegt;
- die Hauptspindel (51) in ihre ausgefahrene Stellung zu bewegen, um den Übergang der Verriegelungsring (1067) in seine Verriegelungsstellung auszulösen und so die innere (170) und die äußere Spindel (51) translatorisch miteinander zu verbinden;
- die Bewegung der äußeren Spindel (51) in ihre ausgefahrene Stellung fortzusetzen, um den Niet (216) aus dem Modul (200) zu entnehmen und sein Einsetzen in die Öffnung abzuschließen.

11. Vorrichtung nach einem der Ansprüche 3 bis 10, umfassend Mittel zum translatorischen Antrieb der äußeren Spindel (51) zwischen ihrer ausgefahrenen und ihrer eingefahrenen Stellung und Mittel zum translatorischen Bewegen der inneren Spindel (170) im Inneren der äußeren Spindel (51) zwischen ihrer eingefahrenen und ihrer ausgefahrenen Stellung.

12. Vorrichtung nach Anspruch 11, wobei die Mittel zum translatorischen Antrieb der äußeren Spindel (51) Folgendes umfassen: einen mit einem Gewinde versehenen Ring (512), der mit einem Gewindeabschnitt (511) der Hauptspindel (51) zusammenwirkt, und einen Vorschubmotor (510), der dazu in der Lage ist, den mit einem Gewinde versehenen Ring (512) in Drehung zu versetzen, um eine Translation der Hauptspindel (51) zu veranlassen.

13. Vorrichtung nach Anspruch 11 oder 12, wobei die Mittel zum translatorischen Bewegen der inneren Spindel (170) einen Pneumatikzylinder (17) umfassen.

14. Vorrichtung zur Durchführung mindestens einer Aufgabe an einer zu bearbeitenden Struktur, wobei die Vorrichtung Folgendes umfasst:
- Mittel (3) zur festen Verbindung der Vorrichtung mit motorisierten Handhabungsmitteln, die dazu geeignet sind, die Vorrichtung zumindest teilweise im Raum in Bezug auf eine zu bearbeitende Struktur zu bewegen;
- Mittel (4) zur festen Verbindung der Vorrichtung mit der zu bearbeitenden Struktur;
wobei die Vorrichtung mindestens eine Vorrichtung zum Setzen von Nieten nach einem der Ansprüche 1 bis 13 umfasst.

15. Verfahren zum Setzen eines Niets anhand einer Vorrichtung nach einem der Ansprüche 2 bis 14, wobei das Verfahren einen Schritt des partiellen Voreinsetzens und dann einen Schritt des vollständigen Endeinsetzens des Niets (216) die Öffnung umfasst, bei denen das Ende des Niets (216) und dann der Körper des Niets (216) nacheinander in die Öffnung eingesetzt werden.

16. Verfahren zum Setzen eines Niets nach Anspruch 15 anhand einer Vorrichtung nach Anspruch 10, umfassend die folgenden aufeinanderfolgenden Schritte:
- einen Schritt des Bewegens der Hauptspindel (51) und der Sekundärspindel (170 in ihre eingefahrene Stellung;
- einen Schritt des Bewegens der Hauptspindel (51) in ihre ausgefahrene Stellung, um den Kolben (205) eines an der Arbeitsstation (P5) angeordneten Moduls (200) in seine ausgefahrene Stellung zu bewegen, um einen mit dem Modul (200) fest verbundenen Niet (216) teilweise in die Öffnung der zu bearbeitenden Struktur einzusetzen;
- einen Schritt des Bewegens der Hauptspindel (51) in ihre eingefahrene Stellung, um den Verriegelungsring (1067) in seine Entriegelungsstellung zu bringen;
- einen Schritt des Bewegens der Sekundärspindel (170) in ihre ausgefahrene Stellung, in der ihr Ende am Kopf des teilweise in die Öffnung eingesetzten Niets (216) anliegt;
- einen Schritt des Bewegens der Hauptspindel (51) in ihre ausgefahrene Stellung, um den Übergang der Verriegelungsring in seine Verriegelungsstellung auszulösen und so die innere (170) und die äußere Spindel (51) translatorisch miteinander zu verbinden;
- einen Schritt des Fortsetzens der Bewegung der äußeren Spindel (51) in ihre ausgefahrene Stellung, um den Niet (216) aus dem Modul (200) zu entnehmen und sein Einsetzen in die Öffnung abzuschließen.

## Claims

1. Device (1) for fitting a rivet in an orifice provided in a structure to be worked, said device comprising at least:
- a rivet support module (200) that is able to contain a rivet (216);
- means (6) for moving said module (200) between at least a rivet loading station (P3) and a workstation (P5) for fitting the rivet;
- means (1006, 1007, 1008) for introducing a rivet (216) into said module (200) at said loading station (P3);
- means (51, 170) for discharging a rivet (216) contained in said module (200) out of the latter at said workstation (P5), said means for discharging (51, 170) being configured to fit said rivet (216) in said orifice, **characterized in that** said module (200) comprises a sheath (90) housing a piston (205) mounted so as to be able to move in translation inside said sheath (90) between at least:
- a retracted position in which it extends inside said sheath (90), and
- a deployed position in which it extends at least partly outside said sheath (90), said module (200) comprising means (212) for holding said rivet (216) at the end of said piston (205),
said means for discharging comprise a telescopic spindle (51, 170), mounted so as to be able to move in translation along the axis of said module (200), comprising an end intended to come into contact with a rivet (216) placed in said module (200), said device comprising means (510, T) for driving said spindle (51, 170) in translation.

2. Device according to Claim 1, wherein said means for discharging (51, 170) are able to move over two successive travels of partial pre-insertion and then of total final insertion of the rivet (216) into said orifice during which the end of the rivet (216) and then the body of the rivet (216) are successively inserted into said orifice.

3. Device according to Claim 1 or 2, wherein said telescopic spindle comprises:
- an external main spindle (51) mounted so as to be able to move in translation between at least:
- a retracted position, and
- a deployed position in the direction of the module (200) placed at the workstation (P5), and
- an internal secondary spindle (170) mounted so as to be able to move in translation inside said external spindle (51) between at least:
- a retracted position in which it is housed inside said external spindle (51), and
- a deployed position in which it extends at least partly outside said external spindle (51).

4. Device according to Claim 3, wherein said external spindle (51) comprises an end that is capable of acting on said piston (205) when said external spindle (51) is moved in translation towards a deployed position, and said internal spindle (170) occupies its retracted position in said external spindle (51), so as to move said piston (205) into its deployed position so as to partially insert said rivet (216) solidarized to the module (200) situated at the workstation (P5) into said orifice.

5. Device according to Claim 3 or 4, comprising means for connecting said internal spindle (170) in translation with said external spindle (51), said means for connectign in translation being able to adopt at least:
- an unlocking position in which said internal spindle (170) is free to slide inside said external spindle (51), and
- a locking position in which said internal spindle (170) and external spindle (51) are connected in translation.

6. Device according to Claim 5, wherein said means for connecting in translation comprise a locking ring (1067) that is able to move between:
- said locking position in which it cooperates with a housing of complementary shape (1063) provided in said internal spindle (170), and
- said unlocking position in which it does not cooperate with said housing (1063).

7. Device according to Claim 6, wherein said housing provided in said internal spindle (170) is a circumferential groove (1063), and said locking ring (1067) is able to move in translation along an axis essentially orthogonal to that of said internal spindle (170).

8. Device according to Claim 6 or 7, comprising elastic return means that tend to bring said means for connecting (1067) into said locking position, and unlocking means (1064) that make it possible to place said means for connecting (1067) in their unlocking position.

9. Device according to Claim 8, wherein said unlocking means comprise an unlocking ring (1064) provided with a truncated cone bore (1066) widening in the direction of the module (200) placed at the workstation (P5), said unlocking ring (1064) being connected in rotation with said external spindle (51), said locking ring (1067) being housed in said unlocking ring (1064) when said external spindle (51) is in its retracted position, the walls of the truncated cone bore (1066) acting on said locking ring (1067) so as to place it in its unlocking position.

10. Device according to Claim 9, comprising control means configured to successively:
- move said external spindle (51) and said internal spindle (170) into their retracted position;
- move said main spindle (51) into its deployed position so as to move said piston (205) of a module (200) placed at the workstation (P5) into its deployed position in order to partially insert a rivet (216) solidarized to with said module (205) into the orifice of the structure to be worked;
- move said main spindle (51) into its retracted position so as to place the locking ring (1067) in its unlocking position;
- move said secondary spindle (170) into its deployed position in which its end bears against the head of the rivet (216) partially inserted into said orifice;
- move said main spindle (51) towards its deployed position so as to trigger the passage of said locking ring (1067) into its locking position and thus connect said internal spindle (170) and external spindle (51) in translation;
- continue the movement of said external spindle (51) towards its deployed position so as to discharge said rivet (216) from said module (200) and finalize its insertion into said orifice.

11. Device according to any one of Claims 3 to 10, comprising means for driving said external spindle (51) in translation between its deployed and retracted positions and means for moving said internal spindle (170) in translation inside said external spindle (51) between its retracted and deployed positions.

12. Device according to Claim 11, wherein said means for driving said external spindle (51) in translation comprise a tapped ring (512) cooperating with a threaded portion (511) of said main spindle (51) and a feed motor (510) that is capable of driving said tapped ring (512) in rotation so as to induce a translation of said main spindle (51).

13. Device according to Claim 11 or 12, wherein said means for moving said internal spindle (170) in translation comprise a pneumatic cylinder (17).

14. Device for performing at least one task on a structure to be worked, said device comprising:
- means (3) for securing said device to motorized handling means that are able to at least partly move said device in space with respect to a structure to be worked;
- means (4) for securing said device to said structure to be worked;
said device comprising at least one device for fitting a rivet according to any one of Claims 1 to 13**.**

15. Method for fitting a rivet by means of a device according to any one of Claims 2 to 14, said method comprising a step of partial pre-insertion and then a step of total final insertion of the rivet (216) into said orifice during which the end of the rivet (216) and then the body of the rivet (216) are successively inserted into said orifice.

16. Method for fitting a rivet according to Claim 15 by means of a device according to Claim 10, comprising the following successive steps:
- step of moving said main spindle (51) and said secondary spindle (170) into their retracted position;
- step of moving said main spindle (51) into its deployed position so as to move said piston (205) of a module (200) placed at the workstation (P5) into its deployed position in order to partially insert a rivet (216) solidarized tosaid module (200) into the orifice of the structure to be worked;
- step of moving said main spindle (51) into its retracted position so as to place the locking ring (1067) in its unlocking position;
- step of moving said secondary spindle (170) into its deployed position in which its end bears against the head of the rivet (216) partially inserted into said orifice;
- step of moving said main spindle (51) towards its deployed position so as to trigger the passage of said locking ring into its locking position and thus connect said internal spindle (170) and external spindle (51) in translation;
- step of continuing the movement of said external spindle (51) towards its deployed position so as to discharge said rivet (216) from said module (200) and finalize its insertion into said orifice.
